(19) Europäisches Patentamt
European Patent Office
Office européen des brevets

(11) Veröffentlichungsnummer : **0 203 154**
**B1**

(12) # EUROPÄISCHE PATENTSCHRIFT

(45) Veröffentlichungstag der Patentschrift : **07.03.90**

(51) Int. Cl.$^5$ : **G 03 B 23/02**

(21) Anmeldenummer : **85906051.9**

(22) Anmeldetag : **12.11.85**

(86) Internationale Anmeldenummer : **PCT/EP 85/00605**

(87) Internationale Veröffentlichungsnummer : **WO/8603019 (22.05.86 Gazette 86/11)**

(54) **VORRICHTUNG ZUM ZYKLISCHEN UMSCHICHTEN EINES STAPELS RECHTECKIGER ODER QUADRATISCHER BLÄTTER.**

(30) Priorität : **13.11.84 DE 3441448**

(43) Veröffentlichungstag der Anmeldung : **03.12.86 Patentblatt 86/49**

(45) Bekanntmachung des Hinweises auf die Patenterteilung : **07.03.90 Patentblatt 90/10**

(84) Benannte Vertragsstaaten : **AT BE CH DE FR GB IT LI NL SE**

(56) Entgegenhaltungen :
**EP–A– 0 113 057**
**DE–A– 2 912 941**
**DE–A– 3 014 394**

(73) Patentinhaber : **Licinvest AG**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Röhl, Wolf Horst, Dipl.-Phys., Dr. et al**
**Dipl.-Ing. K. Sparing Dipl.-Phys. Dr. W.H. Röhl Rethelstrasse 123**
**D-4000 Düsseldorf 1 (DE)**

**EP 0 203 154 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine Vorrichtung zum zyklischen Umschichten eines Stapels rechteckiger oder quadratischer Blätter oder einen sogenannten « Bildwechsler », definiert im Oberbegriff der Patentansprüche 1 bis 6 bzw. 7 oder 8.

Bildwechsler sind aus den US-Patentschriften 4 238 898, 4 238 899, 4 241 528, 4 241 529, 4 245 417, 4 259 802 und 4 376 348 und DE-A-2 912 941 bekannt. Allen liegt das Prinzip zugrunde, daß ein Stapel von Bildern, wobei insbesondere an Fotoabzüge zu denken ist, von zwei relativ zueinander verschieblichen Rahmenteilen aufgenommen ist, von denen eines ein Betrachtungsfenster aufweisen kann. Jeweils bei einem vollständigen Bewegungszyklus der Rahmenteile — das heißt vollständig auseinanderziehen und wieder vollständig zusammenschieben — wird ein Bild an einem Stapelende abgenommen und am andern Stapelende wieder zugefügt. Hierfür weisen die Bildwechsler die folgenden Komponenten auf:

Eine Trenneinrichtung löst ein Einzelbild vom Stapel; eine Zufuhreinrichtung führt der Trenneinrichtung Bilder zu; eine erste Halteeinrichtung hält das vom Stapel abgetrennte Einzelbild in einem der Rahmenteile, während der Reststapel von einer zweiten im andern Rahmenteil gehalten wird; eine Leiteinrichtung führt das abgetrennte Einzelbild so, daß es auf die andere Seite des Reststapels gelangt.

Die bekannten Bildwechsler sind zwar hauptsächlich für Fotoabzüge vorgesehen, doch ist ihre einwandfreie Funktion unter bestimmten Umständen nicht gewährleistet. Die der Trenneinrichtung zugewandte Kante eines vom Stapel abgenommenen Bildes soll beim Zusammenschieben der Rahmenteile in einen Rückführ-Durchlaß von hinten eingeschoben werden. Die Trenneinrichtung in Form eines Separatorsteges kehrt dabei dieser Kante eine Schrägfläche zu, an der die fragliche Bildkante aufgleiten soll, während ihre gegenüberliegende Kante vor einem Anschlag des anderen Rahmenteils liegt. Wenn nun, was häufig vorkommt, die Fotoabzüge stark gekrümmt sind, so daß zum Beispiel die dem Separatorsteg zugekehrte Kante etwa senkrecht auf dessen Schrägfläche steht, kann gegebenenfalls das Bild beim Zusammenschieben der Rahmenteile gestaucht werden, anstatt daß es dem Reststapel wieder zugeführt wird.

Es sind bereits Blattwechsler bekannt, bei denen Hilfsmittel vorgesehen sind, um das abgetrennte Einzelblatt dem Rückführdurchlaß zu präsentieren. So offenbart DE-A-2 912 941 in Fig. 45 einen Blattwechsler, bei dem Paare von Federn das abgetrennte, im ersten Rahmenteil befindliche Blatt abstützen. Es sind jedoch dieselben Blattfedern, die auch den Stapel bei zusammengeschobenen Rahmenteilen gegen ein Sichtfenster drücken sollen und daher ziemlich hart sind; bei jedem Halbzyklus der Rahmenteilbewegung werden sie von der zweiten Halteeinrichtung überlaufen. Damit dies überhaupt funktioniert, muß die Strecke, auf der das Niederdrücken der Federn erfolgt, sehr lang sein, und entsprechend weit entfernt von dem Rückführdurchlaß wird das Einzelblatt abgestützt. Für Fotoabzüge, die um ihre Querachse gewölbt sind, ist diese Konstruktion nicht hinreichend verläßlich.

Aufgabe der Erfindung ist es, den Blattwechsler so auszubilden, daß er auch bei Blättern sicher funktioniert, die um ihre Querachse gewölbt sind, also insbesondere bei Fotoabzügen.

Die erfindungsgemäße Konzeption besteht darin, daß das abgezogene Blatt jedenfalls dicht am Rückführdurchlaß, möglichst aber auf seiner gesamten Erstreckung abgestützt wird, so daß ihm beim Zusammenschieben der Rahmenteile letztlich nur der Rückführdurchlaß als « Weg des geringsten Widerstandes » verbleibt.

Die unabhängigen Ansprüche 1 bis 8 definieren unterschiedliche Realisierungen dieses Konzepts, während die abhängigen Ansprüche bevorzugte Weiterbildungen bzw. Kombinationen dieser Realisierungen definieren.

Ausführungsbeispiele des Gegenstandes der Erfindung werden nachstehend erläutert.

Dabei werden zunächst zwei Bildwechsler vollständig beschrieben, die in den Fig. 1 bis 33 dargestellt sind. Danach werden Einzelheiten und Gestaltungen der Leiteinrichtung erläutert. Alternative Systeme für die Blattzufuhr, für die Trennung eines Blattes vom Stapel und für das Halten des abgetrennten Blattes werden danach erläutert, und schließlich wird noch dargestellt, wie ein Stapel vollständig aus der Vorrichtung entnommen werden kann.

Die Fig. 1 bis 10 stellen ein erstes vollständiges Ausführungsbeispiel dar, und zwar sind

Fig. 1 eine teilweise geschnittene Draufsicht auf die Vorrichtung, zum Teil auseinandergezogen,

Fig. 2 ein Schnitt nach Linie 2-2 der Fig. 1,

Fig. 3 ein Schnitt nach Linie 3-3 der Fig. 1,

Fig. 4 ein Schnitt nach Linie 4-4 der Fig. 1,

Fig. 5 ein analoger Schnitt nur durch ein Rahmenteil,

Fig. 6 ein Schnitt nach Linie 6-6 der Fig. 1,

Fig. 7 ein Teilschnitt durch den Separatorsteg,

Fig. 8 eine Teilfrontansicht des Separatorsteges,

Fig. 9 eine vergrößerte Teilansicht einer Baugruppe aus Fig. 1,

Fig. 10 eine Draufsicht auf die Baugruppe nach Fig. 9.

Die Fig. 11 und 12 stellen analog zu Fig. 9, jedoch in zwei Funktionsstellungen eine alternativ ausgestaltete Baugruppe dar.

Fig. 13 bis 33 betreffen ein zweites Ausführungsbeispiel, und es zeigen

Fig. 13 eine Draufsicht ähnlich Fig. 1, wobei jedoch in der linken Hälfte der Figur die Rahmenteile zusammengeschoben sind, in der rechten dagegen auseinandergezogen sind,

Fig. 14 einen Längsschnitt nach Linie 14-14 der Fig. 13,

Fig. 15 einen Querschnitt nach Linie 15-15 der Fig. 13,

Fig. 16 in Draufsicht,

Fig. 17 und 18 im Schnitt ein Detail der Rahmenteile,

Fig. 19 im Längsschnitt,

Fig. 20 in Draufsicht ein weiteres Detail,

Fig. 21 bzw. 22 analog zu Fig. 19 bzw. 20 eine alternative Ausbildung derselben Funktionsbaugruppe,

Fig. 23 bis 25 im vereinfachten Längsschnitt den Ablauf einer Sonderfunktion,

Fig. 26 in Perspektive,

Fig. 27 in Teildraufsicht ein weiteres Detail der Vorrichtung,

Fig. 28 und 29 weitgehend schematisiert ein weiteres Detail,

Fig. 30 in Teilperspektive,

Fig. 31 in Seitenansicht ein weiteres Detail,

Fig. 32 in Seitenansicht,

Fig. 33 in Draufsicht eine in das Gehäuse-Rahmenteil eingesetzte Baugruppe.

Die Fig. 34 bis 50 zeigen Details, alternative Gestaltungen und sonstige bevorzugte Besonderheiten von Leiteinrichtungen gemäß der Erfindung. Dabei ergibt sich die Art der Darstellung — Längs- oder Querschnitt, Ansicht oder Teilansicht — für den Fachmann unter Berücksichtigung der beiden vollständig beschriebenen Ausführungsbeispiele entweder von selbst, oder die Art der Darstellung ist bei der Beschreibung der jeweiligen Figur vermerkt.

Dies gilt auch für die Fig. 51 bis 91, die alternative Zufuhreinrichtungen betreffen, die Fig. 92 bis 197, die alternative Trenneinrichtungen illustrieren, die Fig. 108 bis 131, welche alternative Halteeinrichtungen darstellen, die Fig. 132 bis 136, die den sogenannten Längenausgleich zeigen, und schließlich die Fig. 137 bis 143, welche Möglichkeiten für die Entnahme des Gesamtstapels aus dem Blattwechsler illustrieren.

Die Figuren 1 bis 10 beziehen sich auf ein erstes Ausführungsbeispiel, das nachstehend im Zusammenwirken aller Bauelemente detailliert beschrieben wird.

Fig. 1 zeigt in teilweise geschnittener Draufsicht eine Vorrichtung gemäß der Erfindung. Das erste Rahmenteil ist als Gehäuse 12 ausgebildet, das zweite Rahmenteil ist ein Schieber 14, der aus dem Gehäuse um einen durch Anschläge 16 am Schieber und Gegenanschläge 18 am Gehäuse begrenzten Hub herausziehbar und wieder einschiebbar ist. Die Trenneinrichtung wird von einem Separatorsteg 20 gebildet. Die Zufuhreinrichtung wird von Haken 22 verkörpert, die an Blattfederarmen 24 sitzen. Die Halteeinrichtung zum Halten des Reststapels im Schieber wird ebenfalls von dem Separatorsteg gebildet, während das abgetrennte Einzelbild im Gehäuse durch das Zusammenwirken von im Gehäuse stationär angeordneten, mit einem Haftbelag 26 versehenen Schienen mit das Einzelbild gegen sie klemmenden, durch den Kontakt mit diesen zum Umlauf angetriebenen Rollen 28 gebildet wird. Schließlich wird die Leiteinrichtung durch Paare von Blattfedern 30 sowie mit den Federarmen 24 einstückig ausgebildete Federarme 32 verkörpert.

Die Federarme 24 und 32 drücken im eingeschobenen Zustand des Schiebers den Blattstapel (in Fig. 1 nicht gezeigt) gegen ein Sichtfenster, dessen innere Kontur mit 34 bezeichnet ist. Das dann im Stapel oberste Blatt, im Bestimmungsfalle ein Fotoabzug, soll dann möglichst plan liegen; zu diesem Zweck ist es an seinem Umfang in einer Ebene abgestützt, die definiert ist durch seitliche Rippen 36, die Unterseite eines Griffstück-Schiebeteils 38 und, auf der ihm gegenüberliegenden Seite, durch an das Gehäuse angeformte Rippen 40.

Fig. 1 zeigt die teilausgezogene Position des Schiebers 14. Im eingeschobenen Zustand liegt der Separatorsteg jenseits dieser Rippen 40; da er aber weiter zum Fenster 34 vorsteht, das dem Niveau dieser Rippen entspricht, weist er für den Vorbeigang derselben Einschnitte 42 auf.

Die Abstützung der Kanten des Stapels erfolgt seitlich (d. h. parallel zur Auszugsrichtung) durch Holme 44 des Schiebers. Frontseitig, das heißt auf der Seite des Schiebers, die beim Auszug am weitesten vom Gehäuse entfernt ist, wird die Abstützung der Kanten durch die Anschlagfläche 46 eines mittig angeordneten Griffstücks 48 sowie durch seitliche Anschlagflächen 50 am Schieber bewirkt. Am gegenüberliegenden Ende stützen sich die Kanten der Fotos an an dem Gehäuse angeformten Anschlägen 52 ab, für die der Separatorsteg ebenfalls Durchlaß-Ausnehmungen 54 aufweist, die jedoch wesentlich tiefer sind als die für die Rippen 40.

Die Rippe 36 reicht weiter in das Innere des Schiebers hinein, als dem Niveau entspricht, das von der Oberkante 55 der Schieberholme definiert ist, so daß die Fotos nicht seitlich nach außen über die Schieberholme gleiten können. Die entsprechende Wirkung tritt zwischen Separatorsteg einerseits, Rippen 40 andererseits ein.

Das Griffstück 48 hat eine auf der Fensterseite des Gehäuses liegende Oberplatte 56 und eine Unterplatte 57, die breiter ist als die Oberplatte; die das Fenster rahmenartig umgebende Deckwand 58 des Gehäuses weist im Bereich der Oberplatte einen Ausschnitt 59 auf, während die gegenüberliegende Gehäusewandung für die Unterplatte 57 komplementär bei 60 eingetieft ist. Demgemäß hat die Vorrichtung im geschlossenen Zustand eine in sich geschlossene, im wesentlichen rechteckige Kontur ohne vorstehende Teile.

Das Gehäuse und der Schieber sind Kunststoff-Spritzteile. Der Schieber ist ein einteiliges Element, bestehend aus Holmen, Separatorsteg, Griffstück und einer das Griffstück mit den Holmen — die L-förmigen Querschnitt besitzen — verbindenden Stirnwand 61.

Das Gehäuse ist aus drei Teilen zusammengesetzt: Der Unterschale 62 mit Gehäuseboden 63, der rahmenartigen Oberschale 64 mit Fensterausschnitt, und dem in dieses eingesetzten Fenster 65. Das Gehäuse ist in Richtung der Schieberbewegung dadurch versteift, daß die Streben zwischen Deck-und Bodenwandung als Doppelträger ausgeführt sind, wie in Fig. 6 erkennbar. Die Gehäuseteile können miteinander verschweißt sein, oder man kann eine Schnappverbindung vorsehen.

Das Fenster weist rings um seine Hauptfläche einen schmalen, nach außen etwas vorstehenden Rand 66 auf, so daß es gegenüber dem ihn umgebenden Rahmen etwas vorsteht. Eine zur Kontur dieses Randes komplementäre Eintiefung ist auf der Außenseite der gegenüberliegenden Bodenwandung mit 67 bezeichnet und erlaubt das Übereinanderstapeln mehrerer Gehäuse.

Beim Herausziehen des Schiebers aus dem Gehäuse wird dieser mit einer Hand an Ober- und Unterplatte des Griffstücks erfaßt, während die andere Hand das Gehäuse hält. An den frontseitigen — also dem Separatorsteg abgewandten — Kanten der auf den Federarmenden liegenden Fotos greifen die Haken 22 an, wodurch eine gewisse Anzahl von Fotos — je nach der Höhe der Haken — der Trenneinrichtung zugeführt wird. Diese stellt sich letztlich als ein Durchlaßspalt dar, der einerseits von (im Ausführungsbeispiel) zwei an den Gehäuseboden innen angeformten Stufen 68, andererseits von der ihnen zugewandten Unterseite von Schuhen 69 begrenzt wird, die in den Separatorsteg eingesetzt sind und die in Fig. 7 im Schnitt und in Fig. 8 in Frontansicht erkennbar sind.

Zu jeder Stufe 68 gehört ein Schuh 69, und jedes System Stufe/Schuh ist beidseits der Symmetrieebene 70 der Vorrichtung angeordnet. Die Schuhe sind im Separatorsteg längsgeführt, mit einem Schneidenlager abgestützt und von einer eingelegten Drahtfeder 71 vorgespannt. In jedem Schuh ist außerdem ein Röllchen um eine zur Auszugsrichtung senkrechte Achse drehbar aufgenommen, und das Röllchen 28 ragt etwas aus dem Schuh heraus.

In Fig. 3 erkennt man die Lage der Stufen 68, die um reichlich die Dicke eines Fotoabzugs weiter über das Gehäusebodenniveau hinaussteht als die Oberfläche des Haftbelages 26. In der Ruhestellung des Schiebers liegt der unterste Abschnitt der Schuhe ein Stück weiter von der Kante 72 der Stufe entfernt, und die dem Stapel zugekehrte Fläche des Separatorstegs ist keilartig abgeschrägt derart, daß bei Auflaufen des Separators auf die Stapelkante die Fotos, an deren gegenüberliegender Kante die Haken 22 angreifen, längs der Schräge abwärts « wandern », in Richtung auf die ihnen zugekehrte Kante 72 der Stufen. Nur gerade die führende Kante eines einzigen Fotos hat zwischen den Schuhen 69 und den Haftbelag 26 soviel Platz, daß dieses im Stapel unterste Foto in den sich bildenden Spalt zwischen Schuhen 69 und Haftbelägen 26 eintreten kann, solange dieser Spalt von der Stufe 68 offengehalten wird. Alle anderen, vom Haken 22 mitgeführten Fotos stoßen an den Separator selbst oder an dessen Schuhe an mit der Folge, daß die Haken von deren Endkante abrutschen.

Wenn die in Auszugsrichtung hinteren Kanten der Schuhe 69 die Kante 72 der Stufen 68 passiert haben, senken sich die Schuhe unter der Wirkung der Drahtfeder 71, wobei die Rollen 28 sich auf das so abgetrennte einzelne Foto setzen und dieses auf die zugeordneten Haftbeläge pressen, wodurch es im Gehäuse — also dem ersten Rahmenteil — festgehalten wird. Der Reststapel wird vom Separator zusammen mit dem Schieber nach außen mitgenommen, bis dieser ganz ausgezogen ist.

Dabei ist zu beachten, daß die Federarme 32 ja auch vom Separatorsteg überlaufen werden. Damit sie während des Durchlaufs ihrer am Stapel angreifenden Enden nicht das abgetrennte Bild von unten belasten, werden sie während einer bestimmten Phase des Auszugshubes mechanisch in Richtung Gehäuseboden gedrückt. Hierzu dienen an die Schieberholme 44 angeformte Kufen 73, die seitlich von den Federarmen auskragende Ansätze 74 überstreichen und die Arme entsprechend ihrer Länge auf einem Teilhub halten. Weitere Kufen 75 an den Schieberholmen laufen auf die Federarme 24 an der Verbreiterung 76 auf, sobald das Einzelfoto zwischen Haftbelag und Rollen sicher geklemmt ist, und drücken diese Arme ebenfalls vom Sichtfenster weg, so daß man ungehindert weitere Fotos einfüllen, andere entnehmen kann.

Auf der dem Stapel abgewandten Seite des Separators werden die Federarme 32 nach kurzem Hub wieder freigegeben, so daß sie wieder unter das vereinzelte Foto greifen und dessen hintere Kante allmählich in Richtung Fenster führen. Schließlich legt sich diese Kante unter der Wirkung der Federn an die Gehäuseoberseite an. Da die freien Enden der Federarme abgerundet sind, andererseits aber diese Kante sicher an der erreichten Position festgeklemmt werden soll, ist an den Federarmen noch ein kurzes Stück geradlinig ausgebildet, in Fig. 4 mit 77 bezeichnet. Das abgerundete Federarmende findet dabei Platz in einer Ausnehmung auf der Innenseite der Gehäusedeckwand, in Fig. 5 mit 78 bezeichnet.

Die beiden Haken 22, die beiden Schuhe 69, die Haftbeläge 26 und die Federarme 32 sind sämtlich jeweils symmetrisch bezüglich der Mittelebene der Gesamtvorrichtung angeordnet, und die beiden Haken 22 liegen so genau wie möglich auf einer zu dieser Symmetrieebene senkrechten Linie. Das hat zur Folge, daß das zu wechselnde Foto auch dann ohne Verdrehung den Wechselvorgang durchläuft, wenn es wegen Untermaß nicht an den Schieberholmen geführt ist. Die Abmessungstoleranzen von Fotos sind nämlich bei gleicher Nenngröße unterschiedlich in Quer- und Längsrichtung: Da in den Entwicklungsanstalten die Papiere von Rollen recht genau eingehaltener Breite verarbeitet werden, die dann auf unterschiedliche Länge geschnitten werden, ist es bevorzugt, in Richtung der Schieberbewegung das Fotomaß vorzusehen, das enger toleriert ist.

Das abgetrennte Einzelbild, das bis jetzt nur an seiner einen Kante eingeklemmt gehalten beschrieben worden ist, wird als ganzes in Richtung Fenster gehoben. Hierzu dienen die schon erwähnten Blattfedern 30 mit frontseitigen Armen 79 und rückseitigen Armen 80, die — wie in Fig. 5 deutlich erkennbar — das Einzelfoto so halten und abstützen, daß es beim Schieberrückhub wieder auf den Stapel gelangen kann. Im geschlossenen Zustand der Vorrichtung und während des Auszugshubes des Schiebers — zumindest während des ersten Teils desselben — sind die Federarme 79, 80 von den Holmen des Schiebers in entsprechende Nuten des Gehäusebodens gedrückt, die in Fig. 6 erkennbar sind.

Zu Beginn des Rückhubs des Schiebers ist das Einzelfoto von den Federarmen 32 vor den an das Gehäuse angeformten Anschlägen 52 eingeklemmt und wird in Richtung Separatorsteg an vier Stellen von den Federarmen 79, 80 abgestützt. Die dem Separatorsteg zugekehrte andere Querkante des Fotos kann nach unten durchhängen ; die ihr zugekehrte Seite des Separators ist jedoch keilförmig abgeschrägt, so daß die Kante allmählich gehoben wird, wenn der Separatorsteg auf sie zuläuft. Zwischen der Oberkante des Separatorstegs und der Gehäusedeckwand ist ein Spalt, der für den Durchlaß des Fotos reichlich bemessen ist. Der Gefahr, daß das Foto auf die ihm zugekehrt liegenden Kanten des vom Schieber mitgeführten Reststapels aufstößt, wird dadurch begegnet, daß die Gehäusedeckwand innen Niederhaltenocken 81 aufweist, die den Stapel unter dem Niveau der Separatoroberseite halten. Diese Niederhaltenocken stehen ausgefluchtet mit den Rippen 40, so daß sie durch die entsprechenden Ausschnitte 42, 54 des Separatorsteges passen.

Das Griffstück-Schiebeteil 38 ist gleitbeweglich im Griffstück aufgenommen und steht unter Federvorspannung in Richtung Gehäuse, wie in Fig. 3 gut erkennbar. Beim Einschub des Schiebers trifft seine freie Kante 82 auf einen im Gehäuse vorgesehenen Anschlag 83, wodurch er in das Griffstück zurückgedrückt wird und nicht in den durch das Gehäusefenster sichtbaren Raum ragt. Nach dem Herausziehen hingegen sichert er die im Schieber liegenden Fotos gegen Herausfallen. Zum Wechseln der Fotos kann er von Hand zurückgedrückt werden, was durch Fingerkante 84 erleichtert wird. Man kann die Fotos von der Unterseite des Schiebers her, zwischen die Holme greifend, herausdrücken oder neben dem Griffstück von oben hineinfassen.

Bei dem insoweit beschriebenen Vorgang bleibt immer das abgetrennte Foto im Gehäuse zurück. Es ist nicht oder nicht ohne weiteres möglich, dieses aus der Vorrichtung zu entnehmen. Um den Stapel, auch wenn dieser nur aus einem Bild besteht, entnehmen zu können, ist daher eine besondere Einrichtung vorgesehen.

Im Gehäuse ist eine Steuerbrücke 85 verschieblich aufgenommen, gehalten von an das Gehäuse angeformten Klammern 86. Die Brücke trägt einen Steuerknopf 87, der die Rückwand 88 des Gehäuses durchsetzt und geringfügig über die Wechslerkontur vorsteht. Bei Fingerdruck auf den Knopf läuft die Brücke auf Keile 89 am Gehäuseboden auf und wird dadurch in Richtung Fenster gehoben. Die Breite der Brücke paßt gerade in einen entsprechenden Ausschnitt 90 im Separator und versperrt, auf dem gesamten Auszugshub des Schiebers, den Durchlaßspalt der Trenneinrichtung, so daß jedes in der Vorrichtung befindliche Bild mit dem Schieber heraustransportiert werden muß. Nahe der äußeren Endstellung des Schiebers überläuft dessen Separatorsteg eine hochstehende Nase 91 der Brücke, die nach unten ausfedert ; wird der Schieber jetzt wieder eingeschoben, drückt der Separatorsteg zuerst die Brücke in ihre Ausgangsstellung zurück, ehe er unter erneuter Auslenkung der Nase 91 frei zurückführbar ist.

Wie oben erwähnt, sollen die Fotos durch die geschilderten Mittel im Abstand von der Fensterscheibe gehalten werden ; damit diese bei den Wechselvorgängen nicht in Berührung mit der Bildoberfläche gelangt, wodurch Kratzschäden auftreten würden. Die Gefahr besteht jedoch gleichwohl, weil die Fotos nicht (immer) eben sind, sondern in aller Regel eine Wölbung entweder in Längs- oder in Querrichtung aufweisen. Bei Wölbung in Längsrichtung genügen die auf dem gesamten Auszugshub wirksamen Rippen 36. Im anderen Falle hingegen ist zwar das Griffstück-Schiebeteil wirksam, doch der gegenüberliegende Abschnitt des Separatorsteges wäre kaum in der Lage, die erheblichen Spannungen aufzunehmen, die in einem dickeren Stapel gleichartig gewölbter Fotos entstehen.

Deshalb sind zusätzlich folgende Maßnahmen getroffen :

Unterhalb der Anschlagflächen 50 weist die Schieberfrontwand nahe den Holmen Schrägflächen 92 auf, die im wesentlichen parallel der gegenüberliegenden Separatorschräge sind. Die Fotos liegen also schräg gestaffelt zwischen Separator und Schrägflächen, wodurch ein Großteil der Spannungen im Stapel auf die Gesamtfläche des Separators verteilt wird. Außerdem ist in der Mitte des Separatorsteges eine Erhöhung 93 vorgesehen, die die Restspannung derjenigen Fotos aufnimmt, die an den zu ihrer Kante senkrechten Anschlagflächen 50 abgestützt sind.

Wenn der Benutzer einmal begonnen hat, die Wechselbewegung durchzuführen, so muß diese ganz zuende gebracht werden, um die Vorrichtung in die Ausgangsposition zu bringen. Man kann also nicht den Schieber halb herausziehen und dann wieder einstoßen.

Dies wird durch einen Mechanismus bewirkt, der in den Figuren 9 und 10 im Detail dargestellt ist. An das Gehäuse ist eine Zahnstange 94 angespritzt, mit der ein Zahnrad 95 kämmt, welches einstückig mit seiner Welle 96 ausgebildet ist. Die Welle sitzt in einem zur Zahnstange parallelen Langloch 97 im Schieberholm 44, in das es mittels eines sich am Gehäuse abstützenden Blattfederchens 98, angespritzt am Zahnrad, eingedrückt gehalten wird.

Das Langloch ist durch eine Rippe 99 in zwei Teile unterteilt, in denen die Welle 96 nur noch wenig seitliches Spiel hat. Schließlich sind beidseits des Langlochs an den Schieber Sperrnasen 100, 101 angeformt, die in der Ebene des Zahnkranzes des Zahnrads liegen und mit ihren Spitzen in diesen eingreifen können.

Dieser Mechanismus arbeitet wie folgt:

Es sei angenommen, daß das Zahnrad die in Fig. 9 dargestellte Position hat und daß bei der Schieberbewegung in Richtung des Pfeils 102 das Zahnrad sich in Richtung des Pfeiles 103 dreht. Durch die Reibung des Federchens 98 an der Gehäusewandung wird dabei das Zahnrad nahe der Mitte des Langlochs, mit seiner Welle anliegend an der Rippe 99, gehalten. Dabei ergibt sich ein, wenn auch geringer, Abstand zwischen dem Kopfkreis des Zahnkranzes und der Spitze der Nase 101. Versucht man nun, den Schieber in Gegenrichtung zu bewegen, wird das Zahnrad an das äußere Ende des Langlochs verlagert und sofort von Spitze 101 gesperrt. Am Ende des Schieberhubs hingegen läuft der Zahnkranz auf einen Anschlag-Teilkreis 104 auf und wird unter Deformation des Federchens 98 über die Rippe 99 gehoben, wodurch nun nur die Drehung in der entgegengesetzten Richtung freigegeben ist.

Es ist wichtig anzumerken, daß zwar auf dem größten Teil des Schieberauszugshubes die Halteeinrichtung von den Rollen 28 im Zusammenwirken mit den Haftbelägen 26 verkörpert wird, daß aber auf dem letzten Teil des Hubes, kurz vor Erreichen der Endposition, auch die Federarme 32, indem sie das Einzelfoto festklammern, als « Fortsetzung » der Halteeinrichtung wirken.

Wie aus der vorhergehenden Erläuterung entnehmbar ist, wird jedes umgeschichtete Blatt während des gesamten Umschichtzyklus niemals freigegeben, sondern an mindestens zwei Punkten erfaßt und damit gegen Verdrehung gesichert. Es ist somit stets unter Kontrolle, hier mit achssymmetrischen Mitteln.

Die stapelparallelen Schenkel der Schieberholme, auf denen sich beim Umschichten das vereinzelte Blatt abstützt, dürfen voneinander höchstens einen solchen Abstand haben, daß ein kurzes Foto, das mit einer Kante gerade an einem dazu senkrechten Holmschenkel anliegt, von dem gegenüberliegenden Holm an der anderen Kante noch gehalten wird.

Wie oben erwähnt, hat die Vorrichtung das Sichtfenster in der Oberschale des Gehäuses. Die Abmessung des Fensters ist dann in Richtung quer zur Bewegungsrichtung höchstens so groß, daß das kürzestmögliche Foto, auch wenn es außermittig liegt, sich nicht mit seiner Kante im Sichtfeld präsentiert. Entsprechendes gilt für die Rippen 36, und ganz dieselben Überlegungen treffen auch zu auf die Federarme 79 und 80 und überhaupt für alle an den Blattflächen angreifenden Bauteile.

Die oben beschriebene und dargestellte Ausbildung des Federsystems, gebildet von den einstückig geschnittenen und paarweise symmetrisch angeordneten Federn mit den Federarmen 24 und 32, erfüllt insgesamt fünf Funktionen. Erstens bilden die an ihnen angeformten Haken 22 die Zufuhreinrichtung, wobei die Haken letztlich nur ein Blatt in die Trenneinrichtung mitnehmen. Zweitens bilden beide Arme gemeinsam — genauer gesagt, die vier Arme beider Federn — ein Andrucksystem, mit dem der Stapel bei ruhender Vorrichtung sauber gegen das Fenster gedrückt wird. Drittens dient der Arm 32 dazu, nachdem er vom Separator überlaufen worden ist, das Einzelblatt an die Gehäusedeckwand zu fördern und es dort, viertens, festzuklemmen. Fünftens schließlich sind die Arme 32 dicht genug neben den Haftbelägen 26 angeordnet, daß sie ein gegebenenfalls infolge statischer Aufladung am Haftbelag anhaftendes Einzelblatt infolge ihrer Vorspannkraft von diesem abschälen können. Anzumerken ist, daß der Arm 32 so geformt und angeordnet ist, daß er vom Separatorsteg überlaufen werden kann, ohne daß es zu einer Störung der glatten Handhabung führt.

Die Fig. 11 und 12 zeigen eine Variante der Sperreinrichtung nach Fig. 9 und 10. Von den Rahmenteilen sind jeweils nur einander gegenüberstehende Abschnitte 12 bzw. 14 angedeutet. In einem der Rahmenteile, hier Rahmenteil 14, ist um einen Zapfen 106, der jedoch exzentrisch sitzt, eine Klemmrolle 108 drehbar. Sie trägt gegenüber ihrer größten Ausladung einen Stift 110, über den eine am Rahmenteil 14 befestigte Blattfeder 112 greift. Bei Bewegung in Pfeilrichtung in Fig. 11 kann die Klemmrolle ausweichen, in Gegenrichtung jedoch verklemmt sie die beiden Rahmenteile. In den Endlagen der Rahmenteile trifft die Klemmrolle auf eine Ausnehmung 114 im jeweils anderen Rahmenteil und kann deshalb, bei Schubrichtungsumkehr, frei um etwa 90° schwenken, bis der Stift 110 wieder an der Feder 112 anliegt.

Die oben beschriebenen beiden Sperrvorrichtungen wirken nach Art eines Freilaufs, das heißt, sie schalten jeweils erst in den Endstellungen beider Rahmenteile relativ zueinander um. Es kann aber vorkommen, daß ein Benutzer eine Fehlbedienung wieder rückgängig machen möchte, etwa weil ein Stapel Fotoabzüge beim Einlegen sich verlagert hat. Dann ist es doch erwünscht, wenigstens aus gewissen Positionen heraus ungesperrt in beiden Richtungen die Rahmenteile relativ zueinander verlagern zu können. Deshalb ist im nachstehend beschriebenen bevorzugten Ausführungsbeispiel eine andere Bauart der Sperrvorrichtung vorgesehen.

In Fig. 13 bis 15 ist die Ausführungsform in ihrer Gesamtheit dargestellt. Im Gehäuse 12 ist der Schieber 14 verschieblich aufgenommen; Gehäuse 12 bildet das erste Rahmenteil, Schieber 14 das zweite. Der Auszugshub ist durch ein an einen der Schieberholme 44 angeformtes Lagerauge 116, das auf einen gehäuseseitigen Anschlag 18 aufläuft, begrenzt. Das Gehäuse ist aus einer Oberschale 64 und einer Unterschale 62, deren Außenränder formschlüssig ineinandergreifen, zusammengeschraubt, und zwar in dem Bereich zwischen den Schieberholmen 44 und den zu ihnen parallelen Außenkanten des Gehäuses. Hierfür weist jeweils die Unterschale angeformte Führungshülsen 118 für Schraubenschäfte 120 sowie außenseitige Einsenkungen 122 für Schraubenköpfe 124 auf, während die Oberschale dazu koaxial angeformte Kernloch-Hülsen 126 trägt, in die die Schrauben ihr Gewinde selbst schneiden. In die Oberschale 64 ist das Fenster 35 eingeklipst, und die unter seinen äußeren Randbereichen liegenden Teile der Oberschale sind dadurch nicht sichtbar, daß diese Bereiche des Fensters mattiert sind. In Fig. 13 ist die Kontur des mittleren, transparenten Fensterabschnitts mit 34 markiert.

Funktionell bestehen wenig Unterschiede gegenüber dem Ausführungsbeispiel nach Fig. 1 bis 10, so daß es genügt, nur die markanten Abweichungen zu erläutern.

Hier sind die Federarme 24, 32 und 80 zu einem Stanz- und Biegeteil zusammengefaßt und mittels Nocken 128 positioniert und kalt festgebördelt. Dagegen sind die Federarme 79 gesonderte Bauteile, die wie in Fig. 16 bis 18 dargestellt mittels angeformter Nocken an der Unterschale positioniert und kalt festgebördelt werden. Damit dieser Federarm das vereinzelte Bild möglichst frühzeitig hochheben kann, weist der zugehörige Schieberholm 44 Ausschnitte 130 auf. Das sichere Festhalten des vereinzelten Bildes ist während dieser Phase des Wechselzyklus durch die Federarme 80 gewährleistet, die die dem Schieber abgewandte Endkante des Bildes klammerartig nach oben drücken.

Der Haftbelag 26 kann unter Umständen das vereinzelte Bild so sehr festhalten, daß die Kraft der Federarme 79 nicht ausreicht, um die dem Schieber zugewandte Bildkante zu heben. Die Fig. 19 und 20 zeigen eine erste Möglichkeit, diese Kante zusätzlich vom Haftbelag abzudrücken : Die beiden Haftbelagstreifen sind auf je einem gesondert gefertigten Steg 134 angeordnet. Beidseits des Streifens 26 weist der Steg angeformte Federbrücken 132 auf, die nach Überlaufen durch den Separatorsteg 20 nach oben ausfedern und die Bildkante liften. Alternativ kann man — wie in Fig. 21 und 22 gezeigt — gesonderte metallische Federblätter 136 vorsehen.

Die Gestaltung der Stege 134 läßt sich Fig. 32 und 33 entnehmen. Man erkennt, daß sie spiegelsymmetrisch gestaltet sind, also an beiden Enden Stufen 68 mit Kanten 72 aufweisen. Der Grund liegt darin, daß dann beim automatischen Beschichten der Stege mit dem Haftbelag kein Sortieren erforderlich ist. Allerdings sind dann zusätzlich Löcher 138 vorzusehen, durch die am griffseitigen Ende des Gehäuses an dessen Unterschale angeformte Auffahrkeile 140 für den Separatorsteg ragen. Die Befestigung der Stege in der Unterschale erfolgt durch Eindrücken der Nasen 142 in entsprechende Rinnen der Gehäuseunterschale, und die genaue Positionierung erfolgt mittels eines der beiden Zapfen 144, nämlich mittels des dem Schiebergriff abgewandten Zapfens, während dem anderen Zapfen ein gehäuseseitiges Langloch zugeordnet ist.

Die Stege 134 bilden zugleich die Führung für die in der Symmetrieebene angeordnete Taste 87, deren Gestaltung, Anordnung und Funktion schematisch in Fig. 23 bis 25 dargestellt ist. Fig. 23 zeigt die Betriebsposition, das heißt in dieser Position der Taste 87 erfolgt der normale Wechselvorgang. Die Taste 87 trägt einen auf den Separatorsteg 20 hin gerichteten Fortsatz 146 mit einer Kerbe 148, zu der komplementär ein Doppelkeil 150 an der Unterseite des Separatorsteges 20 ist. Drückt man nun bei festgehaltenem Schieber auf die Taste 87, so federt ihr Fortsatz 146 nach unten aus, bis der Doppelkeil 150 in die Kerbe 148 einrastet (Fig. 24, links). Die vom Fortsatz 146 nach unten ragende Sperrnase 152 blockiert nun die Trenneinrichtung für die Kante des untersten Bildes im Stapel, so daß bei Zug am Schieber die Haken 22 auch von der Kante dieses Bildes abgleiten, wenn der Separatorsteg zusammen mit der Taste 87 auf die ihm zugewandte Stapelkante einwirkt und den Stapel mitnimmt (Fig. 24, Mitte). Nahe der äußeren Endposition des Schiebers 14 trifft die Sperrnase 152 auf einen Einschnitt 154, während die Tastenführungslappen 158 auf einen Anschlag 156 auflaufen. Der Fortsatz kann demgemäß nach unten ausfedern, wenn der Schieber weitergezogen wird, und sich so vom Separator lösen (Fig. 24, rechts). Beim Wiedereinschub des Schiebers 14 ist die Taste lose beweglich, so daß der Doppelkeil sie einfach vor sich her schiebt, bis sie ihre Endposition wieder erreicht hat (Fig. 25).

Oben wurden unter Bezugnahme auf Fig. 9 bis 12 zwei Bauarten von Richtungswechsel-Sperren beschrieben. Beim vorliegenden Ausführungsbeispiel sind ebenfalls Sperren vorgesehen, die jedoch nur in den « kritischen » Phasen des Wechselzyklus wirken.

Im Lagerauge 116 des Schiebers 14 ist um einen Zapfen 160 schwenkbar eine Steuerklinke 162 angeordnet, die mit einem Steuernocken 164 längs Kanälen geführt ist, die durch an die Unterschale 62 angeformte Führungsschienen 166 definiert sind, so daß der Steuernocken 164 den in Fig. 27 mit Pfeilen markierten Pfaden beim Einschub bzw. beim Auszug folgen muß. Während des größten Teils des Wechselzyklus kann man ungehindert die Bewegungsrichtung umkehren, nicht jedoch dann, wenn sich der Steuernocken 164 während des Einschubs im Kanalabschnitt 168 bzw. während des Auszugs im Kanalabschnitt 170 befindet. Im ersteren Falle würde, wenn man kurz vor der inneren Endstellung des Schiebers diesen wieder herausziehen will, der Steuernocken auf den Anschlag 172 auflaufen ; im letzteren Falle, wenn also kurz vor Erreichen der äußeren Endstellung der Schieber wieder eingeschoben wird, stößt der Steuernocken entweder auf den Anschlag 174 oder auf die Anschlagkante 176. Es ist anzumerken, daß der Zapfen 160 mit hinreichender Reibung im Lagerauge sitzt, daß die Steuerklinke zwar den Führungsstegen ohne merkbare Behinderung folgen, nicht aber frei pendeln kann.

Fig. 28 und 29 lassen die Gestaltung der zusammenwirkenden Teile des Separatorsteges und der Haftbelag-Stege 134 erkennen. In der Ruheposition (Fig. 28), also bei ganz eingeschobenem Schieber 14, sitzen die Schuhe 69 auf den Stegen seitlich auf, während die Andruckrollen 28 in eine Ausnehmung hinter dem Haftbelag ragen, so daß ihre Lager entlastet sind und keine Deformation durch Kaltfluß eintreten kann. Bei Beginn des Wechselzyklus (Fig. 29) laufen die Rollen dann erst auf eine Stufe 178 auf und werden damit auf das Niveau der vor dem Haftbelag 26 liegenden Flächen gehoben, während die Schuhe sich auf dem Niveau der Stufe 68 befinden. Die Niveaudifferenz zwischen 68 und 178 ist funktionsbedeutsam, weil sie auf die Bilderdicke abgestimmt ist ; beide Niveaus befinden sich an demselben Spritzgußteil, so daß die Toleranz extrem klein ist. Der Auflauf der Rollen 28 auf die Bildkante ist problemlos.

Fig. 30 zeigt das Ende des Federarms 24 mit dem Mitnehmer 22. Beidseits des Mitnehmers erstrecken sich noch Fortsätze 180, die die Aufgabe haben, sich an das Bild von unten anzulegen und damit zu verhindern, daß die in Fig. 30 gestrichelt dargestellte Situation eintreten kann, daß nämlich ein stark gekrümmtes Bild sich so tief in den Haken 22 setzt, daß dieser von der Kante nicht mehr abrutschen kann. Diese Möglichkeit muß aber gegeben sein, damit der Gesamtstapel mittels der Taste 87 entnommen werden kann.

In den zuvor beschriebenen Ausführungsbeispielen wurde die Leiteinrichtung hinsichtlich ihrer verschiedenen Aspekte nur am Rande diskutiert. Gerade für Fotoabzüge jedoch bietet auch sie gewisse Komplikationen. Da das vereinzelte Blatt unter Umständen ziemlich stark gewölbt sein kann, erweist es sich als zweckmäßig oder sogar als unumgänglich, gewisse Vorsichtsmaßregeln bei der Auslegung der Leiteinrichtung zu beachten. So muß das vereinzelte Foto wieder durch einen Durchlaß der Trenneinrichtung auf die andere Stapelseite geführt werden, wenn auch dieser Durchlaß viel weniger kritisch ist als der Abtrenn-Durchlaß. — Im Prinzip sind alle Konstruktionen, die für die Zufuhr verwendbar sind, auch für die Rückführung des Einzelblattes anpaßbar. Im allgemeinen aber genügt es, das Foto von seiner hinteren Kante aus zu schieben, wobei es gegebenenfalls noch festgeklammert wird. Nachstehend werden einige Ausführungsformen kurz beschrieben.

Hinsichtlich des erwähnten Rücklauf-Durchlasses ist Vorsorge dafür zu treffen, daß der Reststapel diesen Durchlaß nicht versperrt ; diese Gefahr besteht besonders bei Stapeln stark gewölbter Fotoabzüge. — Oben wurde unter Bezugnahme auf Fig. 1 bis 8 erläutert, daß man dafür am ersten Rahmenteil Niederhalte-Fortsätze anbringen kann. An deren Stelle kann man aber auch am ersten oder am zweiten Rahmenteil ein den Rückführ-Durchlaß durchgreifendes Element vorsehen, welches nach beendetem Wechselzyklus wieder zurückgezogen wird.

Ferner ist dafür zu sorgen, daß der Rückführdurchlaß bei Beginn des Wechselzyklus gesperrt ist, damit nicht von beiden Seiten des Stapels je ein Blatt abgezogen wird. Oben wurde unter Bezugnahme auf Fig. 1 bis 8 erläutert, daß man dafür kammartig ineinandergreifende Fortsätze am Separatorsteg einerseits, am ersten Rahmenteil andererseits verwenden kann ; an deren Stelle kann man aber auch zum Beispiel eine aus dem Separatorsteg ausfahrende gesteuerte Blockiereinrichtung vorsehen.

Fig. 34 zeigt im schematisierten Längsteilschnitt eine Bauart, die sowohl den Reststapel für den Einschub des vereinzelten Blattes niederhält als auch den Rückkehr-Durchlaß während des Wechselzyklusbeginns blokkiert :

Im als Trenneinrichtung vorgesehenen Separatorsteg 20 ist eine dünne, elastische Lamelle 308 angeordnet, die zwischen Niederhalter 36 an einer Deckwand des ersten Rahmenteils greift. Das freie Ende der Lamelle drückt dabei auf das ihm zugekehrt liegende Blatt des Reststapels 182. Die Lamelle ist, um ein kurzes Wegstück in Rahmenbewegungsrichtung verlagerbar, im zweiten Rahmenteil abgestützt, so daß es zu Beginn des nächsten Wechselzyklus nach links (in Fig. 34) ausweichen kann, jedoch dabei den Durchlaß 310 immer noch blockiert, so daß das zuletzt rückgeführte Blatt von dem Niederhalter auf den Reststapel gedrückt wird, bevor die Lamelle wieder eingefahren wird.

Fig. 35 zeigt im schematisierten Schnitt die bevorzugten Mittel : Feder 32 hält die hintere Blattkante vor dem Schiebeanschlag 52, Feder 80 unterstützt das Blatt etwa mittig, und hinter dem Separatorsteg 20 wird der Reststapel 182 auf einem Niveau gemäß Pfeil 312 gehalten, indem die Niederhalter 81 auf ihn einwirken. Der Pfeil 314 definiert das Niveau derjenigen Kante des Separatorsteges, die vom Einzelblatt überlaufen wird und die im kämmenden Eingriff mit den Niederhaltern steht.

Fig. 36 stellt in schematischer Teilseitenschnittansicht eine Konstruktion dar, mit der verhindert wird, daß bei der Abtrennphase des Wechselzyklus auf dem Durchlaß für die Blattrückführung fälschlicherweise auch ein Blatt in den Spalt gelangen kann. Dies erfordert hier die Rippen 40, welche kammartig in Ausnehmungen des Separatorsteges 20 greifen.

Alternativ sind in Fig. 37 aus dem Separatorsteg ausfahrende Sperrglieder 316 dargestellt, die den Durchlaß erst freigeben (entweder durch Federwirkung infolge Keilauflauf oder zwangsgesteuert), wenn in der Rückführphase eine Blattkante ansteht (« Rückschlagventilprinzip »).

Die folgenden Figuren beziehen sich auf Mittel zum Sicherstellen der Blattrückführung selbst. Wie erwähnt, wird vorzugsweise das Einzelblatt durch den Durchlaß geschoben, mit seiner hinteren Kante an einem Anschlag anliegend. Wenn das Blatt um einen Krümmungsradius gewölbt ist, der etwa senkrecht zur Bewegungsrichtung liegt, so besteht das Risiko, daß das Blatt nicht durch den Durchlaß geschoben, sondern zusammengestaucht wird und/oder von dem Anschlag abrutscht.

Im Prinzip sind also bei der Leiteinrichtung solche Mittel vorzusehen, die das Einzelblatt möglichst sicher vor dem « schiebenden » Anschlag halten, und/oder Mittel, die eine etwaige Wölbung des Fotos ausgleichen oder mildern.

Fig. 38 zeigt im schematisierten Längsschnitt ganz prinzipiell diese Mittel : Eine erste Blattfeder 32 klemmt das Einzelblatt 188 vor dem « schiebenden » Anschlag 52, und weitere Blattfedern 79, 80 drücken das Blatt möglichst eben an die Deckwand des Gehäuses 12 (erstes Rahmenteil), um die führende Kante des Einzelblattes einigermaßen genau vor dem Durchlaß 310 zu präsentieren. Die Zuverlässigkeit wird umso besser sein, je länger die Blattfedern an dem Einzelblatt während des Blattrücklaufs angreifen, ehe diese Federn von dem Separatorsteg 20 der Trenneinrichtung überlaufen werden. Die dem Einzelblatt 188 zugekehrte Seite des Separatorsteges ist vorzugsweise derart abgeschrägt, daß eine vor ihm abwärts gewölbte führende Kante des Einzelblattes längs der Schräge « heraufklettern » kann infolge der Keilwirkung dieser Schräge. Wird jedoch diese Blattkante durch andere Mittel dem Rückführdurchlaß zwangsweise präsentiert, kann die entsprechende Fläche des Separatorsteges auch senkrecht zur Blattebene verlaufend ausgebildet sein.

Anstelle der Blattfeder 32 kann man andere Mittel verwenden, um die dem Separatorsteg abgewandte Kante des Einzelblattes an die andere Gehäusekante zu verlagern. Dies ist in Fig. 39 dargestellt : Ein Keil 318 ist von einer Feder 320 unter diese Kante des Blattes 188 geschoben worden und hat sie vor den schiebenden Anschlag 52 gehoben, und zwar noch während der ersten Hälfte des Wechselzyklus. Die andere Blattkante wird dann, nach Passieren des Separatorsteges 20, von einer Blattfeder 79 vor den Rückführdurchlaß 310 gehoben. Gegen Ende der zweiten Phase des Wechselzyklus schiebt dann der Separatorsteg den Keil 318 zurück. — Anstelle der Feder 320 könnte der Keil 318 auch durch eine Kopplung mit dem zweiten Rahmenteil, allerdings mit Phasenverschiebung, von diesem hin- und herverlagert werden. — Anstelle des verschieblichen Keils könnten auch ein- und ausschwenkbare schräge Keilflügel vorgesehen sein, ohne daß sich am Wirkprinzip etwas ändert. Fig. 40 zeigt schematisch die Draufsicht auf den Keil 318, und Fig. 41 stellt die Situation am Umkehrpunkt des Wechselzyklus dar.

Fig. 42 zeigt in schematischer Seitenansicht einen Mechanismus, der anstelle der Hebefeder 79 verwendbar ist. Um einen Zapfen 322 ist eine Drahtfeder 324 mit ihrer Öse schwenkbar. Einer ihrer Arme ist abgewinkelt und greift von außen quer unter die betreffende Kante des Einzelblattes, der andere Arm ist durch Auflaufen auf einen Anschlag 326 umlegbar, nimmt dabei den abgewinkelten Arm 328 mit und bewirkt so das Heben der Blattkante. Eine Rasteinrichtung 330 ist angedeutet, um unkontrollierte Bewegungen des Mechanismus zu unterbinden ; dieser soll ja nur in den beiden Endlagen (Ruheposition/Umkehrpunkt) umgesteuert werden.

Fig. 43 bis 45 zeigen eine Variante der Hebelanordnung als Leiteinrichtung. Der Separatorsteg 20 läuft kurz vor seiner Umkehrstellung auf einen Mitnehmerhaken 332 eines Hebelträgers 334 auf, an dem zwei Hebel 336 mittels angespritzter Gelenke 338 angelenkt sind. Durch die Verlagerung des Hebelträgers laufen die an der Unterseite der Hebel angeformten Nocken 340 auf Anschläge 342 einer Steuerkurve auf, so daß die Hebel hochgestellt werden. Beim Rücklauf trifft der Separatorsteg zuerst auf den ihm näheren Hebel und drückt dabei den gesamten Hebelträger um ein kleines Stück zurück, bis der Hebel umgelegt ist ; der andere Hebel hingegen bleibt noch stehen, weil die Anschläge 342 für die beiden Hebel einen größeren Abstand voneinander haben als die zugehörigen Nocken.

Die Ausführungsform nach Fig. 46 und 47 stellt eine Ausführungsform dar, bei der die Halteeinrichtung für das Einzelbild Haftbeläge 26 im ersten Rahmenteil umfaßt. Infolge statischer Aufladung kann, wie oben erwähnt, das Einzelblatt so fest an den Haftbelägen kleben, daß erhebliche Kräfte nötig sind, um es dort abzureißen. Es muß aber auf die den Haftbelägen abgewandte Seite des Rahmenteils geleitet werden. Daher sind Federn 136 mittig zwischen je zwei Haftbelägen vorgesehen. Die dem Separatorsteg 20 zugekehrte Kante des Einzelblattes wird von einem Hebel 344 geliftet, der mittels Steuerschrägen 346 an den Enden der Schieberholme 44 niedergedrückt werden, während er durch Federkraft (nicht dargestellt) gehoben wird. Der Hebel erstreckt sich, wie man in Fig. 47 sieht, über die gesamte Breite der Vorrichtung, und insbesondere greift er auch unmittelbar neben den Haftbelägen an dem Einzelblatt an. Die Welle des Hebels ist mit 348 angedeutet.

Fig. 48 bis 50 zeigen eine weitere Variante. An dem Separatorsteg 20 ist beidseits des Haftbelags 26 eine Lamelle 350 angeordnet, daß sie federnd in eine entsprechende Ausnehmung neben dem Haftbelag greift. Die beiden Lamellen sind durch eine Brücke 352 miteinander verbunden. Beim Durchlauf des Einzelblattes wird jede Lamelle federnd angehoben und schnappt nach Passieren der hinteren Blattkante wieder in die Ausnehmung zurück, so daß beim Rückhub die betreffende Blattkante vom Haftbelag abgerissen wird und die Kante längs des Separatorsteges hochsteigen muß, weil der Rückhub durch den anderen Durchlaß nun durch die Lamelle sicher versperrt ist.

Die Fig. 51 bis 63 zeigen die Wirkungsweise der Zufuhreinrichtung, Alternativen und Details derselben.

Fig. 51 bis 58 stellen zunächst das Prinzip dar. Man erkennt in Fig. 51 das erste Rahmenteil in Form des im wesentlichen rechteckigen Gehäuses 12, in dem gleitbeweglich der Schieber 14 als zweites Rahmenteil aufgenommen ist. Die Trenneinrichtung ist nur symbolisch als Separatorsteg 20 angedeutet. Der Stapel gleichformatiger Blätter ist mit 182 bezeichnet.

Der Schieber 14 umfaßt ein Griffstück 48, an dem die in Bewegungsrichtung vordere Kante des Stapels anliegt, sowie neben dem Separatorsteg die zwei Längsholme 44. Zwischen den Längsholmen ragen vom Boden des Gehäuses 12 die Elemente der Zufuhreinrichtung nach oben. Die zwei Blattfedern 24 sind mit einem Ende am Gehäuse festgelegt; das andere Ende weist die an der Stapelkante anliegende Schrägfläche 22 auf (siehe auch Fig. 54, 58). Demgemäß ist in den Federn 24 die Schrägfläche mit der Vorspannfeder baulich vereinigt.

Wird nun der Schieber aus dem Gehäuse herausgezogen, was in Fig. 51 bis 58 für den Beginn des Wechselzyklus dargestellt ist, so legt sich zunächst die Schrägfläche 22, welche im Ruhezustand nach Fig. 51 noch in den Bereich des Griffstücks 48 hineinragt, an die Stapelkante an (Fig. 52). Beim weiteren Herausziehen des Schiebers aus dem Gehäuse gehen die im Stapel obersten Blätter, die deshalb als Block gezeichnet sind, mit dem Schieber mit, während die im Einwirkbereich der Schrägfläche liegenden Blätter gebremst werden, bis der Separatorsteg 20 auf ihre gegenüberliegende Kante auftrifft (Fig. 53).

Auf die Blätter wird nun von beiden Kanten her einwärts wirkend ein Druck ausgeübt, einerseits von dem Separatorsteg, andererseits von der Schrägfläche der Zufuhreinrichtung. Die Schrägfläche kann aber nach unten ausweichen infolge der Elastizität der Federn 24, wobei die Schrägfläche an den Kanten der über dem untersten Blatt liegenden Blätter nacheinander abgleitet. Auf das unterste Blatt hingegen wirkt vom Separatorsteg her keine oder nur eine wesentlich geringere Bremskraft, so daß bei richtiger Abstimmung der Schräglage der Schrägfläche 22 und der Vorspannung der Federn 24 die von der in Blattlängsrichtung wirkenden Komponente der Federvorspannung aufgebrachte Kraft genügt, das unterste Blatt unter dem Separatorsteg durchzuschieben. Dabei wird auch die zwischen benachbarten Blättern wirkende Haftkraft überwunden, die bei der Auslegung des Systems eine erhebliche Rolle spielt.

Fig. 59 bis 63 zeigen weitgehend schematisiert eine Ausführungsform, bei der die Zufuhreinrichtung nicht nur diese Aufgabe übernimmt, sondern darüber hinaus auch noch das vom Reststapel getrennte Blatt mit dem ersten Rahmenteil verbindet, also eine Komponente der Halteeinrichtung darstellt.

Die Rahmenteile 12 und 14 entsprechen weitgehend dem Aufbau gemäß Fig. 51 bis 58. Unterschiedlich ist, daß auf der dem Gehäuseboden zugewandten Seite des Separatorsteges 20 Einschnitte 184 vorgesehen sind, die den Durchtritt eines am freien Ende der Blattfedern 24 angeformten Lappens 22 ermöglichen. Der Lappen weist die Schrägfläche auf seiner dem Stapel zugewandten Seite auf, während die Federabschnitte beidseits von ihm für eine symmetrische Abstützung sorgen. Die Federn 24 haben ein rückwärts gewandtes zweites freies Ende 186 mit abgerundetem Ende, und am Schieberboden, jedoch unter den Holmen des Schiebers, sind die beiden seitlichen Hilfsfedern 79 vorgesehen.

Diese Ausführungsform arbeitet wie folgt:

Beim Auszug des Schiebers wird das unterste Blatt dem Separatorsteg 20 ganz ebenso präsentiert wie bei der Ausführungsform nach Fig. 51 bis 58. Zugleich werden die Federenden 186 vom Separatorsteg nach unten gedrückt. Nachdem sie vom Separatorsteg überlaufen worden sind, können sie sich wieder entspannen und heben dabei das unter dem Separatorsteg durchgeschobene Blatt mit dessen hinterer Kante an. Dieses Blatt ist mit 188 bezeichnet. Der Auszugshub des Schiebers ist so bemessen, daß die Federenden neben den Lappen 22 noch von dem Separatorsteg unterdrückt gehalten sind, während die Holme die Hilfsfedern 79 freigeben, so daß diese auch die vordere Kante des Blattes anheben können, da diese von dem Lappen 22 bis vor den Separatorsteg mitgenommen worden ist (vgl. Fig. 63). dabei kann diese Kante zwischen den Schieberholmen angehoben werden und beim Rückschub des Schiebers über den Separatorsteg hinweggleiten, wobei sich die andere Kante des Blattes an dem Anschlagsteg 52 abstützt.

Fig. 64 und 65 stellen schematisch dar, daß die erfindungsgemäße Ausgestaltung auch nach dem Prinzip der kinematischen Umkehr so arbeiten kann, daß die Schrägfläche 22 starr an dem ersten Rahmenteil — hier in Form eines Gehäuses — vorgesehen, zum Beispiel angespritzt ist, während die Federvorspannung durch eine an die gegenüberliegende Wandung 210 angeheftete Blattfeder 24 bewirkt wird. Fig. 64 zeigt den Ruhezustand, Fig. 65 den Beginn des Auszugshubes des anderen Rahmenteils in Form eines Schiebers, wobei das Einzelblatt 188 bereits abgetrennt ist.

Schließlich ist anzumerken, daß in den beschriebenen Ausführungsformen eine Wechselwirkung zwischen der mit dickerem Stapel zunehmenden Vorspannung der Blattfedern und der dabei sich ändernden Neigung der Schrägfläche derart besteht, daß von der Trenneinrichtung aus gesehen im wesentlichen gleiche Verhältnisse unabhängig von der Stapeldicke vorliegen, d. h. die auf das unterste Blatt wirkende Bremskraft im wesentlichen unabhängig von der Zahl der Blätter im Stapel ist.

Es besteht auch die Möglichkeit, beim Zusammenschieben der beiden Rahmenteile bereits den nächsten Wechsel dadurch vorzubereiten, daß der Mitnehmer über ein Gestänge bewegt einen Vorlauf ausführt und dadurch bereits der Trenneinrichtung das nächste zu vereinzelnde Blatt zufördert, während noch das vorhergehende auf der anderen Stapelseite zurückkommt.

Fig. 66, 67 und 68 schließlich zeigen weitere Ausgestaltungen der erfindungsgemäßen Vorrichtung.

In Fig. 66 ist der Mitnehmer 22 von einem kompressiblen Belag 212 auf einer Trägerplatte 214 gebildet, die mittels Lenker 216 am Boden 218 eines der Rahmenteile angelenkt ist. Eine Schenkelhalsfeder 24 drückt den Mitnehmer in Anlage an die hintere Kante des abzutrennenden Blattes 188.

Gemäß Fig. 67 ist der Mitnehmer 22 als eine Platte 220 ausgebildet, die mit einer hochstehenden Leiste 222 die hintere Kante des abzutrennenden Blattes 188 hintergreift. Die Vorspannanordnung umfaßt eine Schraubenzugfeder 24, die irgendwo stationär eingehangen ist und an eine Parallelogrammgestängeanordnung 224 angreift, an die die Mitnehmerplatte angelenkt ist. Auf diese Weise ist der Mitnehmer unabhängig von der Stapeldicke parallel zu seiner Hauptebene gehalten.

Gemäß Fig. 68 ist der Mitnehmer 22 ein Fortsatz 226, abgewinkelt von einer Blattfeder 24, die sich quer zu der durch den Pfeil 228 symbolisierten Bewegungsrichtung des abzutrennenden Blattes 188 erstreckt; auch hier ist der Mitnehmer im wesentlichen immer in derselben Wirkungsposition bezüglich der Blattkante unabhängig von der Zahl der Blätter im Stapel.

Fig. 69 bis 72 zeigen eine weitere Ausführungsform. Fig. 69 bis 71 stellen die ersten Phasen des Wechselvorgangs in schematisiertem Längsschnitt dar, während Fig. 72 eine Seitenansicht des zweiten Rahmenteils mit dem am ersten vorgesehenen Mitnehmer ist.

Das erste Rahmenteil ist als Gehäuse 12, das zweite als Schieber 14 ausgebildet. Der Stapel 182 wird von einer Federanordnung 400 nach oben gedrückt, so daß die hintere Kante des obersten Blattes an einer Rippe 402 abgestützt wird, während ihre Endkante vor dem Mitnehmer 404 zu liegen kommt. Der eigentliche Mitnehmer ist die dem Blatt zugekehrte Kante des Mitnehmerklotzes, die um knapp eine Blattdicke gegenüber der Rippe vorsteht. Bei Zug am Schieber nimmt der Separator 20 den Reststapel mit, während das Einzelblatt im Gehäuse zurückbleibt. Der Mitnehmerklotz 404 ist um eine Achse 406 schwenkbar am Gehäuse angelenkt, wo dieses die Rippe 402 trägt, und gleitet mit einem Fortsatz 408 auf der Oberkante des Schieberholmes 44 (Fig. 72). Diese ist als Steuerkurve ausgebildet, wobei nach einem Teilhub des Schiebers, der ausreicht, die führende Kante des Einzelblattes 188 durch die Trenneinrichtung zu schieben, die Schräge 410 dem Klotz 404 erlaubt, sich abzusenken und dabei eine erheblich dikkere Arbeitsfläche dem Einzelblatt zuzukehren als vorher zulässig war. Dabei steht er unter Vorspannung durch eine Blattfeder 412, und er ist mit einem Fanghaken 414 versehen, der das Abrutschen der Einzelblattkante in Richtung Rippe 402 verhindert.

Fig. 73 bis 78 beziehen sich auf Zufuhreinrichtungen, mittels denen der Blattstapel oder zumindest ein Teil desselben der Trenneinrichtung so zugeführt wird, daß diese ein Blatt vereinzeln kann.

Allen Ausführungsformen sind aber einige Punkte gemeinsam, die im Zusammenhang mit der Gesamtfunktion der Vorrichtung zu erwähnen sind.

So besteht grundsätzlich die Möglichkeit, daß die Zufuhreinrichtung auch die Funktion übernehmen kann, das vereinzelte Blatt im ersten Rahmenteil festzuhalten, und zwar während des gesamten Auszugshubes der Rahmenteile.

Ferner ist es grundsätzlich empfehlenswert, daß die Zufuhreinrichtung — nachdem sie im Kontakt mit dem Stapel und/oder dem zu vereinzelnden Blatt ihre Zufuhrfunktion erfüllt hat — von dem Stapel während des restlichen Relativweges der Rahmenteile zu lösen, um die Bauteile und die Blätter weitgehend zu schonen. Das kann nach Art eines Freilaufs vorgesehen sein, wenn die Umsteuerung in Eingriff/Außer Eingriff bewegungsrichtungsabhängig sein soll, oder durch hubabhängig steuernde Komponenten, die mit der Zufuhreinrichtung oder Teilen derselben in und außer Wirkverbindung treten.

Wenn die Rahmenteile nach Art eines Gehäuses als erstes Rahmenteil und nach Art eines in das und aus dem Gehäuse beweglichen Schiebers ausgebildet sind, der als zweites Rahmenteil bei dem Auswärtshub den Reststapel zum Zugriff freigibt, ist es bevorzugt, die Zufuhreinrichtung vollständig inaktivierbar zu machen, um mit dem Schieber auf einmal den gesamten Stapel entnehmen zu können.

Fig. 73 bis 78 zeigen, weitgehend schematisiert, unterschiedliche weitere Zufuhrsysteme nach anderen Prinzipien.

Gemäß Fig. 73 weist das erste Rahmenteil eine angeformte Zahnstange 416 auf, mit der ein im zweiten Rahmenteil drehbar gelagertes Ritzel 418 kämmt und bei der Relativbewegung eine Mitnehmerwalze 420 antreibt, die das zu vereinzelnde Blatt 188 reibungsschlüssig mitnimmt.

Fig. 74 zeigt eine Ausführungsform mit einer Platte 422, die einen Haftbelag 26 trägt, der das an ihm anliegende Blatt reibungsschlüssig mitzunehmen in der Lage ist. Die flächige Anlage wird durch die Aufhängung der Platte über ein erstes Gelenk 424 und ein zweites Gelenk 426 sowie eine Vorspannfeder — hier eine Schenkelhalsfeder 428 — sichergestellt.

Fig. 75 stellt eine Ausführungsform dar, bei der ebenfalls die Zuführeinrichtung mittels eines Haftelementmitnehmers arbeitet. Hier ist das erste Rahmenteil als Schieber, das zweite Rahmenteil als Gehäuse ausgebildet. Am Schieber 14 ist ein Haftelementmitnehmer 26 angeordnet; der das zu vereinzelnde Blatt vom Stapel 182 abzieht und der Trenneinrichtung zuführt, die hier einfach als Separatorsteg 20 gezeichnet ist. Im zweiten Rahmenteil (also dem Gehäuse 12) ist eine Steuerkulisse 430 ausgebildet, längs der der Haftelementmitnehmer über den Separatorsteg ohne Kontakt mit diesem hinweggeführt wird.

In Fig. 76 ist angedeutet, wie ein Haftmitnehmer 26, nahe dem freien Ende eines Hebels 432 angeordnet, durch Auflaufen einer Steuerschräge 434 am zweiten Rahmenteil (Schieber 14) um seinen Anlenkpunkt 436 am ersten Rahmenteil (Gehäuse 12) in Anlage an das ihm zugewandt liegende Blatt des Stapels verschwenkt wird und so auf einem Teilhub der Relativbewegung dieses Blattes der Trenneinrichtung zuführt, symbolisiert durch den Separatorsteg 20.

Fig. 77 zeigt in schematischer Seitenansicht, Fig. 78 in Teilschnitt-Draufsicht eine Zufuhreinrichtung, die nicht erst zu Beginn eines Auszugshubes der Rahmenteile wirksam wird, sondern bereits beim letzten Einwärts-Teilhub des vorhergehenden Wechselvorgangs.

Während also das Einzelblatt 188 auf einer Seite dem Stapel 182 wieder zugeführt wird — Pfeil 438 — wird auf seiner anderen Seite — Pfeil 440 — das nächste Blatt schon in Bewegung gesetzt. Hierfür weist das erste Rahmenteil einen bei 442 angelenkten Hebel 444 mit einem Haftmitnehmer 26 auf, der durch Auflaufen von Anschlägen 446 bzw. 448 nahe den jeweiligen relativen Endpositionen des zweiten Rahmenteils umgelegt wird und dabei das Blatt entsprechend der Relativbewegung der beiden Rahmenteile mitnimmt.

Fig. 79 zeigt im schematisierten Längsschnitt eine andere Ausführungsform des Gegenstandes der Erfindung, während die Fig. 80-81 einzelne Phasen des Wechselzyklus darstellen. Fig. 82 illustriert den Antrieb der Rolle.

Man erkennt in Fig. 79 das erste Rahmenteil in Form eines Schiebers 14, der relativ zu dem zweiten Rahmenteil, das als Gehäuse 12 ausgebildet ist, verschieblich ist. Die Trenneinrichtung umfaßt den Separatorsteg 20 und weitere Bauteile gemäß Fig. 92-107. Die Federn 400 drücken den Stapel 182 nach oben.

Am Schieber ist eine Zahnstange 416 angeformt (Fig. 82), die mit einem Ritzel auf der Rollenwelle (nicht gezeigt) kämmt. Dadurch wird die Rolle zu einer Umfangsgeschwindigkeit angetrieben, die gleich ist der Relativgeschwindigkeit zwischen beiden Rahmenteilen. Die Rolle 420 ist mit einem die Reibung an den Fotos erhöhenden Belag versehen, und da der Stapel von den Federn gegen die Rolle gedrückt wird, fördert die Rolle beim Auszug des Schiebers aus dem Gehäuse das ihm zugekehrt liegende Blatt ein Stück weit durch den Durchlaßspalt 244 zwischen Separatorsteg und Gehäusedeckwand 266. — Die Rolle ist in Lagern des Gehäuses drehbar.

Am Schieber ist ein Mitnehmerelement in Form eines Haftbelags 26 vorgesehen, der im Zusammenwirken mit einem Gegenelement 450 die führende Kante des von der Rolle angeförderten Blattes erfaßt, sobald das Gegenelement, das zunächst durch Auflaufen auf den Separatorsteg nach unten weggeklappt worden war, von diesem Steg freikommt und unter Wirkung einer Vorspannfeder (nicht gezeigt) nach oben auf den Haftbelag zu schwenkt. Das Blatt wird dann zwischen Haftbelag und Gegenelement zangenartig gefaßt. Die Rolle wirkt demgemäß als Zufuhreinrichtung, die beschriebene Zwange als Halteeinrichtung.

Wie Fig. 81 erkennen läßt, läuft beim Rückhub des Schiebers das Einzelblatt 188 durch den unteren Durchlaß 310 des Separatorstegs, und ein Rastorgan 452 klappt das Gegenelement rechtzeitig ab, damit die nachschleppende Blattkante für den Durchlauf durch den Durchlaß freikommt.

Fig. 83 zeigt eine weitere Ausführungsform der Vorrichtung. Hier ist das erste Rahmenteil als Gehäuse 12, das zweite Rahmenteil als Schieber 14 mit Separatorsteg 20 ausgebildet. Demgemäß ist die Rolle 420 drehbar im Schieber gelagert und von einer Zahnstange 416, die an das Gehäuse angeformt ist, zum Umlauf angetrieben, und zwar entgegen der Schieberbewegungsrichtung. Die Ausgangsposition der Rolle ist getrichelt angedeutet. Sobald der Separator das auf diese Weise im Gehäuse zurückbleibende Blatt überlaufen hat, drückt ein in seinem Fußteil eingebautes reibungsarmes Element (z. B. eine glatte Rolle) das Blatt nach unten auf den Gehäuseboden, wo eine reibungserhöhende Beschichtung (« Haftbelag ») angebracht ist. Eine Feder 32 drückt dann hinter dem Separator das Blatt wieder vom Haftbelag ab nach oben in Richtung auf einen Anschlag 52, von dem dann das Blatt beim Schieberrücklauf durch den oberen Durchlaß 310 geschoben wird.

Es ist anzumerken, daß jedenfalls während der Rücklaufphase der Rahmenteile die Rolle vom Antrieb entkoppelt ist, so daß sie auf dem Stapel zurücklaufen kann, ohne dann das mit ihr in Eingriff stehende Blatt zu stauchen. Man kann aber auch den Antrieb bereits dann auskoppeln, wenn das Einzelblatt von dem Mitnehmer (Zange oder Haftbelag) erfaßt ist, wofür dem Fachmann bekannte Mittel zur Verfügung stehen.

In Verbindung mit der Rolle als Zufuhreinrichtung ist auch eine Halteeinrichtung nach Fig. 92-115 brauchbar.

Fig. 84 zeigt das Zusammenwirken eines als Zufuhrorgan dienenden Mitnehmers 460 in Form eines Hakens oder einer Leiste, der hinter die in Förderrichtung hintere Kante 462 eines abzutrennenden Blattes greift. Die Trenneinrichtung umfaßt einen Separator 20 mit einer Einlaufschräge 464.

Zwischen der Oberseite 466 des Separators und der Deckwand 266 eines Rahmenteils wird das Blatt 188 durchgeschoben. Damit der Eingriff zwischen Blatt und Mitnehmer sichergestellt ist, wirkt im Bereich unmittelbar vor (gesehen in Förderrichtung) dem Separator eine Andruckanordnung, die hier durch Pfeile symbolisiert ist, welche die Wirkrichtung der Anordnung zeigen. Je nach der Anzahl der Blätter im Stapel steht die Andruckanordnung weit unterhalb des von den Teilen 466, 266 begrenzten Durchlasses (unterbrochener Pfeil 468) oder, wenn nur wenige Blätter im Stapel sind, ziemlich dicht unter dem Mitnehmer (dicker Pfeil 470). Wenn das abgetrennte Blatt von dem Mitnehmer bis hinter die Rückseite des Separatorsteges geführt worden ist, kommt seine rückwärtige Querkante 472 frei und fällt entgegen der Wirkrichtung der Andruckanordnung nach unten oder wird von nicht dargestellten Hilfsmitteln dorthin verlagert, damit diese Kante wieder zwischen die Andruckanordnung und den Stapel eingeführt werden kann. Man erkennt, daß dies in der dargestellten Situation äußerst kompliziert sein dürfte, da diese Kante einen Weg etwa entlang der gestrichelten Bahn 474 zurücklegen müßte unter erheblicher Deformation des Blattes.

Fig. 85-91 zeigen, wie dieses Problem gelöst wird.

Das eine Rahmenteil hat die Form eines Gehäuses 12, das andere Rahmenteil ist ein Schieber 14, der relativ zum Gehäuse einen vorgegebenen Auszugshub durchlaufen kann ; der voll ausgezogene Zustand ist in Fig. 87 gezeigt. Der Mitnehmer 460 ist an die Gehäusedeckwand 266 angeformt. Die Andruckanordnung umfaßt zwei zueinander parallele doppelarmige Blattfedern 476. Diese Federn haben eine Konfiguration gemäß Fig. 90 : Ein schrägstehendes Langloch 478 sitzt auf einem länglichen Führungsstück 480, das am Gehäuseboden angeformt ist. Der fast genau unter dem Mitnehmer sich an den Stapel von unten anlegende Federarm 482 ist so kräftig ausgebildet, daß der Stapel auch bei vielen Blättern sicher an dem Mitnehmer in Anlage gehalten wird. Der andere Federarm 484 ist durch eine Ausnehmung 486 geschwächt und daher wesentlich weicher, da in der Ausgangsstellung nach Fig. 84 das zu wechselnde Blatt durch die Schräge 464 in den Durchlaß geleitet wird, auch wenn der Andruck nur gering ist.

Man erkennt in Fig. 90, daß der Separator 20 sich nicht über die gesamte Breite des Schiebers 14 erstreckt, an den er angeformt ist, sondern in der Mitte ausgenommen wurde, so daß beim Herausziehen des Schiebers 14 aus dem Gehäuse 12 die Federn der Andruckanordnung zwischen den beiden Separatorstegteilen hindurchlaufen können.

Von Beginn der Rahmenteilbewegung (Fig. 85) bis fast zu dem Vollauszug (Fig. 88) bleibt der Andruck, symbolisiert durch Pfeil 488, genau unter dem Mitnehmer erhalten. In der Position nach Fig. 87 laufen die Separatorstegteile 20 auf je einen auswärts gekehrten Finger 490 auf, und auf dem Weg des Schiebers aus der Position nach Fig. 87 in die nach Fig. 88 werden die beiden Blattfedern 476 längs des Führungsstücks 480 gleitend mitgenommen. Die Federn werden wegen der Schrägstellung des Langlochs 478 in Richtung der Schieberbewegung, aber auch etwas nach außen verlagert, bleiben aber im wesentlichen parallel zur Bewegungsrichtung.

Durch diese Verlagerung in Bewegungsrichtung ergibt sich auf der den Separatorstegteilen abgewandten Seite des Gehäuses in Fig. 88, daß das abgetrennte Blatt 188 von den Federarmen 484 nach oben an die Gehäusedeckwand 266 gepreßt wird, während seine Kante 462 freikommt und nach unten durchhängt oder von Hilfsmitteln abwärts gedrückt wird.

Wird nun, ausgehend von Fig. 87, der Schieber 14 wieder eingeschoben, so gelangt diese Kante 462 längs der Schrägfläche 386 der Separatorstegteile nach unten bis vor den Durchtritt 244 und in diesen hinein, während der Federarm 482 mit seinem freien Ende längs des untersten Blattes des Stapels gleitet, jedoch immer mit einem Vorlauf vor der Kante 462 von Blat 188 entsprechend der Verlagerung des Langlochsystems.

Die zweite Folge dieser Verlagerung, nämlich in Richtung nach außen, ist, daß die Separatorstegteile 20 auf die seitlich ausladenden Kufenabschnitte der Federarme 484 auflaufen und diese, da sie relativ weich sind, ohne Behinderung der Rahmenteilbewegungen nach unten drücken, so daß auch die hintere Kante des wieder unter die Andruckanordnung zu führenden Blattes freikommt.

Kurz vor Erreichen der Ausgangsposition läuft irgendein Teil des Schiebers 14, z. B. das Griffstück 46, auf die Federarme 482 bzw. die Finger 490 auf und drück die Blattfedern wieder entsprechend dem Langlochsystem in die Ausgangsposition zurück. Dabei gleitet das Ende des Federarms 482 sanft unter die Kante 462 des nunmehr dem Stapel unten wieder zugeführten Blattes.

Die Fig. 92 bis 107 stellen alternative Trenneinrichtungen dar.

Allen hier dargestellten Ausführungsformen ist gemeinsam, daß der Durchlaßspalt für den Eintritt des abzutrennenden Blattes durch einen mechanischen Anschlag auf den definierten Wert der lichten Weite festgelegt ist. Im weiteren Ablauf des Wechselzyklus kann die lichte Weite entweder ebenfalls durch ein System von Anschlägen aufrechterhalten werden, oder aber der Spalt schließt sich federnd über dem abgetrennten Blatt, so daß dieses selbst die lichte Weite begrenzt.

Fig. 92 zeigt im schematischen Längsschnitt einen Fotowechsler, und Fig. 93 ist ein zugehöriger Teilquerschnitt. Das erste Rahmenteil ist als Gehäuse 12 ausgebildet, an das ein erstes, stationäres Trennelement in Form einer Rippe 238 angeformt ist, die auf dem Gehäuseboden 218 sitzt. Das zweite Trennelement wird von einem Separatorsteg 20 gebildet, der an einem relativ zu dem Gehäuse verschieblichen und das zweite Rahmenteil bildenden Schieber 14 angeformt ist. Der Schieber 14 wird von einem Blattfedersystem 240, das im Gehäuse montiert ist, auf seiner ganzen Auszugslänge in Richtung Gehäuseboden gedrückt und damit in Richtung auf die Rippen 238.

Bei vollständig eingeschobenem Schieber stößt der Separatorsteg jedoch auf eine Stufe 68, die um reichlich eine Fotodicke höher ist als die Rippe 238, womit die lichte Weite des Spalts begrenzt ist. Nach Passieren der Kante 72 der Stufe 68 drücken die Federn 240 den Separatorsteg 20 bis auf die ihm zugekehrt liegende Oberfläche des vereinzelten Blattes 188. In Fig. 93 erkennt man noch die Holme 44 des Schiebers, zwischen denen sich der Separatorsteg erstreckt und an die er einstückig angeformt ist.

Die Ausführungsform nach Fig. 94 (Längsschnitt) und 95 (Teilquerschnitt) unterscheidet sich von der zuvor beschriebenen dadurch, daß nicht der gesamte Schieber 14, sondern nur ein Teil 242 des Separatorsteges 20 von einer im letzteren selbst untergebrachten Federanordnung 71 in Richtung Gehäuseboden 218 gedrückt wird, während der Schieber in dieser Richtung abgestützt ist. Die Funktion ist im übrigen dieselbe.

Die Ausführungsform nach Fig. 96 (Längsschnitt) und 97 (Querschnitt) unterscheidet sich von der nach Fig. 92, 93 dadurch, daß zwar auch hier der Schieber von dem Blattfedersystem 240 in Richtung Gehäuseboden 218 gedrückt wird, jedoch keine Stufe am Gehäuse vorgesehen ist; vielmehr sind an den Separatorsteg 20 beidseits des Blattdurchlaßspaltes 244 Schuhe 246 angeformt, die sich auf dem Gehäuseboden 218 abstützen und so ständig die lichte Weite des Spalts auf dem gewünschten Wert halten.

Die Ausführungsform nach Fig. 98 (Längsschnitt) und 99 (Teilquerschnitt) ist eine Modifikation der Ausführung nach Fig. 94 und 95. Zwischen den Schieberholmen 44 ist eine Halterung 248 angeformt, die ein stationäres Ende einer breitseitig eingespannten, elastischen Blattfeder 250 hält. Das abgerundete Ende der Blattfeder folgt der Stufe 68 und legt sich nach Passieren von deren Kante 72 auf das vereinzelte Blatt 188.

Die Ausführungsform nach Fig. 100 (Längsschnitt) und Fig. 101 (Teilquerschnitt) weist ebenfalls ein relativ zum Schieber 14 federnd auslenkbares Trennelement in Form eines Separatorsteges 20 auf, der in den Schieberholmen 44 um eine Welle 252 schwenkbar ist, jedoch von einer Federanordnung 240 mit seiner Kante 254 in Anlage an dem jeweils gegenüberliegenden Teil gehalten ist, also zunächst an der Stufe 68 und nach Passieren von deren Kante 72 an dem vereinzelten Blatt 188.

Die Ausführungsform nach Fig. 102 (Längsschnitt) und 103 (Teilquerschnitt) umfaßt als erstes Rahmenteil ein Gehäuse 12, als zweites Rahmenteil einen Schieber 14. Zwischen den Holmen 44 des Schiebers ist eine Fußplatte 256 eingefügt, die ein erstes Trennelement bildet. Das zweite Trennelement ist ein relativ zum Schieber in Richtung Gehäuseboden 218 von einer Federanordnung 240 vorgespannter Separatorsteg 20, der an Schienen 258 geführt ist und an seinem unteren Ende beidseits des zu vereinzelnden Blattes Anschlagschuhe 246 aufweist.

Die Fig. 104 (Längsschnitt) und 105 (Teilquerschnitt) zeigen eine Ausführungsform, bei der das erste Rahmenteil von einem Schieber 14 gebildet ist, der relativ zu einem Gehäuse 12 als zweiten Rahmenteil hin- und herverschieblich ist. Es versteht sich, daß hier wie auch bei allen anderen Ausführungsformen der maximale Hub des Schiebers durch Anschläge begrenzt ist, die aber der Klarheit wegen nicht gezeichnet sind. — An das Gehäuse 12 ist einstückig als erstes Trennelement ein Separatorsteg 20 angeformt, dem gegenüber ein zweites Trennelement in Form einer angelenkten (Gelenk 260) Platte 264 vorgesehen ist, die von einer Feder 240 in Anlage an seitlichen Stützfortsätzen 262 des Separatorsteges gedrückt wird. Die Platte 264 kann also fertigungsbedingte Toleranzen auffangen, während die Spalthöhe stets durch die Höhe der Fortsätze 262 festgelegt ist, die praktisch unveränderlich ist.

Die Fig. 106 (Längsschnitt) und 107 (Teilquerschnitt) zeigen eine Ausführungsform, bei der das Gehäuse 12 das zweite Rahmenteil bildet und ein (nicht gezeichneter) Schieber das erste Rahmenteil. Am Gehäuse ist ein Separatorsteg 20 gleitbeweglich quer zur Stapelhauptebene geführt und steht unter Vorspannung durch eine Federanordnung 240. Mit seinen Stützfortsätzen 262 definiert er die Spalthöhe, die auf der anderen Seite durch die Gehäusedeckwand 266 definiert wird.

In den Ausführungsbeispielen nach Fig. 1 bis 10 und 13 bis 33 sind einander ähnliche, auf demselben Prinzip beruhende Halteeinrichtungen vorgesehen, mittels denen das abgetrennte Blatt am ersten Rahmenteil gehalten ist. In Verbindung mit der Trenneinrichtung gemäß der vorliegenden Erfindung können aber auch abweichend gestaltete Halteeinrichtungen verwendet werden, die in den Fig. 108 bis 131 illustriert sind und nachstehend erläutert werden.

Fig. 108 bis 110 beziehen sich auf ein Ausführungsbeispiel. Sie sind weitgehend schematisiert und auf das Wesentliche beschränkt.

Das erste Rahmenteil ist als Gehäuse 12 ausgebildet, das zweite Rahmenteil als Schieber 14. An der Deckwand des Gehäuses 12 ist ein Mitnehmer in Form einer Leiste oder eines Hakens 460 angebracht, zum Beispiel angeformt, und die Längsholme 44 des Schiebers sind einerseits durch dessen Frontblocks 46, andererseits durch einen Separatorsteg 20 quer miteinander verbunden. An der Gehäusebodenwand 268 ist eine erste Andruckfeder 500 befestigt, die das dem Schieberfrontblock 46 nähere Ende des Stapels 182 an die Gehäusedeckwand drückt — die z. B. ein Sichtfenster aufweisen kann —, und eine zweite Andruckfeder 502 ist ebenfalls am Gehäuseboden befestigt und drückt den Stapel nahe seinem dem Separatorsteg zugekehrt liegenden Ende nach oben.

Auf der dem Stapel abgewandten Seite des Separatorstegs ist um eine Achse 504 schwenkbar ein Hebel 506 angelenkt, der von einer Feder 508 in die in Fig. 109 dargestellte Position vorgespannt ist. Die Schrägfläche 510 am freien Ende des Hebels 506 gelangt beim Einschub des Schiebers in das Gehäuse in Kontakt mit der ihm zugekehrten Seite des Separatorstegs und wird durch die Keilwirkung nach unten gedrückt in die in Fig. 108 dargestellte Position. Die der Gehäusedeckwand zugewandte Seite des Hebels 506 trägt nahe ihrem freien Ende einen Haftbelag 26.

Die Vorrichtung arbeitet wie folgt:

Wenn, ausgehend von der Ruheposition nach Fig. 108, der Schieber 14 aus dem Gehäuse 12 herausgezogen wird, trifft der Mitnehmer 460 auf die ihm zugekehrt liegende Kante des abzutrennenden Blattes 188 und schiebt dieses in Richtung Separatorsteg. Dies ist dann möglich, wenn der Stapel von der Feder 500 hinreichend kräftig in Anlage an der Deckwand gehalten wird. Sobald der Separator sich auswärts bewegt, beginnt der Hebel 506 unter der Wirkung seiner Vorspannfeder nach oben zu schwenken, wobei dies deshalb störungsfrei geschehen kann, weil die ihm zugekehrt liegende Seite des Separatorstegs im Bereich des Haftbelags eine entsprechend eingetiefte Bahn (gestrichelt angedeutet) aufweist.

Sobald der Hebel die in Fig. 109 angedeutete Position erreicht hat, klemmt er das Blatt 188 gegen die Gehäusedeckwand ; wie insbesondere in Fig. 110 erkennbar, ist nämlich der Mitnehmer nicht in der Lage, den gesamten Hub über das Blatt am Gehäuse festzuhalten, weil die Feder 500, auf die der Separatorsteg aufläuft, nach unten gedrückt wird, so daß das in Förderrichtung hintere Ende des Stapels lose wird. Auf der dem Stapel abgewandten Seite des Separatorsteges ist dieser noch mit Keilabschnitten 512 versehen, deren Neigung so bemessen ist, daß beim Wiedereinschub des Schiebers die Federenden der Feder 502 nach unten gedrückt werden und unter dem Separator hindurchgleiten können.

Ein weiteres Ausführungsbeispiel ist in Fig. 111 bis 113 gezeigt.

Fig. 111 ist ein Teillängsschnitt, Fig. 112 ist ein Horizontalschnitt und Fig. 113 ist ein Querschnitt durch die entsprechenden Ebenen der Vorrichtung.

Das erste Rahmenteil hat die Form eines Gehäuses 12, das zweite die Form eines Schiebers 14. Die Trenneinrichtung in Form des Separators 20 überspannt quer die Schieberholme 44. Im Ruhezustand, dargestellt in Fig. 113, drückt der Separator auf die Steuerflügel 268 zweier Hebel 270, die um parallel zur Auszugsrichtung sich erstreckende Achsen schwenkbar sind, die mit 272 bezeichnet sind. An dem den Flügeln 268 abgewandten Enden der Achsen befinden sich Arme 274, die aufeinander zu gerichtet sind. Die Hebel stehen unter Vorspannung durch eine Blattfeder 276 derart, daß die Arme 274 die Tendenz haben, in Richtung des eingelegten Blattstapels zu schwenken.

Wenn der Schieber eine Hublänge zurückgelegt hat, die ausreicht, das Einzelbild mittels des Mitnehmers (nicht gezeigt) unter dem Durchlaßspalt des Separators durchzuschieben, gibt der Separator die Flügel 268 allmählich frei, und die Arme 274 legen sich von unten an das nun unterste Blatt des Reststapels und hinter die Kante des im Gehäuse zurückgebliebenen Blattes, so daß dieses mit Sicherheit im Gehäuse zurückbleibt, wahrend der Separator den Reststapel aus dem Gehäuse heraustransportiert. Die Vorspannung der die Arme 274 hebenden Feder kann so groß sein, daß deren freie Enden sich nicht nur an den Reststapel anlegen, sondern diesen noch ein Stück anheben : So kann das Einzelblatt nicht von den Armen abrutschen. — In der Endstellung des Schiebers kann der Separator gerade die Arme 274 gegen die Federkraft nach unten drücken, da er eine entsprechend abgeschrägte Form hat und als Keil wirkt. — Beim Rückhub kommt der Reststapel mit dem Separator und dem Schieber zurück und legt sich auf die Arme. Erst wenn der Separator auf die Flügel aufgleitet, werden die Arme wieder in die Ausgangsposition umgelegt.

Fig. 114-116 zeigen in weitgehend schematisierter seitlich gesehener Schnittdarstellung ein weiteres Ausführungsbeispiel mit den Rahmenteilen in der zusammengeschobenen Ruheposition. Das erste Rahmenteil hat die Form eines Schiebers 14, der aus dem zweiten Rahmenteil in Form eines Gehäuses 12 herausziehbar ist. Im Gehäuse ist stationär die Trenneinrichtung in Form eines Separatorstegs 20 vorgesehen, und eine ebenfalls stationär im Gehäuse angeordnete Federanordnung 400 drückt den Stapel 182 nach oben. Die dem Separatorsteg nächstliegende Endfläche des obersten Blattes liegt unter einem Haftbelag 26, der auf einer ersten Zangenbacke 520 angeordnet ist. Diese Backe ist an dem Schieber elastisch nach oben auslenkbar angeformt. Sie trägt ferner ein Gelenk 504, an dem eine zweite Backe 506 angelenkt ist, die in der Ruheposition auf der dem Stapel abgewandten Seite des Separators, durch Auflaufen auf Kurve 522, entgegen der Vorspannung einer Feder 508, nach unten gedrückt worden ist.

Zieht man jetzt den Schieber aus dem Gehäuse heraus, so nimmt der Haftbelag das oberste Blatt 188 des Stapels, das von der Federanordnung 400 in Anlage an ihm gehalten wird, mit über den Separatorsteg. Zugleich kommt die zweite Backe 506 vom Steg 20 frei und schließt sich unter Wirkung der Vorspannfeder 508, bis das vom Haftbeleg mitgenommene Blatt zwischen den Zangenbacken fest eingeklemmt liegt. Beim Zurückschieben gelangt die dem Separator zugekehrte Kante des Blattes 188 vor den fußseitigen Durchlaß 310 der Trenneinrichtung, und die Zange schiebt es durch diesen Durchlaß, bis sie wieder vermittels Kurve 522 geöffnet wird. Damit der Haftbeleg nicht über die Oberseite des Separatorstegs schleift, wenn die erste Backe ihn überläuft, wird sie längs einer Steuernut 524 an ihm vorbeigeführt und springt dann wieder in Arbeitsposition.

Auch die zweite Backe kann mit einem Haftbelag 26 versehen sein, doch ist dann die ihr zugewandte Seite des Separatorstegs mit einer eingetieften Nut — gestrichelt angedeutet — zu versehen, damit auch dort kein unmittelbarer Kontakt des Haftbelages stattfinden kann.

Fig. 117 und 119 zeigen im Längsschnitt den Ruhezustand bzw. den teilweise herausgezogenen Zustand einer Vorrichtung gemäß der Erfindung, bei der das erste Rahmenteil von einem Gehäuse 12 und das zweite von einem Schieber 14 gebildet sind. Man erkennt eine Federanordnung 24/32 und den Separatorsteg 20 als Trenneinrichtung.

Zu Beginn des Auszugshubes des Schiebers führt die Zufuhreinrichtung das im Gehäuse unterste Blatt 188 unter dem Separatorsteg durch, hinter dem eine schwenkbare Backe 278 um ein Gelenk 289 drehbar angeordnet ist. Eine Feder 282 spannt die Backe 278 in die in Fig. 119 gezeichnete Position vor, wie man der vergrößerten Darstellung nach Fig. 118 entnimmt. Der Separatorsteg hat die Backe bei eingeschobenem Schieber in die inaktive Position infolge Keilwirkung beim Auflaufen umgelegt. Die Freigabe der Backe kann automatisch beim Auszug erfolgen, doch ist dies nicht im einzelnen dargestellt.

Fig. 120, 121 und 122 zeigen im schematisierten Längsschnitt drei Phasen des Auszugshubes bei einer weiteren Ausführungsform. Die Zufuhr des abzutrennenden Blattes erfolgt mittels des Mitnehmers, nämlich des Hakens 22, der an dem Federarm 24 sitzt. Gehäuse, Schieber und Separatorsteg entsprechen den vorher geschilderten Ausführungen. Der als zweites Rahmenteil dienende Schieber 14 koppelt sich nach einer gewissen Auszugslänge mit einem Bügel 284, der längsverschieblich in dem das erste Rahmenteil bildenden Gehäuse 12 angeordnet ist. An dem Bügel ist eine Einsenkung 286 unterhalb einer Leitfläche 288 angeformt.

Sobald der Mitnehmer, infolge eines ersten Hubes des Schiebers, die führende Kante des abzutrennenden Blattes 188 unter dem Separator 20 durchgeschoben hat, beginnt der Schieber auch, nun gekoppelt mit dem Bügel 284, diesen in Auszugsrichtung mitzunehmen, mit der Folge, daß diese Kante des abgetrennten Blattes in die Einsenkung 286 gelangt und dort von dem Arm 32 der Federanordnung festgeklemmt wird. Dieser Federarm bildet eine Backe einer Zangenanordnung, und die auf der anderen Seite der festgeklemmten Kante des Blattes befindliche Randfläche der Einsenkung bildet die andere Backe der Zangenanordnung. Dieser Zustand bleibt, bis die hintere Kante des abgetrennten Blattes vom Separator freikommt.

Schiebt man nun den Schieber wieder ein, so nimmt er den Bügel 284 wieder mit einwärts in das Gehäuse, wobei die Einsenkung vom abgezogenen Blatt freikommt, so daß der freie Arm 32 der Federanordnung die von ihm abgestützte Kante des Blattes längs der Leitfläche·288 ruckfrei nach oben gleiten läßt.

Fig. 107 zeigt weitgehend schematisiert im Teillängsschnitt eine Ausführungsform, bei der der am Schieber 14 angebrachte Separatorsteg 20 infolge Herausziehens des Schiebers aus dem Gehäuse 12 die an diesem angebrachte Blattfeder 32 allmählich freigibt, so daß sich deren freies Ende, versehen mit einem Haftbelag 290, an die Blattkante 292 anlegt und diese gegen die Gehäusedeckwand 266 anpreßt, welche dann die andere Backe im Zusammenwirken mit der von der Feder gebildeten ersten Backe bildet.

Die beschriebenen Zangenanordnungen sind nur einige von einer Vielzahl möglicher Ausführungsformen ; so könnte man anstatt an der Führungskante des Blattes zu klemmen auch an einer oder beiden Seiten mit ähnlichen Zangen angreifen, oder man könnte nicht die Dicke, sondern die Breite des Blattes zwischen den Backen einspannen.

Fig. 124 stellt eine Abwandlung der Zangenanordnung nach Fig. 123 dar : Der Haftbelag 290 befindet sich auf einer Andruckanordnung, bestehend aus einer den Haftbelag tragenden Platte 294, die gelenkig am Ende eines Hebels 296 sitzt. Der Hebel ist an den Gehäuseboden 218 angelenkt. Eine Feder 298 drückt den Haftbelag an das vereinzelte Bild.

Fig. 125 bis 127 beziehen sich auf einen anderen Typ der Halteeinrichtung für das zu vereinzelnde Bild.

Fig. 125 zeigt in einem schematisierten Längsschnitt eine Vorrichtung gemäß der Erfindung, Fig. 126 ist ein Teilquerschnitt zu dieser Figur, und Fig. 127 zeigt einen Teilhorizontalschnitt.

Während in dem unter Fig. 1 bis 10 ausführlich beschriebenen vollständigen Ausführungsbeispiel die Halteeinrichtung ein erstes Klemmelement in Form einer mit dem Separatorsteg mitlaufenden Rolle, ein zweites Klemmelement in Form des stationär am ersten Rahmenteil (Gehäuse) befestigten Haftbelags und eine Federanordnung in Form der den Schuh gegen den Haftbelag drückenden Feder umfaßte, sind hier die Klemmelemente in kinematischer Umkehr so ausgebildet, daß der Haftbelag am Umfang einer Walze 300 vorgesehen ist, die über eine Zahnstange 302 und ein mit der Walze verkeiltes Ritzel 304 beim Auszug des Schiebers 14, der das zweite Rahmenteil bildet, zum Umlauf angetrieben ist. Die Walze hat einen Durchmesser gleich dem Teilkreis des Ritzels, so daß sie sich auf dem Einzelblatt mit einer Umfangsgeschwindigkeit abwälzt, die gleich der Auszugsgeschwindigkeit des Schiebers ist. Dabei wird das Einzelblatt an den Boden 218 des ersten Rahmenteils in Form des Gehäuses 12 gepreßt und in diesem festgehalten.

Die Vorrichtung nach Fig. 128 bis 130 zeigt eine weitere Ausführungsform der Halteeinrichtung gemäß der Erfindung. Das Einzelblatt 188 gelangt hinter dem Separatorsteg 20 in den Arbeitsspalt zwischen zwei Walzen 300, 306, von denen mindestens eine in derselben Art angetrieben ist wie bei Fig. 125 bis 127 beschrieben. Die andere Walze kann auch direkt von der ersten angetrieben sein, oder aber durch Reibung mitgenommen werden. Der Anpreßdruck wird dadurch erzeugt, daß eine der Walzen, vorzugsweise die nicht angetriebene, in sich federnd ausgebildet ist und ihre Welle etwas näher an die andere Walze herangerückt ist als dem Durchmesser eigentlich entsprechen würde. Der Querschnitt durch eine solche federnde Walze ist in Fig. 130 dargestellt, und man erkennt, daß Ausnehmungen in sich geschlossen sich mäanderförmig rings um die Nabe erstrecken, so daß immer genug Federweg zur Verfügung steht.

Demgemäß übernimmt hier die zweite Walze 306 die Rolle des in Fig. 1 bis 10 bzw. 13 bis 33 schienenförmig im ersten Rahmenteil angeordneten Klemmelements, wofür sie nicht an dem ersten, sondern an dem den Stapel haltenden zweiten Rahmenteil drehbar gelagert ist.

Fig. 131 zeigt eine im Gehäuse 12, das hier das zweite Rahmenteil ist, drehbar gelagerte Walze 300, die über eine in den Schieberholmen 44 angebrachte Zahnstange (nicht gezeigt) und ein mit der Walze verkeiltes Ritzel (nicht gezeigt) zu einer Umfangsgeschwindigkeit angetrieben wird, die gleich ist der Auszugsgeschwindigkeit des Schiebers. Auf diese Weise wird das vereinzelte Bild 188 hinter dem Separatorsteg 20 erfaßt, gegen die Gehäusedeckwand 266 gepreßt, an der es entlang schleift, und in der äußeren Schieberendlage freigegeben. — Es versteht sich, daß als Zufuhreinrichtung jeweils eine der in Fig. 1 bis 33 sowie 51 bis 91 dargestellten Anordnungen vorgesehen ist, ohne daß dies jedesmal mit gezeichnet wurde.

Die Fig. 132 bis 136 illustrieren die Maßnahmen, die getroffen werden können, um die Zufuhr auch dann sicherzustellen, wenn der Stapel Blätter mit erheblichen Abmessungsunterschieden in Richtung der Wechselbewegung enthält.

Fig. 132 zeigt im Längsschnitt die Situation nach einem Wechselzyklus. Ein am Schieber 14 vorgesehener Anschlaq hat die dem Separator 20 abgewandten Kanten der Blätter ausgerichtet, so daß ihre unterschiedlich weit aus dem Stapel herausragenden Enden — bzw. in diesen zurückstehenden Endkanten — die in Fig. 132 angedeutete Konfiguration bilden. Der Fall, daß über einem kürzeren Blatt ein längeres Blatt liegt, ist in Fig. 133 noch einmal gesondert gezeichnet, und Fig. 135 stellt schematisch dar, was geschehen könnte, würde nicht für einen Ausgleich gesorgt: Das zweitunterste Blatt legt sich mit seiner frei vorstehenden Kante über die Endkante des untersten Blattes, und bei Auflaufen des Separatorsteges 20 wird die in Fig. 135 gezeigte Situation eintreten, bei der der Wechselvorgang gestört ist (« Doppelblattwechsel »). Um dies zu verhüten, sind Mittel vorgesehen, um zunächst einmal die Kanten der Blätter auf der dem Separatorsteg zugekehrten Seite des Stapels etwas auszurichten. Hierzu dient zunächst ein « Leerhub » des Separatorsteges 20, bis er die Stufe 68 überläuft. Während dieses Hubes erfolgt also noch keine Trennung. Gleichwohl werden die dem Separatorsteg abgewandten Endkanten der Blätter bereits auf diesem Leerhubweg von einer ersten Kontaktfläche 230 abgestützt. Blätter, die Übermaß haben, werden vom Separatorsteg zurückgedrückt und springen von der Kontaktfläche 230 ab; Blätter mit Untermaß bleiben noch auf der ersten Kontaktfläche. Die von dieser abgesprungenden Blätter werden jedoch von einer zweiten Kontaktfläche 22 aufgefangen, die in einem Abstand 232 hinter der ersten vorgesehen ist, der der höchstzulässigen Längendifferenz der Blätter entspricht. In Fig. 136 ist das kürzeste Blatt durch Pfeil 234, das längste durch Pfeil 236 symbolisiert. Wenn der Separatorsteg seinen Leerhub durchlaufen hat, sind also die kürzeren Blätter von der ersten, die längeren von der zweiten Kontaktfläche abgestützt, so daß sich im Bereich der dem Separatorsteg zugekehrten Blattkanten etwa die in Fig. 134 gezeichnete Situation ergibt. — Es genügt dabei, wenn der Längenausgleich nur ungefähr erfolgt, so daß die Blätter nicht mehr biegsam genug sind, um die Situation nach Fig. 135 eintreten zu lassen.

Ebenso, wie die Zufuhreinrichtung und die Halteeinrichtung in verschiedenster Weise ausgebildet sein können, um mit der Trenneinrichtung gemäß der Erfindung zusammenzuwirken, kann auch die Leiteinrichtung von der Ausführung gemäß Fig. 1 bis 10 bzw. 13 bis 33 abweichen. Dies wird unter Bezugnahme auf Fig. 34 bis 50 verdeutlicht.

In den zuvor beschriebenen Ausführungsbeispielen wurde die Leiteinrichtung hinsichtlich ihrer verschiedenen Aspekte nur am Rande diskutiert. Gerade für Fotoabzüge jedoch bietet auch sie gewisse Komplikationen. Da das vereinzelte Blatt unter Umständen ziemlich stark gewölbt sein kann, erweist es sich als zweckmäßig oder sogar als unumgänglich, gewisse Vorsichtsmaßregeln bei der Auslegung der Leiteinrichtung zu beachten. So muß das vereinzelte Foto wieder durch einen Durchlaß der Trenneinrichtung auf die andere Stapelseite geführt werden, wenn auch dieser Durchlaß viel weniger kritisch ist als der Abtrenn-Durchlaß. — Im Prinzip sind alle Konstruktionen, die für die Zufuhr verwendbar sind, auch für die Rückführung des Einzelblattes anpaßbar. Im allgemeinen aber genügt es, das Foto von seiner hinteren Kante aus zu schieben, wobei es gegebenenfalls noch festgeklammert wird. Nachstehend werden einige Ausführungsformen kurz beschrieben.

Hinsichtlich des erwähnten Rücklauf-Durchlasses ist Vorsorge dafür zu treffen, daß der Reststapel diesen Durchlaß nicht versperrt; diese Gefahr besteht besonders bei Stapeln stark gewölbter Fotoabzüge. — Oben wurde unter Bezugnahme auf Fig. 1 bis 8 erläutert, daß man dafür am ersten Rahmenteil Niederhalte-Fortsätze anbringen kann. An deren Stelle kann man aber auch am ersten oder am zweiten Rahmenteil ein den Rückführ-Durchlaß durchgreifendes Element vorsehen, welches nach beendetem Wechselzyklus wieder zurückgezogen wird.

Ferner ist dafür zu sorgen, daß der Rückführdurchlaß bei Beginn des Wechselzyklus gesperrt ist, damit nicht von beiden Seiten des Stapels je ein Blatt abgezogen wird. Oben wurde unter Bezugnahme auf Fig. 1 bis 8 erläutert, daß man dafür kammartig ineinandergreifende Fortsätze am Separatorsteg einerseits, am ersten Rahmenteil andererseits verwenden kann; an deren Stelle kann man aber auch zum Beispiel eine aus dem Separatorsteg ausfahrende gesteuerte Blockiereinrichtung vorsehen.

Schließlich sind in Fig. 1 bis 10 einerseits, Fig. 13 bis 33 andererseits jeweils Mittel dargestellt, um die Entnahme des gesamten Stapels aus der Vorrichtung zu ermöglichen. In Fig. 137 bis 143 sind Varianten und auch prinzipiell anders wirkende Mittel für diesen Zweck dargestellt, die nachstehend erläutert werden.

Fig. 137 zeigt im Teillängsschnitt eine Ausführungsform, bei der die Trenneinrichtung wahlweise durch manuellen Eingriff gesperrt werden kann. Es sei angenommen, daß eine Trenneinrichtung nach Fig. 92, 93 vorliegt, doch ist hier vom Schieber nur der Separatorsteg 20 gezeichnet. Die Stufe 354 ist nicht stationär, wie in Fig. 92 und 93, sondern in Schiebebewegungsrichtung verschieblich, wobei die Verschiebung von Hand mittels einer durch den Gehäuseboden 218 ragende Taste erfolgen kann. In der mit ausgezogenen Linien dargestellten Position entspricht dies der Fig. 92 (Normalbetrieb). Wird jedoch die Taste mit der Stufe nach rechts verlagert, so greift das keilartig ausgebildete Ende 356 unter die ihm zugekehrt liegende Kante des im Stapel untersten Blattes 188 und hebt diese auf die Stufe 354, so daß der Durchlaßspalt unter dem Separatorsteg « geschlossen » ist.

Die Stapelentnahmefunktion ist auch bei der Ausführungsform nach Fig. 138 (Teillängsschnitt) manuell steuerbar. Es sei angenommen, daß als Ausgangskonstruktion die nach Fig. 96 und 97 vorgesehen ist.

Der Separatorsteg 20 hat eine Durchbrechung, in der verschieblich ein Sperrklotz 358 angeordnet ist. In der mit ausgezogenen Linien dargestellten Position ist der Wechsler auf Wechselfunktion geschaltet, wobei der Klotz mittels Nocken 360 in einer entsprechenden Öffnung der Durchbrechung einrastet. Wird er durch Druck auf einen Knopf 87, der federnd an einer angeformten Feder 362 sitzt und mit dem Gehäuse 12 verbunden ist, in die mit gestrichelten Linien dargestellte Sperrposition verlagert, in welcher er ebenfalls mittels Nocken 360 verrastbar ist, so wird der Durchtrittsspalt blockiert, und alle Blätter des Stapels werden heraustransportiert. Läuft dann der Sperrklotz auf einen an den Gehäuseboden 218 angeformten Anschlag 364 auf, wird er wieder in seine Ruheposition zurückgeschoben, und der Wechsler ist wieder auf Funktion « Wechseln » geschaltet.

Auch bei der Fig. 139 (Teillängsschnitt), Fig. 140 (Teilquerschnitt) und Fig. 141 (Teildraufsicht) ist eine manuelle Umschaltbarkeit zwischen « Wechseln » und « Stapelentnahme » vorgesehen. Im Gehäuse 12 ist ein einstückiges Bauteil 85 in Längsrichtung verlagerbar durch Druck auf die Taste 87, wobei die mit der Taste verbundene Schiene auf Rampen 89 aufläuft und dabei das gesamte Bauteil 85 hebt; hierfür ist im Gehäuse ein Freiraum 366 für die Taste vorgesehen. Durch Heben der Schiene legt sich diese von unten an die den Durchlaßspalt begrenzende Kante des Separatorsteges 20 an. Von diesem Ende der Schiene stehen noch Nasen 91 nach oben, die — wenn der Separatorsteg unter Mitnahme des Gesamtstapels die Nasen überläuft — nach unten ausfedern können. Wird der Separator wieder zurückgeschoben, trifft er auf die Nasen und verlagert damit das gesamte Bauteil 85 in seine Ausgangsstellung, womit auch die Bahn für den Separator wieder freigegeben ist, der Spalt für die Abtrennung des Blattes wieder offen ist und somit der Wechsler wieder in der « Wechselfunktions »-Stellung ist.

Fig. 142 und 143 zeigen im Teillängsschnitt bzw. in Teildraufsicht eine weitere Ausführungsform eines für die Stapelentnahme umschaltbaren Trennsystems. Es sei angenommen, daß im Prinzip die Bauart nach Fig. 94, 95 vorliegt. — Die in Fig. 92 mit 68 bezeichnete Stufe, die ja auch in Fig. 94 vorhanden ist, ist sehr schmal und dafür doppelt ausgeführt. Das den Durchtrittsspalt begrenzende Teil 69, das federnd im Separatorsteg 20 angeordnet ist, hat eine Aussparung gegenüber der Lücke zwischen den beiden Stufen 68. — An den Gehäuseboden 218 ist eine eindrückbare, zurückfedernde Taste 87 angeformt, die einen Blockierschuh 368 anhebt, der mit einem frontseitigen Fortsatz den Durchtrittsspalt sperrt, indem er sich vor die Unterkante des Separatorsteges legt, und mit einem rückseitigen Fortsatz 370 hinter den Separatorsteg greift. Beidseits dieses letztgenannten Fortsatzes drücken Blattfederchen 372 den Blockierschuh in Richtung Gehäuseboden. — Wird auf die Taste 87 gedrückt und der Blokkierschuh in Mitnahmeverbindung mit dem Separatorsteg gebracht, wobei die Trennfunktion blockiert ist, und nun am Schieber gezogen, so wird der Blockierschuh einfach mitgenommen. Beim Wiedereinschub drücken die Federchen 372 den Schuh dann wieder in die Freigabeposition, die muldenförmig eingetieft hinter der Auflauframpe 374 vorgesehen ist.

Bei den insoweit behandelten Ausführungsfomen muß der Benutzer eingreifen, um die Entnahme vornehmen zu können. Bei der folgenden Ausführungsform ist die Anordnung so getroffen, daß der aus dem Gehäuse herausziehbare Schieber das zweite Rahmenteil ist und daher den Reststapel mit herausbringt. Im Gehäuse bleibt nur ein einziges Blatt zurück. Nimmt nun der Benutzer den Reststapel, der ihm ja frei zugänglich ist, heraus und schiebt den Schieber wieder ein, so kann er erneut den Schieber ziehen, der dann das im Gehäuse verbliebene Blatt mitbringt. Mit anderen Worten ist der Wechselmechanismus erst dann funktionsfähig, wenn die Vorrichtung mindestens zwei Blätter enthält.

**Patentansprüche**

1. Vorrichtung zum zyklischen Umschichten eines Stapels rechtekkiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen:

eine Trenneinrichtung (20) zum Abtrennen des Einzelblattes vom Stapel,

eine Zufuhreinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, und

eine Leiteinrichtung (80) zum Führen des abgetrennten Einzelblattes zwecks Rückführung auf die andere Seite des Reststapels, wobei die Leiteinrichtung Führungsmittel (79) umfaßt, die das in der äußeren Endlage der zweiten Halteeinrichtung zugewandte Ende des Einzelblattes (188) quer zur Rahmenteilbewegungsrichtung vor einen Rückführdurchlaß (310) fördern, und wobei die Vorrichtung ferner eine Andruckeinrichtung (24) aufweist zum Andrücken des Stapels gegen ein in einem der Rahmenteile vorgesehenes Sichtfenster (35) in der inneren Endlage, welche Andruckeinrichtung bezüglich des genannten Endes des Einzelblattes in der äußeren Endlage inaktiviert ist, dadurch gekennzeichnet, daß die Führungsmittel von der Andruckeinrichtung (24) getrennt wirkende Führungselemente (79 in Fig. 13) umfassen.

2. Vorrichtung zum zyklischen Umschichten eines Stapels rechteckiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen :

eine Trenneinrichtung (20) zum Abtrennen des Einzelblattes vom Stapel,

eine Zuführeinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, und

eine Leiteinrichtung (80) zum Führen des abgetrennten Einzelblattes zwecks Rückführung auf die andere Seite des Reststapels, dadurch gekennzeichnet, daß die Leiteinrichtung am zweiten Rahmenteil (14) angeordnete Führungsmittel (79 in Fig. 39 und 41) umfaßt.

3. Vorrichtung zum zyklischen Umschichten eines Stapels rechteckiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen :

eine Trenneinrichtung (20) zum Abtrennen des Einzelblattes vom Stapel,

eine Zuführeinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, und

eine Leiteinrichtung (80) zum Führen des abgetrennten Einzelblattes zwecks Rückführung auf die andere Seite des Reststapels, dadurch gekennzeichnet, daß die Leiteinrichtung einen eine Querkante des Einzelblattes untergreifenden Keil (318 in Fig. 39-41, 350 in Fig. 48) umfaßt.

4. Vorrichtung zum zyklischen umschichten eines Stapels rechtekkiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen :

eine Trenneinrichtung (20) zum Abtrennen des Einzelblattes vom Stapel,

eine Zuführeinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, die einen Separatorsteg umfaßt, und

eine Leiteinrichtung (80) zum Führen des abgetrennten Einzelblattes zwecks Rückführung auf die andere Seite des Reststapels, wobei ein Abzugsdurchlaß und ein Rückführdurchlaß für das Einzelblatt beidseits des Separatorsteges vorgesehen sind, dadurch gekennzeichnet, daß Mittel (350 in Fig. 48) zum Sperren mindestens eines der Durchlässe gegen den Durchtritt eines Blattes in falscher Richtung vorgesehen sind.

5. Vorrichtung zum zyklischen Umschichten eines Stapels rechteckiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen :

eine Trenneinrichtung (20) zum Abtrennen des Einzelblattes vom Stapel,

eine Zuführeinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, und

eine Leiteinrichtung (80) zum Führen des abgetrennten Einzelblattes zwecks Rückführung auf die andere Seite des Reststapels, dadurch gekennzeichnet, daß die Leiteinrichtung Führungsmittel umfaßt mit mindestens einem am ersten Rahmenteil (12) angelenkten Hebel (270, 274 in Fig. 111) mit einem Steuerarm (268), der beim Zusammenschieben der Rahmenteile durch Auflaufen eines am zweiten Rahmenteil angeordneten Steuergliedes (20) gegen die Kraft einer Vorspannfeder (276) inaktivierbar ist, und daß der Steuerarm oder das Steuerglied eine Steuerfläche aufweisen, mittels der der Inaktivierungsweg des Hebels auf einen vorgegebenen Teilhub der Rahmenteilbewegung verteilt wird.

6. Vorrichtung zum zyklischen Umschichten eines Stapels rechteckiger Blätter, insbesondere eines Stapels von Fotoabzügen, mit einem ersten (12) und einem zweiten (14) Rahmenteil, die relativ zueinander und parallel zur Stapelhauptebene zwischen einer inneren Endlage und einer äußeren Endlage bewegbar sind, und mit Mitteln, die bei einer Auseinanderbewegung der Rahmenteile ein Einzelblatt (188) an einem Stapelende abnehmen und beim Zusammenführen der Rahmenteile am andern Stapelende zufügen, welche Mittel umfassen:

eine Trenneinrichtung (20) zum Abtrennen des Einzelblattes vom Stapel,

eine Zuführeinrichtung (22) zum Zuführen von Blättern zur Trenneinrichtung,

eine erste Halteeinrichtung (32) zum Halten des abgetrennten Einzelblattes im ersten Rahmenteil,

eine zweite Halteeinrichtung zum Halten des Reststapels im zweiten Rahmenteil, und

eine Leiteinrichtung (80) zum Führen des abgetrennten Einzelblattes zwecks Rückführung auf die andere Seite des Reststapels, dadurch gekennzeichnet, daß die Leiteinrichtung am ersten Rahmenteil (12) angeordnete Führungsmittel (336 in Fig. 44) und ein zwischen diesen und dem zweiten Rahmenteil (14) relativ zum ersten Rahmenteil verlagerbares Übertragungsorgan (334) umfaßt für das Aktivieren der Führungsmittel (336) in einer vorgegebenen Relativlage der Rahmenteile.

7. Vorrichtung zum zyklischen Umschichten eines Stapels im wesentlichen rechteckiger Blätter, umfassend ein erstes (12) und ein zweites (14) Rahmenteil, von denen eines ein Sichtfenster aufweist und die relativ zueinander und parallel zur Sichtfensterebene zwischen einer inneren Endlage und einer äußeren Endlage hinundherverschieblich sind, und Mittel zum Abziehen eines Einzelblattes (188) von einem Ende eines eingelegten Stapels beim Auseinanderziehen der Rahmenteile durch einen Abzugsdurchlaß und zum Rückführen des Einzelblattes (188) zum andern Stapelende durch einen Rückführdurchlaß (310) beim Zusammenschieben der Rahmenteile, wobei die Mittel mindestens eine Leiteinrichtung (80) umfassen, die ein abgezogenes Einzelblatt vom Abzugsdurchlaß zum Rückführdurchlaß führt, gekennzeichnet durch ein das abgezogene Einzelblatt (188) untergreifendes, quer zur Auszugsrichtung im ersten Rahmenteil gelagertes und sich im wesentlichen über die Breite des Einzelblattes erstrekkendes federvorgespanntes Schwenkelement (344 in Fig. 44), das das abgezogene Einzelblatt mindestens in seinem Mittelbereich und den beiden Seitenbereichen abstützt, und durch ein am zweiten Rahmenteil angeordnetes Steuerelement (346) zum Steuern der Schwenkbewegung des Schwenkelements in Abhängigkeit von der Rahmenteilbewegung.

8. Vorrichtung zum zyklischen Umschichten eines Stapels im wesentlichen rechteckiger Blätter, umfassend ein erstes (12) und ein zweites (14) Rahmenteil, von denen eines ein Sichtfenster aufweist und die relativ zueinander und parallel zur Sichtfensterebene zwischen einer inneren Endlage und einer äußeren Endlage hinundherverschieblich sind, und Mittel zum Abziehen eines Einzelblattes (188) von einem Ende eines eingelegten Stapels beim Auseinanderziehen der Rahmenteile durch einen Abzugsdurchlaß und zum Rückführen des Einzelblattes (188) zum andern Stapelende durch einen Rückführdurchlaß beim Zusammenschieben der Rahmenteile, wobei die Mittel mindestens eine Leiteinrichtung (80) umfassen, die ein abgezogenes Einzelblatt (188) vom Abzugsdurchlaß zum Rückführdurchlaß führt, gekennzeichnet durch ein das abgezogene Einzelblatt untergreifendes, quer zur Auszugsrichtung im ersten Rahmenteil gelagertes und sich im wesentlichen über die Breite des Einzelblattes erstrekkendes federvorgespanntes Schwenkelement (344 in Fig. 46), das das abgezogene Einzelblatt mindestens in seinem Mittelbereich abstützt, durch einen von seiner Schwenkachse ausgehenden und mit dieser momentübertragend gekoppelten Steuerarm (344'), und durch ein mit dem Steuerarm in Abhängigkeit von der Rahmenteilbewegung in Wirkverbindung tretendes Steuerelement (346) am zweiten Rahmenteil zum Verschwenken des Schwenkelements gegen seine Federvorspannung.

9. Vorrichtung nach Anspruch 7 oder 8, dadurch gekennzeichnet, daß das Schwenkelement an zwei Stellen gelagert ist.

10. Vorrichtung nach Anspruch 7 oder 8, dadurch gekennzeichnet, daß das Schwenkelement einen Blattabstützarm zwischen Lagern aufweist.

11. Vorrichtung nach Anspruch 7 oder 8, dadurch gekennzeichnet, daß das Schwenkelement Blattabstützarme außerhalb von Lagern aufweist.

12. Vorrichtung nach Anspruch 7 oder 8, dadurch gekennzeichnet, daß das Schwenkelement eine Mehrzahl gleichlanger Blattabstützarme aufweist.

13. Vorrichtung nach Anspruch 7 oder 8, dadurch gekennzeichnet, daß das Schwenkelement in Lagern gelagert ist, die symmetrisch bezüglich einer sich in Rahmenteilbewegungsrichtung erstreckenden Symmetrieebene angeordnet sind.

14. Vorrichtung nach Anspruch 8, dadurch gekennzeichnet, daß der Steuerarm des Schwenkhebels nahe einem äußeren Ende desselben angeordnet ist.

15. Vorrichtung nach Anspruch 8, dadurch gekennzeichnet, daß der Steuerarm zugleich ein Blattabstützarm ist.

16. Vorrichtung nach Anspruch 7 oder 8, dadurch gekennzeichnet, daß das Steuerelement auf das Schwenkelement auflaufend ausgebildet und angeordnet ist.

17. Vorrichtung nach Anspruch 7 oder 8, dadurch gekennzeichnet, daß das Schwenkelement Blattabstützarme aufweist, die in der Blattabstützposition einen sich in Richtung des herausgezogenen zweiten Rahmenteils öffnenden spitzen Winkel mit der Sichtfensterebene definieren.

18. Vorrichtung nach Anspruch 16 und 17, dadurch gekennzeichnet, daß das Steuerelement an den Winkel angepaßte Steuerflächen aufweist.

19. Vorrichtung nach Anspruch 16 oder 18, dadurch gekennzeichnet, daß das Steuerelement im Achsabstand auf das Schwenkelement auflaufend ausgebildet und angeordnet ist.

20. Vorrichtung nach Anspruch 7 oder 8, dadurch gekennzeichnet, daß in dem ersten Rahmenteil auszugsrichtungparallele Schienen angeordnet sind und sich Lager des Schwenkelements auf der dem Sichtfenster abgekehrten Seite der Schienen befinden.

21. Vorrichtung nach Anspruch 7 oder 8, dadurch gekennzeichnet, daß in dem ersten Rahmenteil auszugsparallele Schienen angeordnet sind und sich eine Achse des Schwenkelements auf der dem Sichtfenster abgekehrten Seite der Schienen befindet.

22. Vorrichtung nach Anspruch 7 oder 8, dadurch gekennzeichnet, daß das Schwenkelement in einem dem Sichtfenster gegenüberliegenden Boden des ersten Rahmenteils gelagert ist.

23. Vorrichtung nach Anspruch 20 oder 21, gekennzeichnet durch ein Paar symmetrisch bezüglich einer auszugsparallelen Mittelebene angeordneter Schienen.

24. Vorrichtung nach einem der Ansprüche 20, 21 oder 23, dadurch gekennzeichnet, daß das Schwenkelement mindestens einen Blattabstützarm zwischen jeweils zwei Schienen aufweist.

25. Vorrichtung nach Anspruch 24, dadurch gekennzeichnet, daß das Schwenkelement außerhalb der beiden äußersten Schienen je einen Blattabstützarm aufweist.

26. Vorrichtung nach Anspruch 7 oder 8, dadurch gekennzeichnet, daß das zweite Rahmenteil einen dem Sichtfenster gegenüberliegenden Boden mit einem Durchbruch für den Durchtritt des Schwenkelements aufweist.

27. Vorrichtung nach Anspruch 26, dadurch gekennzeichnet, daß das zweite Rahmenteil beidseits des Durchbruchs Längsholme, die sich in Rahmenteilbewegungsrichtung erstrecken, aufweist, die einen L-förmigen Querschnitt aufweisen.

28. Vorrichtung nach Anspruch 27, dadurch gekennzeichnet, daß das Steuerelement an den Längsholmen vorgesehen ist.

29. Vorrichtung nach Anspruch 7 oder 8, dadurch gekennzeichnet, daß das zweite Rahmenteil eine innere Querwandung aufweist und daß das Steuerelement beim Zusammenschieben der Rahmenteile dieser Querwandung vorausläuft.

30. Vorrichtung nach einem der Ansprüche 7 oder 8, dadurch gekennzeichnet, daß das erste Rahmenteil das Sichtfenster aufweist und als Gehäuse ausgebildet ist, aus dem das zweite, als Schieber ausgebildete Rahmenteil herausziehbar ist.

31. Vorrichtung nach Anspruch 1, dadurch gekennzeichnet, daß die Andruckeinrichtung im ersten Rahmenteil angeordnet ist.

32. Vorrichtung nach Anspruch 31, dadurch gekennzeichnet, daß die Andruckeinrichtung durch Überlaufen des zweiten Rahmenteils inaktivierbar ist.

33. Vorrichtung nach Anspruch 1, dadurch gekennzeichnet, daß die Führungsmittel am zweiten Rahmenteil angeordnet sind.

34. Vorrichtung nach Anspruch 1, dadurch gekennzeichnet, daß die Führungsmittel einerseits, die Andruckeinrichtung andererseits von jeweils separaten Bauteilen gebildet sind.

35. Vorrichtung nach Anspruch 1, gekennzeichnet durch einen Anschlag (52), an dem die Querkante des Einzelblattes zur Anlage bringbar ist, die in der äußeren Endlage der zweiten Halteeinrichtung abgekehrt ist.

36. Vorrichtung nach Anspruch 2 oder 33, dadurch gekennzeichnet, daß die Führungsmittel längs des abgetrennten Einzelblattes laufende Federarme umfassen.

37. Vorrichtung nach Anspruch 36, dadurch gekennzeichnet, daß die Federarme beim Auseinanderziehen der Rahmenteile einen Abzugsdurchlaß für das Einzelblatt freilassen.

38. Vorrichtung nach Anspruch 36 oder 37, dadurch gekennzeichnet, daß die am zweiten Rahmenteil angeordnete zweite Halteeinrichtung einen sich quer zur Rahmenteilbewegungsrichtung erstreckenden Separatorsteg umfaßt, unter dem sich die Federarme erstrecken.

39. Vorrichtung nach einem der Ansprüche 36 bis 38, dadurch gekennzeichnet, daß die Federarme Blattfederarme umfassen.

40. Vorrichtung nach einem der Ansprüche 36 bis 39, dadurch gekennzeichnet, daß die Federarme in Richtung eines Rückführdurchlasses vorgespannt sind.

41. Vorrichtung nach einem der Ansprüche 36 bis 40, gekennzeichnet durch Anschläge zum Festlegen mindestens einer Federarmendposition.

42. Vorrichtung nach einem der Ansprüche 36 bis 41, dadurch gekennzeichnet, daß die Federarme das Einzelblatt gegen eine Anlagefläche drückend ausgebildet sind.

43. Vorrichtung nach einem der Ansprüche 36 bis 42, dadurch gekennzeichnet, daß die Federarme im Kontaktbereich mit dem Einzelblatt abgerundet sind.

44. Vorrichtung nach einem der Ansprüche 33 bis 43, dadurch gekennzeichnet, daß die Leiteinrichtung zusätzlich zu den Führungsmitteln ein im ersten Rahmenteil angeordnetes Transfersystem umfaßt.

45. Vorrichtung nach Anspruch 2 oder 33, dadurch gekennzeichnet, daß die Führungsmittel mindestens ein schwenkbewegliches Führungselement umfassen.

46. Vorrichtung nach Anspruch 45, dadurch gekennzeichnet, daß das Führungselement um eine Achse schwenkbar ist, die senkrecht zur Rahmenteilbewegung und parallel zur Stapelhauptebene verläuft.

47. Vorrichtung nach Anspruch 45, dadurch gekennzeichnet, daß das Führungselement gefedert ist.

48. Vorrichtung nach Anspruch 47, dadurch gekennzeichnet, daß das Führungselement eine Drahtfeder umfaßt.

49. Vorrichtung nach einem der Ansprüche 45 bis 48, dadurch gekennzeichnet, daß das Führungselement das Einzelblatt seitlich untergreifend ausgebildet ist.

50. Vorrichtung nach einem der Ansprüche 45 bis 49, dadurch gekennzeichnet, daß das Führungselement durch Anschläge am ersten Rahmenteil steuerbar ist.

51. Vorrichtung nach Anspruch 1 oder 3, dadurch gekennzeichnet, daß die Leiteinrichtung einen im ersten Rahmenteil angeordneten Keil umfaßt.

52. Vorrichtung nach Anspruch 51, dadurch gekennzeichnet, daß der Keil verlagerbar angeordnet ist.

53. Vorrichtung nach Anspruch 51 oder 52, dadurch gekennzeichnet, daß der Keil diejenige Endkante des Einzelblattes untergreift, die bei abgetrenntem Einzelblatt der zweiten Halteeinrichtung abgekehrt ist.

54. Vorrichtung nach Anspruch 52, dadurch gekennzeichnet, daß der Keil dem zweiten Rahmenteil beim Auseinanderziehen der Rahmenteile nachlaufend ausgebildet ist.

55. Vorrichtung nach Anspruch 53 oder 54, dadurch gekennzeichnet, daß der Keil das Einzelblatt vor einen Kantenanschlag hebend ausgebildet ist.

56. Vorrichtung nach Anspruch 1 oder 3, dadurch gekennzeichnet, daß die Leiteinrichtung einen am zweiten Rahmenteil angeordneten Keil umfaßt.

57. Vorrichtung nach Anspruch 56, dadurch gekennzeichnet, daß der Keil an der zweiten Halteeinrichtung (20) angeordnet ist.

58. Vorrichtung nach Anspruch 57, dadurch gekennzeichnet, daß die zweite Halteeinrichtung eine Schrägfläche aufweist, in deren Verlängerung der Keil liegt.

59. Vorrichtung nach Anspruch 57 oder 58, gekennzeichnet durch eine Federlamelle als Keil, die eine Gleitfläche für die Einzelblattkante aufweist.

60. Vorrichtung nach einem der Ansprüche 51 bis 59, dadurch gekennzeichnet, daß der Keil in seine blattuntergreifende Position federvorgespannt ist.

61. Vorrichtung nach einem der Ansprüche 1 bis 3, gekennzeichnet durch einen Abtrenndurchlaß und einen Rückführdurchlaß für das Einzelblatt beidseits eines Separators, und durch Mittel zum Sperren mindestens eines der Durchlässe gegen den Durchtritt eines Blattes in falscher Richtung.

62. Vorrichtung nach Anspruch 4 oder 61, dadurch gekennzeichnet, daß die Sperrmittel am zweiten Rahmenteil vorgesehen sind.

63. Vorrichtung nach einem der Ansprüche 4 oder 61, dadurch gekennzeichnet, daß der Rückführdurchlaß während des Auseinanderziehens der Rahmenteile gesperrt ist.

64. Vorrichtung nach Anspruch 63, dadurch gekennzeichnet, daß die Sperrmittel die Blattenden des Reststapels übergreifen.

65. Vorrichtung nach Anspruch 4 oder 61, dadurch gekennzeichnet, daß die Mittel den Abzugsdurchlaß während des Zusammenschiebens der Rahmenteile sperren.

66. Vorrichtung nach Anspruch 4 oder 61, dadurch gekennzeichnet, daß die Mittel ein in die Sperrposition federvorgespanntes Sperrstück umfassen.

67. Vorrichtung nach Anspruch 66, dadurch gekennzeichnet, daß das Sperrstück als Federlamelle ausgebildet ist, die von dem Einzelblatt gegen die Federvorspannung in eine Freigabeposition verlagerbar ist.

68. Vorrichtung nach Anspruch 67, dadurch gekennzeichnet, daß die Federlamelle eine Steuerschräge aufweist.

69. Vorrichtung nach Anspruch 5, dadurch gekennzeichnet, daß der Hebel um eine Achse schwenkbar ist, die sich parallel zur Rahmenteilbewegungsrichtung erstreckt.

70. Vorrichtung nach Anspruch 5, dadurch gekennzeichnet, daß der Hebel um eine Achse schwenkbar ist, die sich senkrecht zur Rahmenteilbewegungsrichtung und parallel zur Stapelhauptebene erstreckt.

71. Vorrichtung nach Anspruch 69 oder 70, dadurch gekennzeichnet, daß der Hebel nahe zwei einander gegenüberliegenden Kanten auf das Einzelblatt einwirkend ausgebildet ist.

72. Vorrichtung nach einem der Ansprüche 5 oder 69 bis 71, gekennzeichnet durch eine Mehrzahl von Hebeln.

73. Vorrichtung nach Anspruch 72, gekennzeichnet durch ein Paar von Hebeln, die nahe einander gegenüberliegender Einzelblattkanten an diesem angreifen.

74. Vorrichtung nach Anspruch 6, dadurch gekennzeichnet, daß das Übertragungsorgan an den Führungsmitteln angeordnet ist.

75. Vorrichtung nach Anspruch 6 oder 74, dadurch gekennzeichnet, daß das Übertragungsorgan in Rahmenteilbewegungsrichtung verlagerbar ist.

76. Vorrichtung nach einem der Ansprüche 6, 74 oder 75, dadurch gekennzeichnet, daß die Führungsmittel mindestens einen Schwenkhebel umfassen.

77. Vorrichtung nach einem der Ansprüche 6 und 74 bis 76, dadurch gekennzeichnet, daß die Führungsmittel im Bereich der äußeren Endlage der Rahmenteile aktivierbar sind.

78. Vorrichtung nach einem der Ansprüche 74 bis 77, dadurch gekennzeichnet, daß ein gemeinsames Übertragungsorgan für eine Mehrzahl von Führungsmitteln vorgesehen ist.

79. Vorrichtung nach einem der vorangehenden Ansprüche, gekennzeichnet durch Mittel (36, 81), die den Reststapel im zweiten Rahmenteil (14) im Abstand von einem Rückführdurchlaß für das Einzelblatt halten.

80. Vorrichtung nach Anspruch 79; dadurch gekennzeichnet, daß die Mittel Niederhalteorgane (36, 81) umfassen, die stationär am ersten Rahmenteil angeordnet sind.

81. Vorrichtung nach Anspruch 79, dadurch gekennzeichnet, daß die Mittel eine den Durchlaß durchsetzende Leitlamelle (308) umfassen.

82. Vorrichtung nach Anspruch 79, dadurch gekennzeichnet, daß Distanzierungsmittel (93) auf der dem abgetrennten Blatt abgewandten Seite der zweiten Halteeinrichtung vorgesehen sind.

83. Vorrichtung nach Anspruch 79 oder 82, dadurch gekennzeichnet, daß Distanzierungsmittel (38) an dem der zweiten Halteeinrichtung abgewandten Ende des zweiten Rahmenteils vorgesehen sind.

84. Vorrichtung nach Anspruch 79, 82 oder 83, dadurch gekennzeichnet, daß am ersten Rahmenteil Distanzierungsmittel (36) vorgesehen sind, die zur Rahmenteilbewegungsrichtung parallellaufende Blattkanten übergreifen.

85. Vorrichtung nach Anspruch 7 oder 8, dadurch gekennzeichnet, daß die Abzieh- und Rückführmittel umfassen :

eine Trenneinrichtung zum Abtrennen des Einzelblatts vom Reststapel,

eine Zufuhreinrichtung zum Zuführen von Blättern zur Trenneinrichtung,

eine erste Halteeinrichtung zum Halten des Einzelblattes im ersten Rahmenteil, und

eine zweite Halteeinrichtung zum Halten des Reststapels im zweiten Rahmenteil.

86. Vorrichtung nach einem der Ansprüche 1 bis 6 oder 85, dadurch gekennzeichnet, daß die zweite Halteeinrichtung einerseits, das erste Rahmenteil andererseits kammartig ineinandergreifende Elemente umfassen, die die Lage des Reststapels relativ zu einem Rückführdurchlaß des Einzelblattes definieren.

87. Vorrichtung nach einem der Ansprüche 1 bis 6 oder 85, dadurch gekennzeichnet, daß das erste Rahmenteil einen Anschlag (52) aufweist, vor den die dem herausgezogenen zweiten Rahmenteil abgewandte Kante des Einzelblattes mittels einer Hebeeinrichtung (32) führbar ist.

88. Vorrichtung nach Anspruch 87, dadurch gekennzeichnet, daß die Hebeeinrichtung (32) auf einem wesentlichen Teilabschnitt des Rückhubs der Rahmenteile (12, 14) das Einzelblatt hält.

89. Vorrichtung nach Anspruch 87, dadurch gekennzeichnet, daß die zweite Halteeinrichtung (20) einen Durchlaß (54) für den Anschlag (52) aufweist.

90. Vorrichtung nach Anspruch 87, dadurch gekennzeichnet, daß der Anschlag eine Abwinkelung (78) aufweist, der die Einzelbildkante hintergreift.

91. Vorrichtung nach Anspruch 87, dadurch gekennzeichnet, daß die Hebeeinrichtung einen Auflaufkeil (318) umfaßt.

92. Vorrichtung nach Anspruch 91, dadurch gekennzeichnet, daß der Auflaufkeil von der Rahmenteilbewegung gesteuert aktivierbar ist.

93. Vorrichtung nach Anspruch 92, dadurch gekennzeichnet, daß der Auflaufkeil (318) in Rahmenteilbewegungsrichtung begrenzt verschieblich ist.

94. Vorrichtung nach Anspruch 91, dadurch gekennzeichnet, daß der Auflaufkeil mindestens einen Schwenkflügel (336) umfaßt.

95. Vorrichtung nach Anspruch 87, dadurch gekennzeichnet, daß die Hebeeinrichtung (32, 336, 318) durch die Relativbewegung der Rahmenteile gesteuert aktivierbar und inaktivierbar ist.

96. Vorrichtung nach einem der Ansprüche 1 bis 8, gekennzeichnet durch ein Einzelblatt-Transfersystem, mittels dem das abgetrennte Einzelblatt bei auseinandergezogenen Rahmenteilen von einem Abzugsdurchlaß zu einem Rückführdurchlaß verlagerbar ist und das umfaßt :

Führungsmittel, zugeordnet dem Ende des Einzelblatts, das dem ausgezogenen zweiten Rahmenteil zugewandt ist, und

eine Hebeeinrichtung, zugeordnet dem dem zweiten Rahmenteil abgewandten Ende.

97. Vorrichtung nach Anspruch 96, dadurch gekennzeichnet, daß die Führungsmittel und/oder die Hebeeinrichtung von der Rahmenteilbewegung gesteuert aktivierbar und inaktivierbar sind.

98. Vorrichtung nach Anspruch 96 oder 97, dadurch gekennzeichnet, daß die Führungsmittel und/oder die Hebeeinrichtung Blattfedern umfassen, die das Einzelblatt abstützen.

99. Vorrichtung nach Anspruch 96, gekennzeichnet durch Einzelblatt-Stützmittel (80), die das Blatt zwischen den Führungsmitteln (79) und der Hebeeinrichtung (32) abstützen.

100. Vorrichtung nach Anspruch 99, dadurch gekennzeichnet, daß die Stützmittel Blattfedern umfassen und durch die Rahmenteilbewegung gesteuert aktivierbar und inaktivierbar sind.

101. Vorrichtung nach Anspruch 98 oder 100, dadurch gekennzeichnet, daß die mit dem Einzelblatt in Kontakt gelangenden Blattfederbereiche abgerundet sind.

102. Vorrichtung nach Anspruch 96 oder 99, gekennzeichnet durch mechanische Umsteuerung der Führungsmittel und/oder Abstützmittel und/oder Hebeeinrichtung zwischen einer aktiven und einer inaktiven Position.

103. Vorrichtung nach Anspruch 102, dadurch gekennzeichnet, daß die Umsteuerung in vorbestimmten Relativlagen der Rahmenteile erfolgt.

104. Vorrichtung nach Anspruch 102 oder 103, dadurch gekennzeichnet, daß ein gemeinsames Umsteuerorgan vorgesehen ist.

105. Vorrichtung nach Anspruch 96 oder 99, dadurch gekennzeichnet, daß die erste Halteeinrichtung eine Haftbeschichtung (26) umfaßt und daß die Hebeeinrichtung und/oder die Führungsmittel und/oder die Stützmittel das Einzelblatt von der Haftbeschichtung (26) ablösend ausgebildet sind.

106. Vorrichtung nach Anspruch 96 oder 99, dadurch gekennzeichnet, daß die Hebeeinrichtung und/oder die Führungsmittel und/oder die Stützmittel zumindest auf die auszugsrichtungparallelen Einzelblattkanten einwirkend ausgebildet sind.

107. Vorrichtung nach Anspruch 106, dadurch gekennzeichnet, daß sie zusätzlich im mittleren Bereich des Einzelblattes einwirkend ausgebildet sind.

108. Vorrichtung nach Anspruch 107, dadurch gekennzeichnet, daß sie im wesentlichen über die gesamte Breite des Einzelblattes einwirkend ausgebildet sind.

109. Vorrichtung nach Anspruch 96, dadurch gekennzeichnet, daß die Führungsmittel (350) einen Teil der Trenneinrichtung bilden.

110. Vorrichtung nach Anspruch 96, dadurch gekennzeichnet, daß die Hebeeinrichtung und die Führungsmittel von gegeneinanderlaufenden Keilflächen gebildet sind.

111. Vorrichtung nach Anspruch 96 oder 99, dadurch gekennzeichnet, daß sie eine Andruckanordnung umfaßt, die bei zusammengeschobenen Rahmenteilen den Stapel gegen eine Wandung des ersten Rahmenteils drückt und bei auseinandergezogenen Rahmenteilen eine Funktion des Transfersystems übernimmt.

112. Vorrichtung nach Anspruch 111, dadurch gekennzeichnet, daß die Andruckanordnung von Blattfedern gebildet ist.

113. Vorrichtung nach Anspruch 111 oder 112, dadurch gekennzeichnet, daß die Rahmenteilwandung ein Sichtfenster zum Exponieren des jeweils darunterliegenden Blattes aufweist.

114. Vorrichtung nach einem der Ansprüche 98 oder 100 oder 112, dadurch gekennzeichnet, daß die Blattfedern Arme von mehrarmigen Blattfederbaugruppen sind.

115. Vorrichtung nach Anspruch 96, dadurch gekennzeichnet, daß das Transfersystem ein Element der ersten Halteeinrichtung bildet.

116. Vorrichtung nach einem der vorangehenden Ansprüche, dadurch gekennzeichnet, daß das erste Rahmenteil ein Gehäuse ist, aus dem der Stapel mittels des Schiebers entnehmbar ist.

117. Vorrichtung nach Anspruch 85 oder 115, dadurch gekennzeichnet, daß die erste Halteeinrichtung zwei Haltesysteme umfaßt, von denen das erste das Einzelblatt zu Beginn der Auseinanderbewegung der Rahmenteile sichert, das zweite am Ende der Auseinanderbewegung, und beide zwischen Beginn und Ende.

118. Vorrichtung nach einem der Ansprüche 2 bis 8, gekennzeichnet durch eine Andruckanordnung, die den Stapel bei zusammengeschobenen Rahmenteilen gegen ein Sichtfenster drückt.

119. Vorrichtung nach Anspruch 1 oder 118, dadurch gekennzeichnet, daß sich die Leiteinrichtung im einen, die Andruckanordnung im andern Rahmenteil befindet.

120. Vorrichtung nach Anspruch 1 oder 118, dadurch gekennzeichnet, daß sich die Leiteinrichtung und die Andrukkanordnung im gleichen Rahmenteil befinden.

121. Vorrichtung nach Anspruch 118, dadurch gekennzeichnet, daß Elemente der Andruckanordnung zugleich Elemente der Leiteinrichtung bilden.

122. Vorrichtung nach Anspruch 1 oder 118, dadurch gekennzeichnet, daß die Andruckanordnung und die Leiteinrichtung gleichgerichtete Kräfte auf den Stapel bzw. das Einzelblatt ausüben.

123. Vorrichtung nach Anspruch 1 oder 118, dadurch gekennzeichnet, daß die Andruckanordnung bei auseinandergezogenen Rahmenteilen inaktiviert ist und daß die Leiteinrichtung bei zusammengeschobenen Rahmenteilen inaktiviert ist.

124. Vorrichtung nach Anspruch 122 und 123, dadurch gekennzeichnet, daß die gleichgerichteten Kräfte durch Federvorspannung aufgebracht werden.

125. Vorrichtung nach Anspruch 124, dadurch gekennzeichnet, daß die Inaktivierung durch mechanisches Verlagern entgegen der Federkraft beim Auseinanderziehen bzw. Zusammenschieben der Rahmenteile erfolgt.

126. Vorrichtung nach Anspruch 1 oder 118, dadurch gekennzeichnet, daß sich die Andruckanordnung in dem als Gehäuse ausgebildeten ersten Rahmenteil befindet, aus dem das als Schieber ausgebildete zweite Rahmenteil herausziehbar ist.

127. Vorrichtung nach Anspruch 126, dadurch gekennzeichnet, daß der Schieber einen dem Sichtfenster gegenüberliegenden Boden mit einer Öffnung aufweist, durch die hindurch die Andruckanordnung, die an einem Gehäuseboden auf der dem Sichtfenster abgewandten Seite des Schieberbodens befestigt ist, auf den Stapel einwirkt.

128. Vorrichtung nach Anspruch 127, dadurch gekennzeichnet, daß der Schieber eine innere Querwandung aufweist, die durch Auflaufen auf die Andruckanordnung diese inaktiviert.

129. Vorrichtung nach Anspruch 120 und einen der Ansprüche 126 bis 128, dadurch gekennzeichnet, daß der Schieber beidseits der Öffnung Steuerflächen und Steuerkanten für die Inaktivierung der Leiteinrichtung durch Auflaufen aufweist.

130. Vorrichtung nach einem der Ansprüche 1 bis 6, dadurch gekennzeichnet, daß in dem ersten Rahmenteil Schienen angeordnet sind und daß die Leiteinrichtung seitlich heben und/oder zwischen den Schienen angeordnete Elemente umfaßt.

131. Vorrichtung nach Anspruch 130, dadurch gekennzeichnet, daß die Schienen sich in Rahmenteilbewegungsrichtung erstrecken.

132. Vorrichtung nach Anspruch 130 oder 131, gekennzeichnet durch eine Haftbeschichtung der Schienen.

133. Vorrichtung nach Anspruch 1, gekennzeichnet durch die Merkmale eines der Ansprüche 2 bis 8.

## Claims

1. Device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, wherein the guiding arrangement comprises guide means (79) which present the end of the individual sheet (188) facing towards the second retaining means in the outer end position transversely to the direction of movement of the frame parts in front of a return through-gap (310), and wherein the device further comprises a pressing arrangement (24) for pressing the pile towards a viewing window (35) provided in one of the frame parts in the inner end position, which pressing arrangement is rendered inoperative relative to the said end of the individual sheet in the outer end position, characterized in that the guide means comprise guide elements acting separately from the pressing arrangement (24).

2. A device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, characterized in that the guiding arrangement comprises guide means (79 in Fig. 39 and 41) arranged on the second frame part (14).

3. A device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, characterized in that the guiding arrangement comprises a guide member (318 in Figs 39-41, 350 in Fig. 48) engaging beneath a transverse edge of the individual sheet.

4. A device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, wherein a withdrawal through-gap and a return through-gap for the individual sheet are provided on both sides of the separator bar, characterized in that means (350 in Fig. 48) are provided to block at least one of the through-gaps to the passage of a sheet in the wrong direction.

5. A device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, characterized in that the guiding arrangement comprises guide means with at least one lever (270, 274 in Fig. 111) pivotally attached to the first frame part (12) and with a control arm (268) which, when the frame parts are pushed together, by running onto a control member (20) arranged on the second frame part can be rendered inoperative against the force of a biassing spring (276), and the control arm or the control member has a control face by means of which the disabling stroke of the lever is distributed over a predetermined partial stroke of the frame part movement.

6. A device for the cyclic rearrangement of a pile of rectangular or square sheets, in particular a pile of photographic prints, with a first (12) and a second (14) frame part which are movable relative to one another and parallel to the main plane of the pile between an inner end position and an outer end position, and with means which, on movement of the frame parts away from one another, remove an individual sheet (188) at one end of the pile and as the frame parts are guided back together add it to the other end of the pile, which means comprise :

a separating means (20) for separating the individual sheet from the pile,

a feeding means (22) for feeding sheets to the separating means,

a first retaining means (32) for retaining the separated individual sheet in the first frame part, and

a second retaining means for retaining the remainder of the pile in the second frame part, and

a guiding arrangement (80) for guiding the separated individual sheet for the purpose of returning it to the other end of the remainder of the pile, characterized in that the guiding arrangement comprises guide means (336 in Fig. 44) arranged on the first frame part (12) and a transfer element (334) displaceable between this and the second frame part (14) relative to the first frame part for the operation of the guide means (336) in a predetermined relative position of the frame parts.

7. A device for the cyclic rearrangement of a pile of substantially rectangular or square sheets, comprising a first (12) and a second (14) frame part, one of which has a viewing window, and which are movable towards and away from one another and parallel to the viewing window plane between an inner end position and an outer end position, and means for removing an individual sheet (188) from one end of an inserted pile as the frame parts are pulled apart through a withdrawal through-gap and for returning the individual sheet (188) to the other end of the pile through a return through-gap (310) as the frame parts are pushed together, wherein the means comprise at least one guiding arrangement (80) which guides a removed individual sheet from the withdrawal through-gap to the return through-gap, characterized by a spring-biassed pivotal member (344 in Fig. 44) engaging beneath the removed individual sheet (188) and mounted transversely to the withdrawal direction in the first frame part and extending substantially across the breadth of the individual sheet, which pivotal member supports the removed individual sheet at least in the middle region and in the two lateral regions thereof, and by a control element (346) arranged on the second frame part for controlling the pivotal movement of the pivotal member in dependence on the movement of the frame parts.

8. A device for the cyclic rearrangement of a pile of substantially rectangular or square sheets, comprising a first (12) and a second (14) frame part, one of which has a viewing window, and which are movable towards and away from one another and parallel to the viewing window plane between an inner end position and an outer end position, and means for removing an individual sheet (188) from one end of an inserted pile as the frame parts are pulled apart through a withdrawal through-gap and for returning the individual sheet (188) to the other end of the pile through a return through-gap (310) as the frame parts are pushed together, wherein the means comprise at least one guiding arrangement (80) which guides a removed individual sheet from the withdrawal through-gap to the return through-gap, characterized by a spring-biassed pivotal member (344 in Fig. 46) engaging beneath the removed individual sheet and mounted transversely to the withdrawal direction in the first frame part and extending substantially across the breadth of the individual sheet, which pivotal member supports the removed individual sheet at least in the middle region thereof, by a control arm (344') extending from its pivot axis and coupled to this to transfer torque, and by a control element (346) on the second frame part entering into operative connection with the control arm in dependence on the movement of the frame parts in order to displace the pivotal member against its spring bias.

9. A device according to claim 7 or 8, characterized in that the pivotal member is mounted at two points.

10. A device according to claim 7 or 8, characterized in that the pivotal member has a sheet-support arm between bearings.

11. A device according to claim 7 or 8, characterized in that the pivotal member has sheet-support arms lying outside of bearings.

12. A device according to claim 7 or 8, characterized in that the pivotal member has a plurality of sheet-support arms of equal length.

13. A device according to claim 7 or 8, characterized in that the pivotal member is mounted in bearings which are arranged symmetrically with respect to a plane of symmetry extending in the direction of movement of the frame parts.

14. A device according to claim 8, characterized in that the control arm of the pivotal member is arranged close to an outer end of the same.

15. A device according to claim 8, characterized in that the control arm is at the same time a sheet-support arm.

16. A device according to claim 7 or 8, characterized in that the control element is constructed and arranged to run onto the pivotal member.

17. A device according to claim 7 or 8, characterized in that the pivotal member has sheet-support arms which, in the supporting position, define with the viewing window plane an acute angle facing in the direction of the pulled-out second frame part.

18. A device according to claim 16 and 17, characterized in that the control element has control faces matched to the angle.

19. A device according to claim 16 or 18, characterized in that the control element is constructed and arranged to run, spaced from the axis, onto the pivotal member.

20. A device according to claim 7 or 8, characterized in that in the first frame part there are rails arranged parallel with the withdrawal direction, and bearings of the pivotal member are located on the side of the rails remote from the viewing window.

21. A device according to claim 7 or 8, characterized in that in the first frame part there are rails arranged parallel with the withdrawal direction, and one axis of the pivotal member is located on the side of the rails remote from the viewing window.

22. A device according to claim 7 or 8, characterized in that the pivotal member is mounted in a floor of the first frame part positioned opposite the viewing window.

23. A device according to claim 20 or 21, characterized by a pair of rails arranged symmetrically with respect to a central plane parallel with the withdrawal direction.

24. A device according to one of claims 20, 21 or 23, characterized in that the pivotal member has at least one sheet-support arm, the or each support arm being between two rails.

25. A device according to claim 24, characterized in that the pivotal member has a respective sheet-support arm beyond the two outermost rails.

26. A device according to claim 7 or 8, characterized in that the second frame part has a floor positioned opposite the viewing window with an opening for the passage of the pivotal member.

27. A device according to claim 26, characterized in that the second frame part has, on both sides of the opening, longitudinal side pieces which extend in the direction of movement of the frame parts and which have an L-shaped cross-section.

28. A device according to claim 27, characterized in that the control element is provided on the longitudinal side pieces.

29. A device according to claim 7 or 8, characterized in that the second frame part has an inner transverse wall and the control element precedes this transverse wall as the frame parts are pushed together.

30. A device according to one of claims 7 or 8, characterized in that the first frame part has the viewing window and is constructed as a housing from which the second frame part constructed as a slider member can be withdrawn.

31. A device according to claim 1, characterized in that the pressing arrangement is arranged in the first frame part.

32. A device according to claim 31, characterized in that the pressing arrangement is renderable inoperative by a running-over action of the second frame part.

33. A device according to claim 1, characterized in that the guide means are arranged on the second frame part.

34. A device according to claim 1, characterized in that the guide means on the one hand and the pressing arrangement on the other hand are formed in each case by separate components.

35. A device according to claim 1, characterized by a stop (52) against which the transverse edge of the individual sheet that faces away from the second retaining means in the outer end position can be positioned.

36. A device according to claim 2 or 33, characterized in that the guide means comprise spring arms running along the separated individual sheet.

37. A device according to claim 36, characterized in that the spring arms leave clear a withdrawal through-gap for the individual sheet as the frame parts are pulled apart.

38. A device according to claim 36 or 37, characterized in that the second retaining means arranged on the second frame part comprises a separator bar extending transversely to the direction of the movement of the frame parts, beneath which separator bar the spring arms extend.

39. A device according to one of claims 36 to 38, characterized in that the spring arms comprise leaf-spring arms.

40. A device according to one of claims 36 to 39, characterized in that the spring arms are biassed in the direction of a return through-gap.

41. A device according to one of claims 36 to 40, characterized by stops for fixing at least one spring arm position.

42. A device according to one of claims 36 to 41, characterized in that the spring arms are constructed to press the individual sheet against a stop face.

43. A device according to one of claims 36 to 42, characterized in that the spring arms are rounded in the region in which they contact the individual sheet.

44. A device according to one of claims 33 to 43, characterized in that, in addition to the guide means, the guiding arrangement comprises a transfer system arranged in the first frame part.

45. A device according to claim 2 or 33, characterized in that the guide means comprise at least one pivotable guide element.

46. A device according to claim 45, characterized in that the guide element is pivotable about an axis that extends perpendicularly to the frame part movement and parallel to the main plane of the pile.

47. A device according to claim 45, characterized in that the guide element is sprung.

48. A device according to claim 47, characterized in that the spring element comprises a wire spring.

49. A device according to one of claims 45 to 48, characterized in that the guide element is arranged to engage laterally beneath the individual sheet.

50. A device according to one of claims 45 to 49, characterized in that the guide element is controllable by stops on the first frame part.

51. A device according to claim 1 or 3, characterized in that the guiding arrangement comprises a wedge-shaped member arranged in the first frame part.

52. A device according to one of claims 33 to 43, characterized in that the wedge-shaped member is displaceably arranged.

53. A device according to claim 51 or 52, characterized in that the wedge-shaped member engages beneath that end edge of the individual sheet that is remote from the second retaining means when the individual sheet is separated.

54. A device according to claim 52, characterized in that the wedge-shaped member is arranged to follow the second frame part as the frame parts are pulled apart.

55. A device according to claim 53 or 54, characterized in that the wedge-shaped member is constructed to lift the individual sheet in front of an. edge stop.

56. A device according to claim 1 or 3, characterized in that the guiding arrangement comprises a wedge-shaped member arranged on the second frame part.

57. A device according to claim 56, characterized in that the wedge-shaped member is arranged on the second retaining means (20).

58. A device according to claim 57, characterized in that the second retaining means has an inclined face, as a continuation of which the wedge-shaped member is positioned.

59. A device according to claim 57 or 58, characterized by a resilient plate as a wedge-shaped member which has a sliding face for the individual sheet edge.

60. A device according to one of claims 51 to 59, characterized in that the wedge-shaped member is spring biassed into the position in which it engages beneath the sheet.

61. A device according to one of claims 1 to 3, characterized by a separating through-gap and a return through-gap for the individual sheet on both sides of a separator, and by means for blocking at least one of the through-gaps to the passage of a sheet in the wrong direction.

62. A device according to claim 4 or 61, characterized in that the blocking means are provided on the second frame part.

63. A device according to one of claims 4 or 61, characterized in that the return through-gap is blocked as the frame parts are being pulled apart.

64. A device according to claim 63, characterized in that the blocking means engage over the sheet ends of the remainder of the pile.

65. A device according to claim 4 or 61, characterized in that the means block the withdrawal through-gap as the frame parts are being pushed together.

66. A device according to claim 4 or 61, characterized in that the means comprise a blocking piece spring-biassed into the blocking position.

67. A device according to claim 66, characterized in that the blocking piece is constructed as a resilient plate which is displaceable by the individual sheet against the spring bias into a release position.

68. A device according to claim 67, characterized in that the resilient plate has an inclined control face.

69. A device according to claim 5, characterized in that the lever is pivotable about an axis that extends parallel to the direction of movement of the frame parts.

70. A device according to claim 5, characterized in that the lever is pivotable about an axis that extends perpendicularly to the direction of movement of the frame parts and parallel to the principal plane of the pile.

71. A device according to claim 69 or 70, characterized in that the lever is constructed to act on the individual sheet close to two oppositely located edges.

72. A device according to one of claims 5 or 69 to 71, characterized by a plurality of levers.

73. A device according to claim 72, characterized by a pair of levers which act close to oppositely located individual sheet edges on the same.

74. A device according to claim 6, characterized in that the transfer member is arranged on the guide means.

75. A device according to claim 6 or 74, characterized in that the transfer member is displaceable in the direction of movement of the frame parts.

76. A device according to one of claims 6, 74 or 75, characterized in that the guide means comprise at least one pivotal lever.

77. A device according to one of claims 6 and 74 to 76, characterized in that the guide means are renderable operative in the region of the outer end position of the frame parts.

78. A device according to one of claims 74 to 77, characterized in that a common transfer member is provided for a plurality of guide means.

79. A device according to claim 1, characterized by means (36, 81) which retain the remainder of the pile in the second frame part (14) at a distance from a return through-gap for the individual sheet.

80. A device according to claim 79, characterized in that the means comprise holding-down members (36, 81) which are arranged fixedly on the first frame part.

81. A device according to claim 79, characterized in that the means comprise a guide plate (108) passing through the through-gap.

82. A device according to claim 79, characterized in that spacing means (93) are provided on the side of the second retaining means remote from the separated sheet.

83. A device according to claim 79 or 82, characterized in that spacing means (38) are provided on the end of the second frame part remote from the second retaining means.

84. A device according to claim 79, 82 or 83, characterized in that spacing means (36) are provided on the first frame part, which means engage over sheet edges running parallel to the direction of movement of the frame parts.

85. A device according to claim 7 or 8, characterized in that the withdrawal and returning means comprise

a separating means for separating the individual sheet from the pile,

a feeding means for feeding sheets to the separating means,

a first retaining means for retaining the separated individual sheet in the first frame part, and

a second retaining means for retaining the remainder of the pile in the second frame part.

86. A device according to one of claims 1 to 6 or 85, characterized in that the second retaining means on the one hand, the first frame part on the other comprise elements that interengage, which elements define the position of the remainder of the pile relative to a return through-gap of the individual sheet.

87. A device according to one of claims 1 to 6 or 85, characterized in that the first frame part has a stop (52) in front of which the edge of the individual sheet remote from the pulled-out second frame part is guideable by means of a lifting arrangement (32).

88. A device according to claim 87, characterized in that the lifting arrangement (32) retains the individual sheet for a substantial part of the return travel of the frame parts (12, 14).

89. A device according to claim 87, characterized in that the second retaining means (20) has a through-gap (54) for the stop (52).

90. A device according to claim 87, characterized in that the stop has an angled portion (78) behind which the individual sheet engages.

91. A device according to claim 87, characterized in that the lifting arrangement includes a guide member (318) with a run-up face.

92. A device according to claim 91, characterized in that the guide member with a run-up face is rendered operative by the movement of the frame parts.

93. A device according to claim 92, characterized in that the guide member (318) with a run-up face is displaceable, to a limited extent, in the direction of movement of the frame parts.

94. A device according to claim 91, characterized in that the guide member with a run-up face includes at least one wing-like pivotal member (336).

95. A device according to claim 87, characterized in that the lifting arrangement (32, 336, 318) is renderable operative and inoperative by the relative movement of the frame parts.

96. A device according to one of claims 1 to 8, characterized by an individual sheet-transfer system, by means of which the separated individual sheet is displaceable when the frame parts are pulled apart from a withdrawal through-gap to a return through-gap, which transfer system comprises :

guide means, allocated to the end of the individual sheet that faces the withdrawn second frame part, and

a lifting arrangement, allocated to the end remote from the second frame part.

97. A device according to claim 96, characterized in that the guide means and/or the lifting arrangement is renderable operative and inoperative by the movement of the frame parts.

98. A device according to claim 96 or 97, characterized in that the guide means and/or the lifting arrangement comprise leaf springs which support the individual sheet.

99. A device according to claim 96, characterized by means (80) for supporting the individual sheet which support the individual sheet between the guide means (79) and the lifting arrangement (32).

100. A device according to claim 99, characterized in that the supporting means comprise leaf springs and are rendered operative and inoperative by the movement of the frame parts.

101. A device according to claim 98 or 100, characterized in that the regions of the leaf springs coming into contact with the individual sheet are rounded.

102. A device according to claim 96 or 99, characterized by a mechanical reversal of the guide and/or supporting means and/or of the lifting arrangement between an operative and an inoperative position.

103. A device according to claim 102, characterized in that the reversal is effected in predetermined relative positions of the frame parts.

104. A device according to claim 102 or 103, characterized in that a common reversing member is provided.

105. A device according to claim 96 or 99, characterized in that the first retaining means comprises a retentive coating (26) and the lifting arrangement and/or the guide means and/or the supporting means are arrange to detach the individual sheet from the retentive coating (26).

106. A device according to claim 96 or 99, characterized in that the lifting arrangement and/or the guide means and/or the supporting means are arranged to act at least on the edges of the individual sheet parallel to the withdrawal direction.

107. A device according to claim 106, characterized in that they are constructed to act additionally in the middle region of the individual sheet.

108. A device according to claim 107, characterized in that they are designed to act substantially over the entire breadth of the individual sheet.

109. A device according to claim 96, characterized in that the guide means (350) form a part of the separating means.

110. A device according to claim 96, characterized in that the lifting arrangement and the guide means are formed by wedge faces running oppositely to each other.

111. A device according to claim 96 or 99, characterized in that it includes a pressing arrangement which, when the frame parts are pushed together, presses the pile against a wall of the first frame part and, when the frame parts are pulled apart, assumes a function of the transfer system.

112. A device according to claim 111, characterized in that the pressing arrangement is formed by leaf springs.

113. A device according to claim 111 or 112, characterized in that the frame part wall has a viewing window to expose to view the sheet lying beneath it.

114. A device according to one of claims 98 or 100 or 112, characterized in that the leaf springs are leaf spring assemblies having several arms.

115. A device according to claim 96, characterized in that the transfer system forms an element of the first retaining means.

116. A device according to one of the preceding claims, characterized in that the first frame part is a housing from which the pile is removable by means of the slider member.

117. A device according to claim 85 or 115, characterized in that the first retaining means comprises two retaining systems, of which the first secures the individual sheet at the start of the movement apart of the frame parts, the second secures the individual sheet at the end of the movement apart, and both secure the individual sheet between the start and the end.

118. A device according to one of claims 2 to 8, characterized by a pressing arrangement which presses the pile towards a viewing window when the frame parts are pushed together.

119. A device according to claim 1 or 118, characterized in that the guiding arrangement is located in one frame part and the pressing arrangement is located in the other frame part.

120. A device according to claim 1 or 118, characterized in that the guiding arrangement and the pressing arrangement are located in the same frame part.

121. A device according to claim 118, characterized in that the elements of the pressing arrangement simultaneously form elements of the guiding arrangement.

122. A device according to claim 1 or 118, characterized in that the pressing arrangement and the guiding arrangement exert forces acting in the same direction on the pile and on the individual sheet.

123. A device according to claim 1 or 118, characterized in that, when the frame parts are pulled apart, the pressing arrangement is rendered inoperative, and when the frame parts are pushed together the guiding means is rendered inoperative.

124. A device according to claim 122 and 123, characterized in that the forces acting in the same direction are applied by spring bias.

125. A device according to claim 124, characterized in that the disabling is effected by means of mechanical displacement against the spring force as the frame parts are pulled apart or pushed together.

126. A device according to claim 1 or 118, characterized in that the pressing arrangement is located in the first frame part constructed as a housing from which the second frame part can be withdrawn as a slider member.

127. A device according to claim 126, characterized in that, arranged opposite the viewing window the slider member has a floor with an opening through which the pressing arrangement, which is fastened to a housing floor on the side of the slider member floor remote from the viewing window, acts on the pile.

128. A device according to claim 127, characterized in that the slider member has an inner transverse wall which renders the pressing arrangement inoperative by running onto it.

129. A device according to claim 120 and one of claims 126 to 128, characterized in that, on both sides of the opening, the slider member has control faces and control edges for rendering the guiding arrangement inoperative through a running-on action.

130. A device according to one of claims 1 to 6, characterized in that in the first frame part there are arranged rails, and the guiding arrangement comprises elements arranged laterally next to and/or between the rails.

131. A device according to claim 130, characterized in that the rails extend in the direction of movement of the frame parts.

132. A device according to claim 130 or 131, characterized by a retentive coating of the rails.

133. A device according to claim 1, characterized by the features of one of claims 2 to 8.

## Revendications

1. Dispositif de reclassement cyclique d'une pile de feuilles rectangulaires, notamment d'une pile de clichés photographiques, comportant un premier élément en forme de cadre (12) et un second élément en forme de cadre (14), qui sont déplaçables l'un par rapport à l'autre parallèlement au plan principal de la pile, entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, et

un dispositif de guidage (80) servant à guider la feuille individuelle séparée, en vue de son renvoi sur l'autre côté de la pile restante, le dispositif de guidage comportant des moyens de guidage (79), qui entraînent l'extrémité de la feuille. individuelle (188), tournée vers la position d'extrémité extérieure du second dispositif de maintien, transversalement par rapport à la direction de déplacement des éléments en forme de cadres, pour l'amener devant un passage de renvoi (310), le dispositif comportant en outre un dispositif presseur (24) servant à presser la pile contre un voyant (35) prévu dans l'un des éléments en forme de cadres, dans la position d'extrémité intérieure, lequel dispositif presseur est inactivé par rapport à ladite extrémité de la feuille individuelle dans la position d'extrémité extérieure, caractérisé en ce que les moyens de guidage incluent des éléments de guidage (79 sur la figure 13), qui agissent séparément du dispositif presseur (24).

2. Dispositif de reclassement cyclique d'une pile de feuilles rectangulaires, notamment d'une pile de clichés photographiques, comportant un premier élément en forme de cadre (12) et un second élément en forme de cadre (14), qui sont déplaçables l'un par rapport à l'autre, parallèlement au plan principal de la pile entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, et un dispositif de guidage (80) servant à guider la feuille individuelle séparée, en vue de son renvoi sur l'autre côté de la pile restante, caractérisé en ce que le dispositif de guidage comporte des moyens de guidage (79 sur les figures 39 et 41) disposés sur le second élément en forme de cadre (14).

3. Dispositif de reclassement cyclique d'une pile de feuilles rectangulaires, notamment d'une pile de clichés photographiques, comportant un premier élément en forme de cadre (12) et un second élément en forme de cadre (14), qui sont déplaçables l'un par rapport à l'autre, parallèlement au plan principal de la pile entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, et

un dispositif de guidage (80) servant à guider la feuille individuelle séparée, en vue de son renvoi sur l'autre côté de la pile restante, caractérisé en ce que le dispositif de guidage comporte un coin (318 sur les figures 39-41, 350 sur la figure 42), qui s'engage au-dessous d'un bord transversal de la feuille individuelle.

4. Dispositif de reclassement cyclique d'une pile de feuilles rectangulaires, notamment d'une pile de clichés photographiques, comportant un premier élément en forme de cadre (12) et un second élément en forme de cadre (14), qui sont déplaçables l'un par rapport à l'autre et parallèlement au plan principal de la pile, entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, qui comporte une barrette formant séparateur, et

un dispositif de guidage (80) servant à guider la feuille individuelle séparée, en vue de son renvoi à l'autre côté de la pile restante, un passage de sortie et un passage de renvoi pour la feuille individuelle étant prévus des deux côtés de la barrette formant séparateur, caractérisé en ce qu'il est prévu des moyens (350 sur la figure 48) pour bloquer au moins l'un des passages afin d'empêcher le passage d'une feuille dans une mauvaise direction.

5. Dispositif de reclassement cyclique d'une pile de feuilles rectangulaires, notamment d'une pile de clichés photographiques, comportant un premier élément en forme de cadre (12) et un second élément en forme de cadre (14), qui sont déplaçables l'un par rapport à l'autre et parallèlement au plan principal de la pile, entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres, et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, et

un dispositif de guidage (80) servant à guider la feuille individuelle séparée, en vue de son renvoi sur l'autre côté de la pile restante, caractérisé en ce que le dispositif de guidage comporte des moyens de guidage comprenant au moins un levier (270, 274 sur la figure 111) articulé sur le premier élément en forme de cadre (12) et comportant un bras de commande (268), qui peut être désactivé lors du rapprochement des éléments en forme de cadres, par suite de l'actionnement d'un organe de commande (20), disposé sur le second élément en forme de cadre, à l'encontre de la force d'un ressort de précontrainte (276), et en ce que le bras de commande ou l'élément de commande possède une surface de commande, à l'aide de laquelle la course de désactivation du levier est répartie sur une course partielle prédéterminée du déplacement des éléments en forme de cadres.

6. Dispositif de reclassement cyclique d'une pile de feuilles rectangulaires, notamment d'une pile de tirages photographiques, comportant un premier élément en forme de cadre (12) et un second élément en forme de cadre (14), qui sont déplaçables l'un par rapport à l'autre et parallèlement au plan principal de la pile, entre une position d'extrémité intérieure et une position d'extrémité extérieure, et des moyens qui prélèvent une feuille individuelle (188) au niveau d'une extrémité de la pile, lors du mouvement d'écartement réciproque des éléments en forme de cadres et ajoutent cette feuille à l'autre extrémité de la pile lors du rapprochement des éléments en forme de cadres, lesquels moyens comprennent :

un dispositif de séparation (20) servant à séparer la feuille individuelle de la pile,

un dispositif d'amenée (22) servant à amener les feuilles au dispositif de séparation,

un premier dispositif de maintien (32) servant à maintenir la feuille individuelle séparée dans le premier élément en forme de cadre,

un second dispositif de maintien servant à maintenir la pile restante dans le second élément en forme de cadre, et

un dispositif de guidage (80) servant guider la feuille individuelle séparée, en vue de son renvoi sur l'autre côté de la pile restante, caractérisé en ce que le dispositif de guidage comporte des moyens de guidage (336 sur la figure 44) situés sur le premier élément en forme de cadre (12), et un organe de transmission (334) pouvant être déplacé par rapport au premier élément en forme de cadre entre ce dernier et le second élément en forme de cadre (14), pour obtenir l'activation des moyens de guidage (336) dans une position relative prédéterminée des éléments en forme de cadres.

7. Dispositif de reclassement cyclique d'une pile de feuilles sensiblement rectangulaires, comprenant un premier élément en forme de cadre (12) et un second élément en forme de cadre (14), dont l'un possède un voyant et qui sont déplaçables en va-et-vient l'un par rapport à l'autre et parallèlement au plan du voyant entre une position d'extrémité intérieure et une position d'extrémité extérieure, et des moyens pour extraire une feuille individuelle (188) à partir d'une extrémité d'une pile insérée, lorsqu'on fait ressortir les éléments en forme de cadres l'un de l'autre, à travers un passage de sortie et renvoyer la feuille individuelle (188) à l'autre extrémité de la pile au moyen d'un passage de renvoi (310), lorsqu'on insère les éléments en forme de cadres l'un dans l'autre, les moyens comportant au moins un dispositif de guidage (80), qui guide une feuille individuelle extraite depuis le passage de sortie jusqu'au passage de renvoi, caractérisé par un élément pivotant (344 sur la figure 44), qui est soumis à une précontrainte élastique, s'engage au-dessous de la feuille individuelle extraite (188) et est monté transversalement par rapport à la direction de sortie dans le premier élément en forme de cadre, s'étend sensiblement sur toute la largeur de la feuille individuelle et soutient la feuille individuelle extraite au moins dans sa partie médiane et dans les deux zones latérales, et par un élément de commande (346) monté sur le second élément en forme de cadre servant à commander le mouvement de pivotement de l'élément pivotant en fonction du déplacement des éléments en forme de cadres.

8. Dispositif de reclassement cyclique d'une pile de feuilles sensiblement rectangulaires, comprenant un premier élément en forme de cadre (12) et un second élément en forme de cadre (14), dont l'un possède un voyant et qui sont déplaçables en va-et-vient l'un par rapport à l'autre et parallèlement au plan du voyant entre une position d'extrémité intérieure et une position d'extrémité extérieure, et des moyens pour extraire une feuille individuelle (188) à partir d'une extrémité d'une pile insérée, lorsqu'on fait ressortir les éléments en forme de cadres l'un de l'autre, à travers un passage de sortie et renvoyer la feuille individuelle (188) à l'autre extrémité de la pile au moyen d'un passage de renvoi, lorsqu'on insère les éléments en forme de cadres l'un dans l'autre, les moyens comportant au moins un dispositif de guidage (80), qui guide une feuille individuelle extraite depuis le passage de sortie jusqu'au passage de renvoi, caractérisé par un élément pivotant (344 sur la figure 46), qui est soumis à une précontrainte élastique, s'engage au-dessous de la feuille individuelle sortie et est monté transversalement par rapport à la direction de sortie dans le premier élément en forme de cadre, s'étend sensiblement sur toute la largeur de la feuille individuelle et soutient la feuille individuelle sortie au moins dans sa partie médiane et par un bras de commande (344') qui s'étend à partir de l'axe de pivotement de l'élément pivotant et est accouplé à cet axe de manière à transmettre un moment, et par un élément de commande (346), qui établit une liaison active avec le bras de commande en fonction du déplacement des éléments en forme de cadres et est monté sur le second élément en forme de cadre de manière à faire pivoter l'élément pivotant à l'encontre de la précontrainte élastique à laquelle il est soumis.

9. Dispositif selon la revendication 7 ou 8, caractérisé en ce que l'élément pivotant tourillonne en deux points.

10. Dispositif selon la revendication 7 ou 8, caractérisé en ce que l'élément pivotant possède un bras de support des feuilles situé entre deux paliers.

11. Dispositif selon la revendication 7 ou 8, caractérisé en ce que l'élément pivotant comporte des bras de support des feuilles, à l'extérieur de paliers.

12. Dispositif selon la revendication 7 ou 8, caractérisé en ce que l'élément pivotant possède une multiplicité de bras de support des feuilles, de même longueur.

13. Dispositif selon la revendication 7 ou 8, caractérisé en ce que l'élément pivotant tourillonne dans des paliers, qui sont disposés symétriquement par rapport à un plan de symétrie s'étendant dans la direction de déplacement des éléments en forme de cadres.

14. Dispositif selon la revendication 8, caractérisé en ce que le bras de commande du levier pivotant est disposé à proximité d'une extrémité extérieure de ce levier.

15. Dispositif selon la revendication 8, caractérisé en ce que le bras de commande constitue simultanément un bras de support des feuilles.

16. Dispositif selon la revendication 7 ou 8, caractérisé en ce que l'élément de commande est agencé et disposé de manière à rencontrer l'élément pivotant.

17. Dispositif selon la revendication 7 ou 8, caractérisé en ce que l'élément pivotant comporte des bras de support des feuilles, qui, dans la position de support des feuilles, font avec le plan du voyant un angle aigu s'ouvrant en direction du second élément en forme de cadre ressorti.

18. Dispositif selon les revendications 16 et 17, caractérisé en ce que l'élément de commande possède des surfaces de commande adaptées à l'angle.

19. Dispositif selon la revendication 16 ou 18, caractérisé en ce que l'élément de commande est agencé et disposé à une certaine distance axiale de manière à rencontrer l'élément pivotant.

20. Dispositif selon la revendication 7 ou 8, caractérisé en ce que des rails parallèles à la direction d'extraction sont installés dans le premier élément en forme de cadre et des paliers de l'élément pivotant sont situés sur le côté des rails, tournés à l'opposé du voyant.

21. Dispositif selon la revendication 7 ou 8, caractérisé en ce que des rails parallèles à la direction d'extraction sont installés dans le premier élément en forme de cadre et qu'un axe de l'élément pivotant est situé sur le côté des rails, tourné à l'opposé du voyant.

22. Dispositif selon la revendication 7 ou 8, caractérisé en ce que l'élément pivotant tourillonne dans un fond, situé en vis-à-vis du voyant, du premier élément en forme de cadre.

23. Dispositif selon la revendication 20 ou 21, caractérisé par un couple de rails disposés symétriquement par rapport à un plan médian parallèle à la direction d'extraction.

24. Dispositif selon l'une des revendications 20, 21 ou 23, caractérisé en ce que l'élément pivotant comporte au moins un bras de support des feuilles situé entre deux rails respectifs.

25. Dispositif selon la revendication 24, caractérisé en ce que l'élément pivotant comporte respectivement un bras de support des feuilles, à l'extérieur des deux rails les plus extérieurs.

26. Dispositif selon la revendication 7 ou 8, caractérisé en ce que le second élément en forme de cadre possède un fond, situé en vis-à-vis du voyant et une ouverture pour le passage de l'élément pivotant.

27. Dispositif selon la revendication 26, caractérisé en ce que le second élément en forme de cadre comporte, des deux côtés de l'ouverture, des longerons qui s'étendent dans la direction de déplacement des éléments en forme de cadres et possèdent une section transversale en forme de L.

28. Dispositif selon la revendication 27, caractérisé en ce que l'élément de commande est prévu sur les longerons.

29. Dispositif selon la revendication 7 ou 8, caractérisé en ce que le second élément en forme de cadre possède une paroi transversale intérieure et en ce que l'élément de commande s'étend en avant de cette paroi transversale, lorsque les éléments en forme de cadres sont rétractés l'un dans l'autre.

30. Dispositif selon l'une des revendications 7 ou 8, caractérisé en ce que le premier élément en forme de cadre comporte le voyant et est réalisé sous la forme d'un boîtier, hors duquel le second élément en forme de cadre réalisé sous la forme d'un tiroir peut être ressorti.

31. Dispositif selon la revendication 1, caractérisé en ce que le dispositif presseur est disposé dans le premier élément en forme de cadre.

32. Dispositif selon la revendication 31, caractérisé en ce que le dispositif presseur peut être désactivé par passage par-dessus le second élément en forme de cadre.

33. Dispositif selon la revendication 1, caractérisé en ce que les moyens de guidage sont installés sur le second élément en forme de cadre.

34. Dispositif selon la revendication 1, caractérisé en ce que les moyens de guidage d'une part et le dispositif presseur d'autre part sont constitués par des composants respectivement séparés.

35. Dispositif selon la revendication 1, caractérisé par une butée (52), contre laquelle on peut appliquer l'arête transversale de la feuille individuelle, qui est située dans la direction opposée, lorsque le second dispositif de maintien est dans la position d'extrémité extérieure.

36. Dispositif selon la revendication 2 ou 33, caractérisé en ce que les moyens de guidage comportent des bras élastiques qui s'étendent le long de la feuille individuelle séparée.

37. Dispositif selon la revendication 36, caractérisé en ce que lorsque les éléments en forme de cadres sont extraits l'un de l'autre, les bras élastiques libèrent un passage de sortie pour la feuille individuelle.

38. Dispositif selon la revendication 36 ou 37, caractérisé en ce que le second dispositif de maintien monté sur le second élément en forme de cadre comporte une barrette formant séparateur, qui s'étend transversalement par rapport à la direction de déplacement de la partie en forme de cadre et au-dessous de laquelle s'étendent les bras élastiques.

39. Dispositif selon l'une des revendications 36 à 38, caractérisé en ce que les bras élastiques comportent des bras formés de ressorts en forme de lames.

40. Dispositif selon l'une des revendications 36 à 39, caractérisé en ce que les bras élastiques sont précontraints en direction d'un passage de renvoi.

41. Dispositif selon l'une des revendications 36 à 40, caractérisé par des butées servant à fixer au moins une position d'extrémité des bras élastiques.

42. Dispositif selon l'une des revendications 36 à 41, caractérisé en ce que les bras élastiques sont agencés de manière à repousser la feuille individuelle contre une surface d'appui.

43. Dispositif selon l'une des revendications 36 à 42, caractérisé en ce que les bras élastiques sont arrondis dans la zone de contact avec la feuille individuelle.

44. Dispositif selon l'une des revendications 33 à 43, caractérisé en ce que le dispositif de guidage comporte, en plus des moyens de guidage, un système de transfert monté dans le premier élément en forme de cadre.

45. Dispositif selon la revendication 2 ou 33, caractérisé en ce que les moyens de guidage comportent au moins un élément de guidage apte à pivoter.

46. Dispositif selon la revendication 45, caractérisé en ce que l'élément de guidage peut pivoter autour d'un axe qui est perpendiculaire au déplacement des éléments en forme de cadres et parallèle au plan principal de la pile.

47. Dispositif selon la revendication 45, caractérisé en ce que l'élément de guidage comporte des ressorts.

48. Dispositif selon la revendication 47, caractérisé en ce que l'élément de guidage comporte un ressort formé d'un fil.

49. Dispositif selon l'une des revendications 45 à 48, caractérisé en ce que l'élément de guidage est agencé de manière à s'engager latéralement au-dessous de la feuille individuelle.

50. Dispositif selon l'une des revendications 45 à 49, caractérisé en ce que l'élément de guidage peut être commandé par des butées situées sur le premier élément en forme de cadre.

51. Dispositif selon l'une des revendications 1 ou 3, caractérisé en ce que le dispositif de guidage comporte un coin installé dans le premier élément en forme de cadre.

52. Dispositif selon la revendication 51, caractérisé en ce que le coin est monté de manière à être déplaçable.

53. Dispositif selon la revendication 51 ou 52, caractérisé en ce que le coin s'engage au-dessous du bord d'extrémité de la feuille individuelle, qui est situé à l'opposé du second dispositif de maintien, lorsque la feuille individuelle est séparée.

54. Dispositif selon la revendication 52, caractérisé en ce que le coin est agencé de manière à suivre le second élément en forme de cadre lorsque les éléments en forme de cadres sont ressortis l'un de l'autre.

55. Dispositif selon la revendication 53 ou 54, caractérisé en ce que le coin est agencé de manière à soulever la feuille individuelle en avant d'une butée prévue pour le bord.

56. Dispositif selon la revendication 1 ou 3, caractérisé en ce que le dispositif de guidage comporte un coin installé sur le second élément en forme de cadre.

57. Dispositif selon la revendication 56, caractérisé en ce que le coin est situé sur le second dispositif de maintien (20).

58. Dispositif selon la revendication 57, caractérisé en ce que le second dispositif de maintien possède une surface oblique, dans le prolongement de laquelle se trouve disposé le coin.

59. Dispositif selon la revendication 57 ou 58, caractérisé par une lamelle de ressort constituant le coin et possédant une surface de glissement pour le bord de la feuille individuelle.

60. Dispositif selon les revendications 51 à 59, caractérisé en ce que le coin est précontraint élastiquement dans sa position dans laquelle il est engagé au-dessous de la feuille.

61. Dispositif selon l'une des revendications 1 à 3, caractérisé par un passage de séparation et un passage de renvoi pour la feuille individuelle, qui sont disposés des deux côtés d'un séparateur, et par des moyens servant à bloquer au moins l'un des passages pour empêcher la pénétration d'une feuille dans une direction erronée.

62. Dispositif selon la revendication 4 ou 61, caractérisé en ce que les moyens de blocage sont prévus sur le second élément en forme de cadre.

63. Dispositif selon l'une des revendications 4 ou 61, caractérisé en ce que le passage de renvoi est bloqué pendant le déplacement d'extraction des éléments en forme de cadres.

64. Dispositif selon la revendication 63, caractérisé en ce que les moyens de blocage s'engagent par-dessus les extrémités des feuilles de la pile restante.

65. Dispositif selon la revendication 4 ou 61, caractérisé en ce que les moyens bloquent le passage de sortie pendant le mouvement d'introduction des éléments en forme de cadres l'un dans l'autre.

66. Dispositif selon la revendication 4 ou 61, caractérisé en ce que les moyens comportent un élément de blocage précontraint élastiquement dans la position de blocage.

67. Dispositif selon la revendication 66, caractérisé en ce que l'élément de blocage est réalisé sous la forme d'une lamelle élastique, qui peut être amenée dans une position de libération par la feuille individuelle, à l'encontre de la précontrainte élastique.

68. Dispositif selon la revendication 67, caractérisé en ce que la lamelle élastique possède une partie oblique de commande.

69. Dispositif selon la revendication 5, caractérisé en ce que le levier peut pivoter autour d'un axe parallèle à la direction de déplacement des éléments en forme de cadres.

70. Dispositif selon la revendication 5, caractérisé en ce que le levier peut pivoter autour d'un axe perpendiculaire à la direction de déplacement des éléments en forme de cadres et parallèle au plan principal de la pile.

71. Dispositif selon la revendication 69 ou 70, caractérisé en ce que le levier est agencé de manière à agir sur la feuille individuelle, à proximité de deux bords respectivement en vis-à-vis.

72. Dispositif selon l'une des revendications 5 ou 69 à 71, caractérisé par une multiplicité de leviers.

73. Dispositif selon la revendication 72, caractérisé par un couple de leviers, qui s'accrochent à la feuille au niveau de bords individuels réciproquement opposés de cette feuille.

74. Dispositif selon la revendication 6, caractérisé en ce que l'organe de transmission est installé sur les moyens de guidage.

75. Dispositif selon la revendication 6 ou 74, caractérisé en ce que l'organe de transmission peut être déplacé dans la direction de déplacement des éléments en forme de cadres.

76. Dispositif selon l'une des revendications 6, 74 ou 75, caractérisé en ce que les moyens de guidage comportent au moins un levier pivotant.

77. Dispositif selon l'une des revendications 6 et 74 à 76, caractérisé en ce que les moyens de guidage peuvent être activés, au voisinage de la position d'extrémité extérieure des éléments en forme de cadres.

78. Dispositif selon l'une des revendications 74 à 77, caractérisé en ce qu'il est prévu un organe de transmission commun pour une multiplicité de moyens de guidage.

79. Dispositif selon l'une des revendications précédentes, caractérisé par des moyens (36, 81), qui maintiennent la pile restante dans le second élément en forme de cadre (14) à distance d'un passage de renvoi pour la feuille individuelle.

80. Dispositif selon la revendication 79, caractérisé en ce que les moyens comprennent des organes de retenue (36, 81), qui sont montés fixes sur le premier élément en forme de cadre.

81. Dispositif selon la revendication 79, caractérisé en ce que les moyens comprennent une lamelle de guidage (308) s'étendant à travers le passage.

82. Dispositif selon la revendication 79, caractérisé en ce que des moyens formant entretoises (93) sont prévus sur le côté, tourné à l'opposé de la feuille séparée, du second dispositif de maintien.

83. Dispositif selon la revendication 79 ou 82, caractérisé en ce que les moyens formant entretoises (38) sont prévus sur l'extrémité du second élément en forme de cadre, située à l'opposé du second dispositif de maintien.

84. Dispositif selon la revendication 79, 82 ou 83, caractérisé en ce que sur le premier élément en forme de cadre il est prévu des moyens formant entretoises (36), qui s'engagent par-dessus des bords de feuilles, qui sont parallèles à la direction de déplacement des éléments en forme de cadres.

85. Dispositif selon la revendication 7 ou 8, caractérisé en ce que les moyens de sortie et de renvoi comprennent :

un dispositif de séparation servant à séparer la feuille individuelle de la pile restante,

un dispositif d'amenée servant à amener des feuilles au dispositif de séparation,

un premier dispositif de maintien servant à maintenir la feuille individuelle dans le premier élément en forme de cadre, et

un second dispositif de maintien servant à maintenir la pile restante dans le second élément en forme de cadre.

86. Dispositif selon l'une des revendications 1 à 6 ou 85, caractérisé en ce que le second dispositif de maintien d'une part et le premier élément en forme de cadre d'autre part comprennent des éléments, qui s'interpénètrent à la manière de peignes et définissent la position relative de la pile restante par rapport au passage de renvoi de la feuille individuelle.

87. Dispositif selon l'une des revendications 1 à 6 ou 85, caractérisé en ce que le premier élément en forme de cadre possède une butée (52), devant laquelle le bord de la feuille individuelle, qui est tourné à l'opposé du second élément en forme de cadre ressorti, peut être amené au moyen d'un dispositif de soulèvement (32).

88. Dispositif selon la revendication 87, caractérisé en ce que le dispositif de soulèvement (32) maintient la feuille individuelle sur une section partielle importante de la course de retour des éléments en forme de cadres (12, 14).

89. Dispositif selon la revendication 87, caractérisé en ce que le second dispositif de maintien (20) comporte un passage (54) pour la butée (52).

90. Dispositif selon la revendication 87, caractérisé en ce que la butée comporte une partie coudée (78), qui s'engage derrière le bord de la feuille individuelle.

91. Dispositif selon la revendication 87, caractérisé en ce que le dispositif de soulèvement comporte un coin de montée (318).

92. Dispositif selon la revendication 91, caractérisé en ce que le coin de montée peut être activé d'une manière commandée par le déplacement des éléments en forme de cadres.

93. Dispositif selon la revendication 92, caractérisé en ce que le coin de montée (318) peut avoir un déplacement limité dans la direction de déplacement des éléments en forme de cadres.

94. Dispositif selon la revendication 91, caractérisé en ce que le coin de montée possède au moins une aile pivotante (336).

95. Dispositif selon la revendication 87, caractérisé en ce que le dispositif de soulèvement (32, 336, 318) peut être activé et désactivé d'une manière commandée par le déplacement relatif des éléments en forme de cadres.

96. Dispositif selon l'une des revendications 1 à 8, caractérisé par un dispositif de transfert de feuilles individuelles, à l'aide duquel la feuille individuelle séparée peut être amenée depuis un passage de sortie à un passage de renvoi, lorsque les éléments en forme de cadres sont dans leur position ressortie, et qui comportent :

des moyens de guidage, associés à l'extrémité de la feuille individuelle, qui est tournée vers le second élément en forme de cadre ressorti, et

un dispositif de soulèvement, associé à l'extrémité située à l'opposé du second élément en forme de cadre.

97. Dispositif selon la revendication 96, caractérisé en ce que les moyens de guidage et/ou le dispositif de soulèvement peuvent être activés et désactivés d'une manière commandée par le déplacement des éléments en forme de cadres.

98. Dispositif selon la revendication 96 ou 97, caractérisé en ce que les moyens de guidage et/ou le dispositif de soulèvement comprennent des ressorts en forme de lames, qui soutiennent la feuille individuelle.

99. Dispositif selon la revendication 96, caractérisé par des moyens (80) de soutien des feuilles individuelles, qui soutiennent la feuille entre les moyens de guidage (79) et le dispositif de soulèvement (32).

100. Dispositif selon la revendication 99, caractérisé en ce que les moyens de soutien comprennent des ressorts en forme de lames et peuvent être activés et désactivés d'une manière commandée par le déplacement des éléments en forme de cadres.

101. Dispositif selon la revendication 98 ou 100, caractérisé en ce que les zones des ressorts en forme de lames, qui viennent en contact avec la feuille individuelle, sont arrondies.

102. Dispositif selon la revendication 96 ou 99, caractérisé par une inversion mécanique de la commande des moyens de guidage et/ou des moyens de soutien et/ou du dispositif de soulèvement entre une position active et une position inactive.

103. Dispositif selon la revendication 102, caractérisé en ce que l'inversion de la commande s'effectue dans des positions relatives prédéterminées des éléments en forme de cadres.

104. Dispositif selon la revendication 102 ou 103, caractérisé en ce qu'il est prévu un organe commun d'inversion de commande.

105. Dispositif selon la revendication 96 ou 99, caractérisé en ce que le premier dispositif de maintien comporte une couche adhésive (26) et en ce que le dispositif de soulèvement et/ou les moyens de guidage et/ou les moyens de soutien sont agencés de manière à détacher la feuille individuelle de la couche adhésive (26).

106. Dispositif selon la revendication 96 ou 99, caractérisé en ce que le dispositif de soulèvement et/ou les moyens de guidage et/ou les moyens de soutien sont agencés de manière à agir au moins sur les bords de la feuille individuelle, qui sont parallèles à la direction d'extraction.

107. Dispositif selon la revendication 106, caractérisé en ce qu'ils sont agencés en outre de manière à agir dans la zone centrale de la feuille individuelle.

108. Dispositif selon la revendication 107, caractérisé en ce qu'ils sont réalisés de manière à agir essentiellement sur toute la largeur de la feuille individuelle.

109. Dispositif selon la revendication 96, caractérisé en ce que les moyens de guidage (350) constituent une partie du dispositif de séparation.

110. Dispositif selon la revendication 96, caractérisé en ce que le dispositif de soulèvement et les moyens de guidage sont constitués par des surfaces en coins dirigées en des sens opposés.

111. Dispositif selon la revendication 96 ou 99, caractérisé en ce qu'il comporte un dispositif presseur, qui, lorsque les éléments en forme de cadres sont à l'état rentré l'un dans l'autre, repousse la pile contre une paroi du premier élément en forme de cadre et, lorsque les éléments en forme de cadres sont extraits l'un de l'autre, assume une fonction du système de transfert.

112. Dispositif selon la revendication 111, caractérisé en ce que le dispositif presseur est formé par des ressorts en forme de lames.

113. Dispositif selon la revendication 111 ou 112, caractérisé en ce que la paroi des éléments en forme de cadres comporte un voyant servant à exposer la feuille située respectivement sous ce voyant.

114. Dispositif selon l'une des revendications 98 ou 100 ou 112, caractérisé en ce que les ressorts en forme de lames sont des bras de groupes de ressorts en forme de lames à plusieurs bras.

115. Dispositif selon la revendication 96, caractérisé en ce que le système de transfert forme un élément du premier dispositif de maintien.

116. Dispositif selon l'une des revendications précédentes, caractérisé en ce que le premier élément en forme de cadre est un boîtier, hors duquel la pile peut être prélevée à l'aide du tiroir.

117. Dispositif selon la revendication 85 ou 115, caractérisé en ce que le premier dispositif de maintien comporte deux systèmes de maintien, dont le premier bloque la feuille individuelle au début du mouvement d'extraction des éléments en forme de cadres l'un hors de l'autre, tandis que le second bloque la feuille individuelle à la fin du mouvement d'extraction, et qui bloquent tous les deux la feuille individuelle entre le début et la fin.

118. Dispositif selon l'une des revendications 2 à 8, caractérisé par un dispositif presseur, qui repousse la pile contre un voyant, lorsque les éléments en forme de cadres sont à l'état emboîté l'un dans l'autre.

119. Dispositif selon la revendication 1 ou 118, caractérisé en ce que le dispositif de guidage est situé dans un élément en forme de cadre et que le dispositif presseur est situé dans l'autre élément en forme de cadre.

120. Dispositif selon la revendication 1 ou 118, caractérisé en ce que le dispositif de guidage et le dispositif presseur sont situés dans le même élément en forme de cadre.

121. Dispositif selon la revendication 118, caractérisé en ce que des éléments du dispositif presseur forment simultanément des éléments du dispositif de guidage.

122. Dispositif selon la revendication 1 ou 118, caractérisé en ce que le dispositif presseur et le dispositif de guidage appliquent des forces de même sens sur la pile et sur la feuille individuelle.

123. Dispositif selon la revendication 1 ou 118, caractérisé en ce que le dispositif presseur est désactivé lorsque les éléments en forme de cadres sont à l'état ressorti et en ce que le dispositif de guidage est inactivé lorsque les éléments en forme de cadres sont rétractés l'un dans l'autre.

124. Dispositif selon les revendications 122 et 123, caractérisé en ce que les forces de même sens sont produites par une précontrainte élastique.

125. Dispositif selon la revendication 124, caractérisé en ce que la désactivation est réalisée au moyen d'un déplacement mécanique à l'encontre de la force élastique, lors du déplacement d'extraction des éléments en forme de cadres ou du mouvement d'introduction de ces éléments l'un dans l'autre.

126. Dispositif selon la revendication 1 ou 118, caractérisé en ce que le dispositif presseur est situé dans le premier élément en forme de cadre, qui est réalisé sous la forme d'un boîtier, et hors duquel le second élément en forme de cadre réalisé sous la forme d'un tiroir peut être ressorti.

127. Dispositif selon la revendication 126, caractérisé en ce que le tiroir comporte un fond, qui est situé en vis-à-vis du voyant et possède une ouverture, à travers laquelle le dispositif presseur, qui est fixé sur un fond du boîtier, sur le côté du fond du tiroir tourné à l'opposé du voyant, agit sur la pile.

128. Dispositif selon la revendication 127, caractérisé en ce que le tiroir possède une paroi transversale intérieure, qui, lorsqu'elle rencontre le dispositif presseur, désactive ce dispositif.

129. Dispositif selon la revendication 120 et l'une des revendications 126 à 128, caractérisé en ce que le tiroir possède, des deux côtés de l'ouverture, des surfaces de commande et des arêtes de commande pour la désactivation du dispositif de guidage.

130. Dispositif selon l'une des revendications 1 à 6, caractérisé en ce que dans le premier élément en forme de cadre se trouvent disposés des rails, qui soulèvent latéralement le dispositif de guidage, et/ou que ce dispositif de guidage comporte des éléments disposés entre les rails.

131. Dispositif selon la revendication 130, caractérisé en ce que les rails s'étendent dans la direction de déplacement des éléments en forme de cadres.

132. Dispositif selon la revendication 130 ou 131, caractérisé par un revêtement adhésif situé sur les rails.

133. Dispositif selon la revendication 1, caractérisé par les caractéristiques de l'une des revendications 2 à 8.

FIG. 6

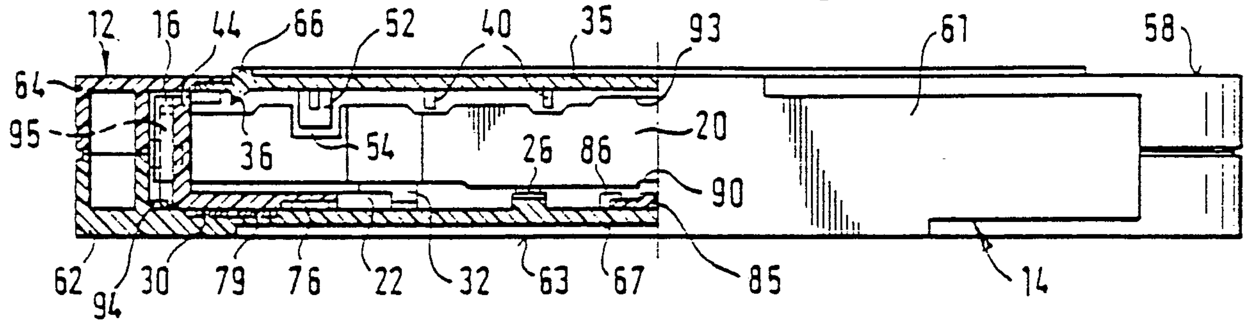
12
16
44
66
52
40
35
93
61
58
64
95
36
54
26
86
20
90
62
94
30
79
76
22
32
63
67
85
14

FIG. 1

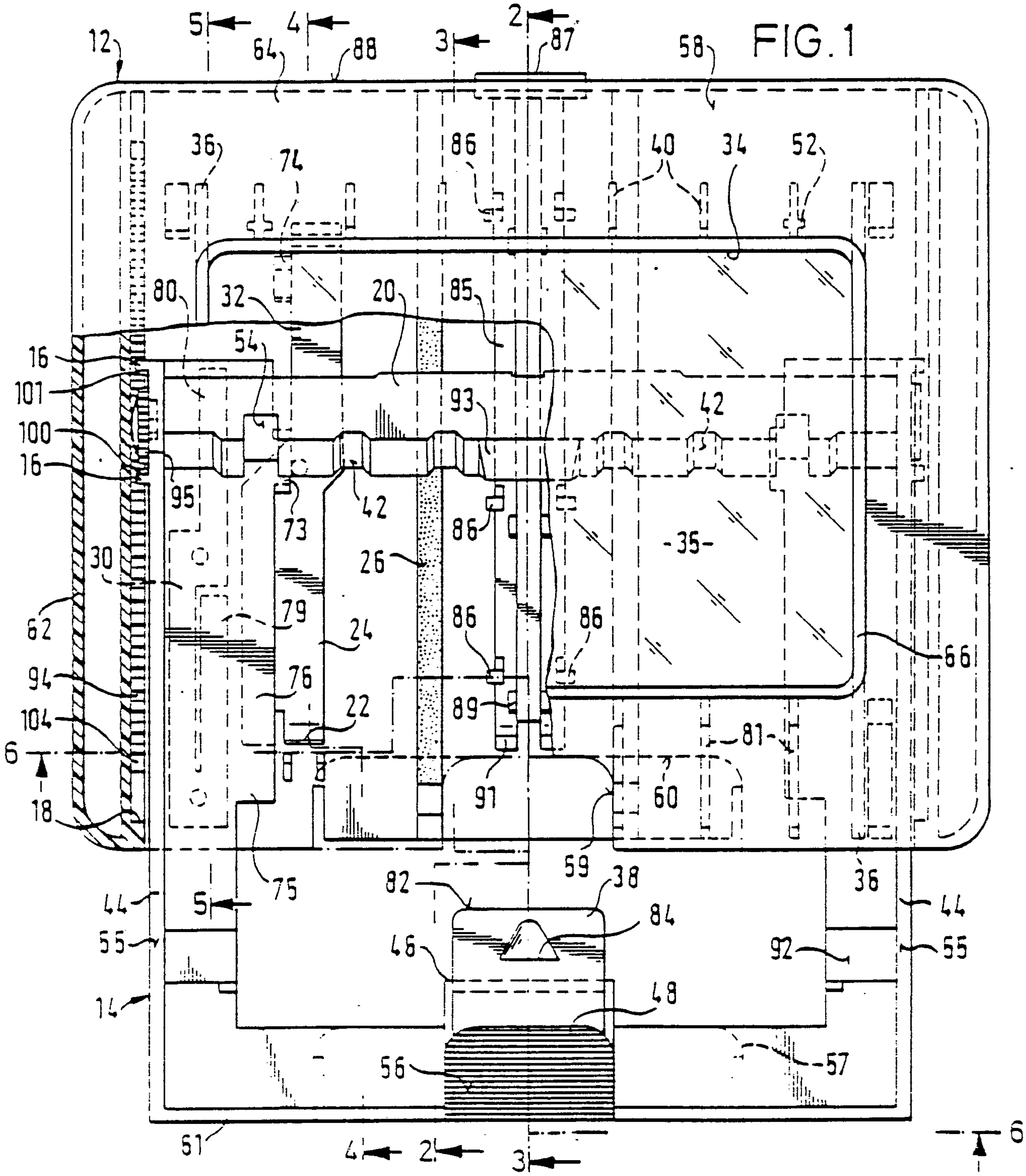
5
4
3
2
87
12
64
88
58
36
74
86
40
34
52
80
32
20
85
16
54
101
93
42
100
16
95
73
42
86
35
30
26
79
62
24
86
86
66
76
94
22
89
104
81
6
91
60
18
59
36
75
82
38
84
44
5
44
55
46
92
55
14
48
56
57
61
4
2
3
6

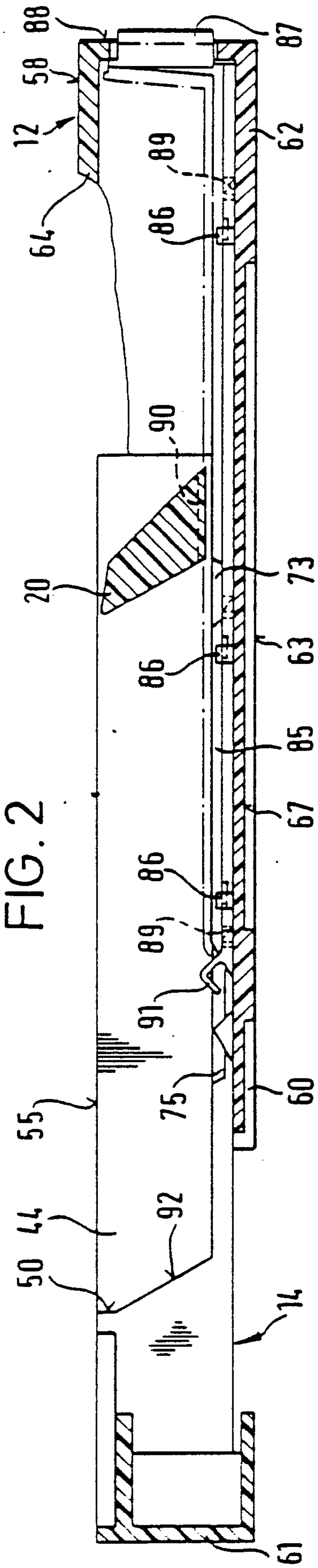
88
87
58
12
62
89
64
86
90
20
73
86
63
85
67
86
89
91
55
75
60
44
92
50
14
61

FIG. 2

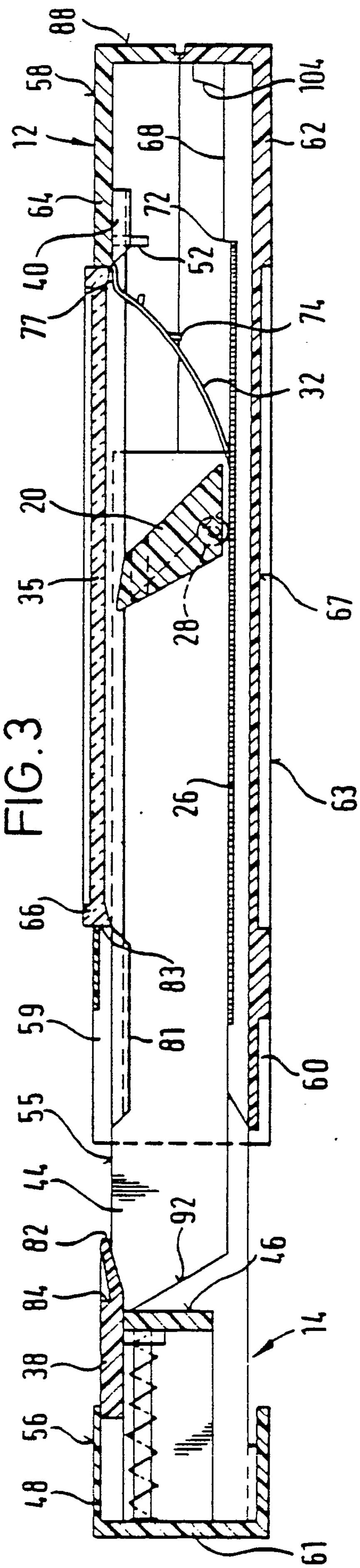
88
58
104
12
68
62
64
72
40
52
77
74
32
20
35
28
67
26
63
66
83
59
81
60
55
44
82
92
46
84
14
38
56
48
61

FIG. 3

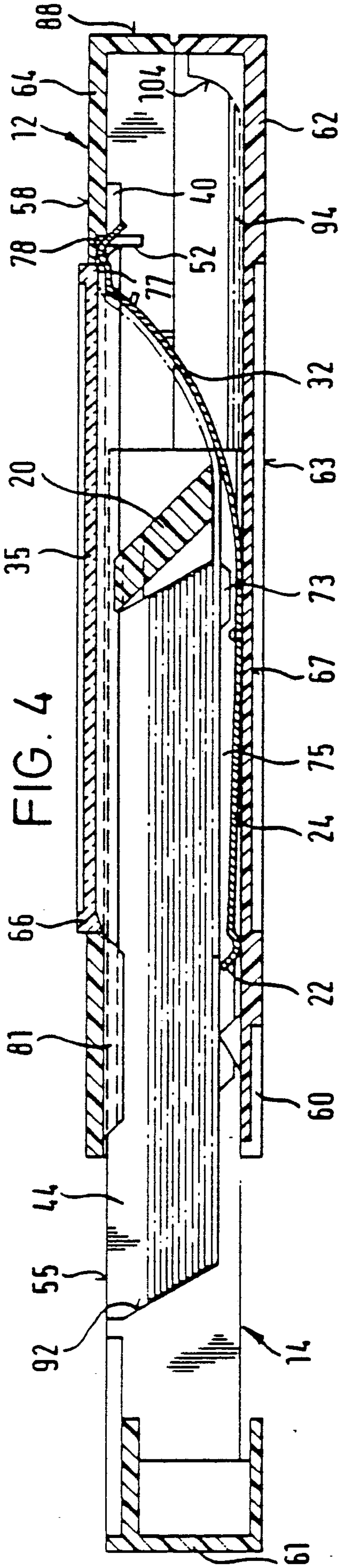
88
64
12
58
78
104
62
40
94
52
77
32
63
20
35
73
67
75
24
66
22
81
60
44
55
92
14
61

FIG. 4

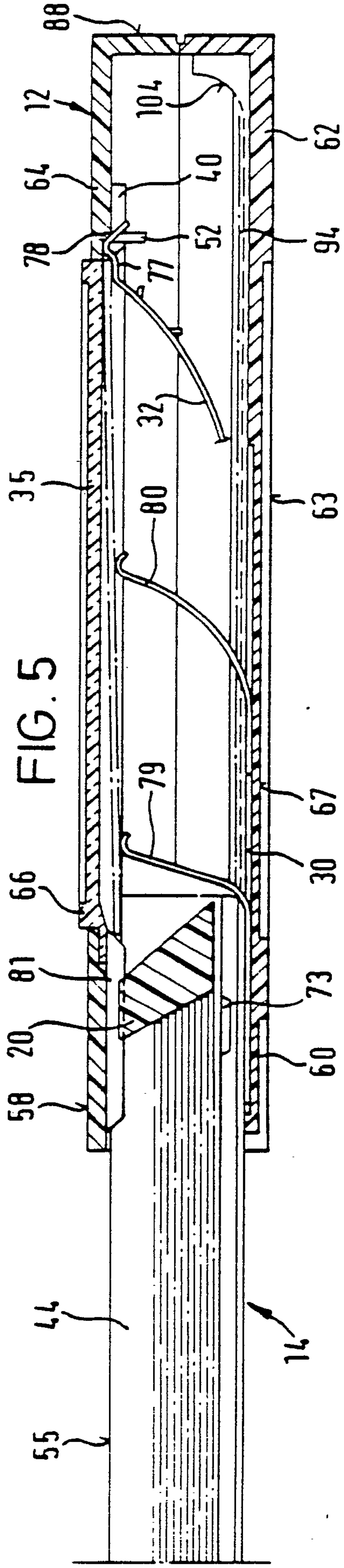
88
12
64
78
104
62
40
52
94
77
32
35
80
63
79
67
30
66
81
73
20
60
58
44
14
55

FIG. 5

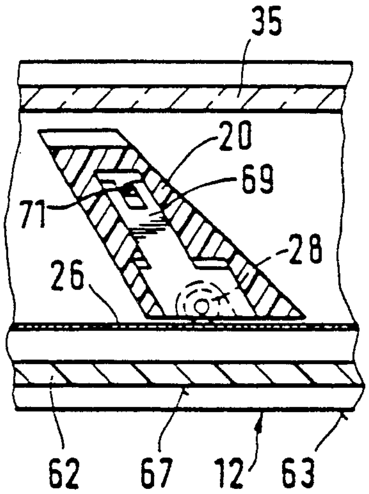


FIG. 7

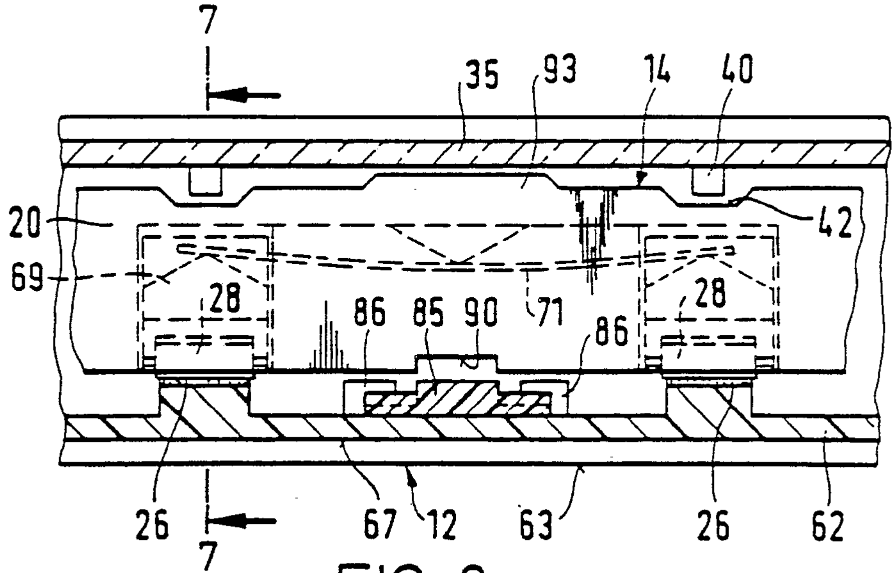


FIG. 8

FIG. 9

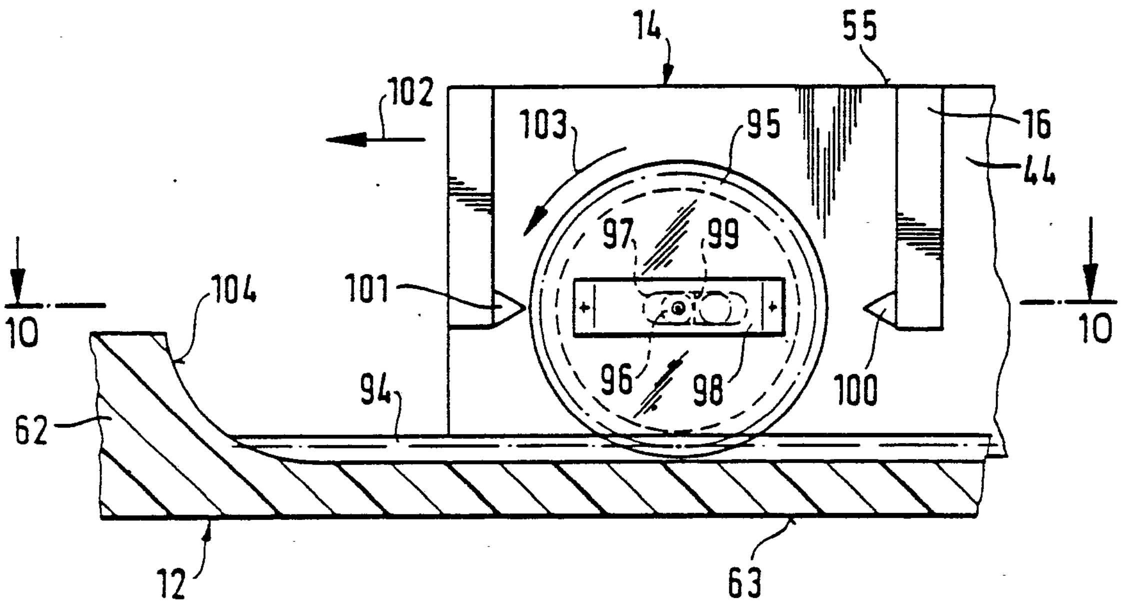


FIG. 10

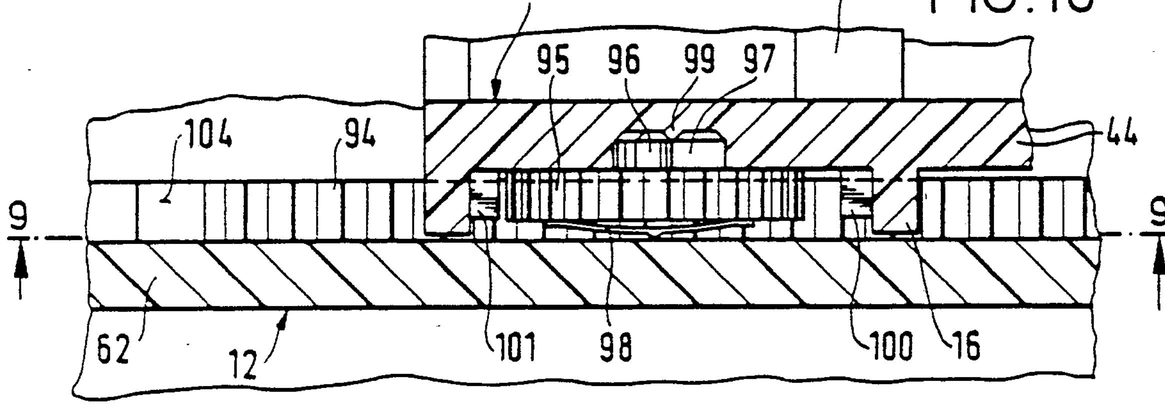

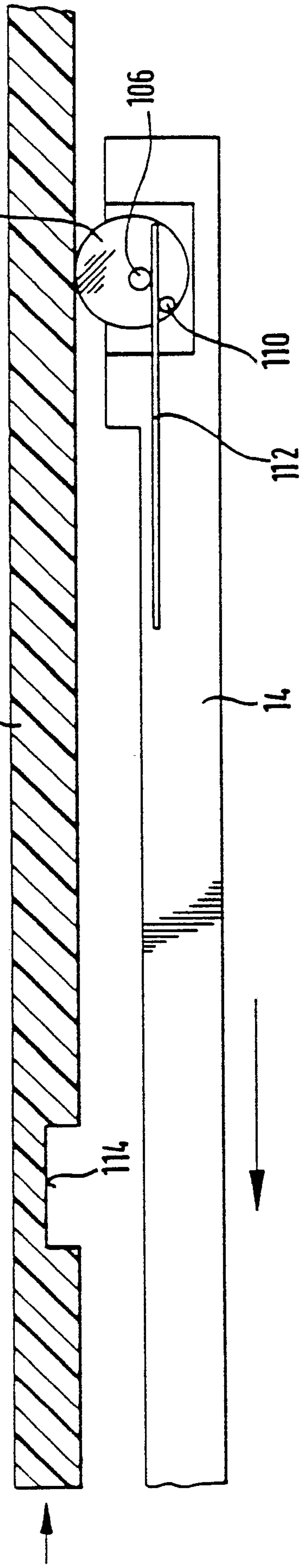
108
106
110
112
12
14
114

FIG. 11

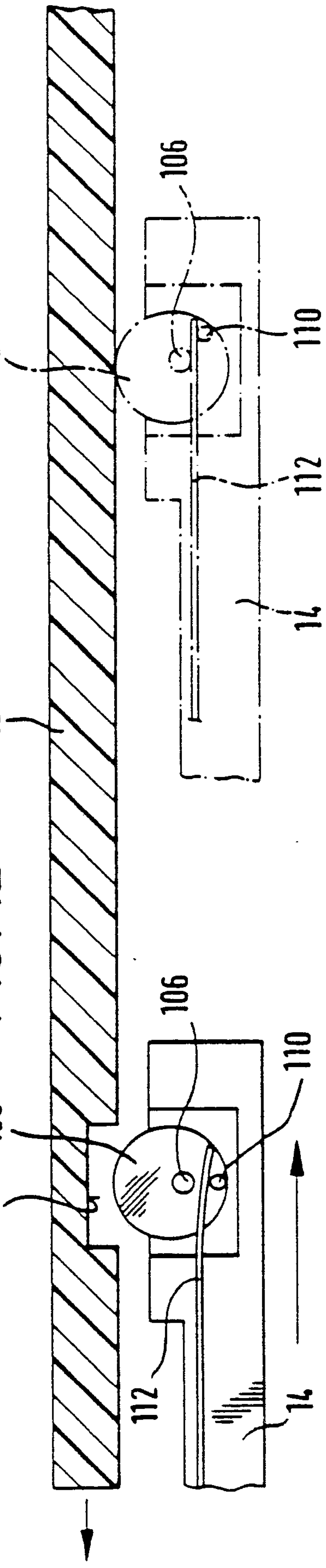
106
108
110
112
14
12
106
110
108
114
112
14

FIG. 12

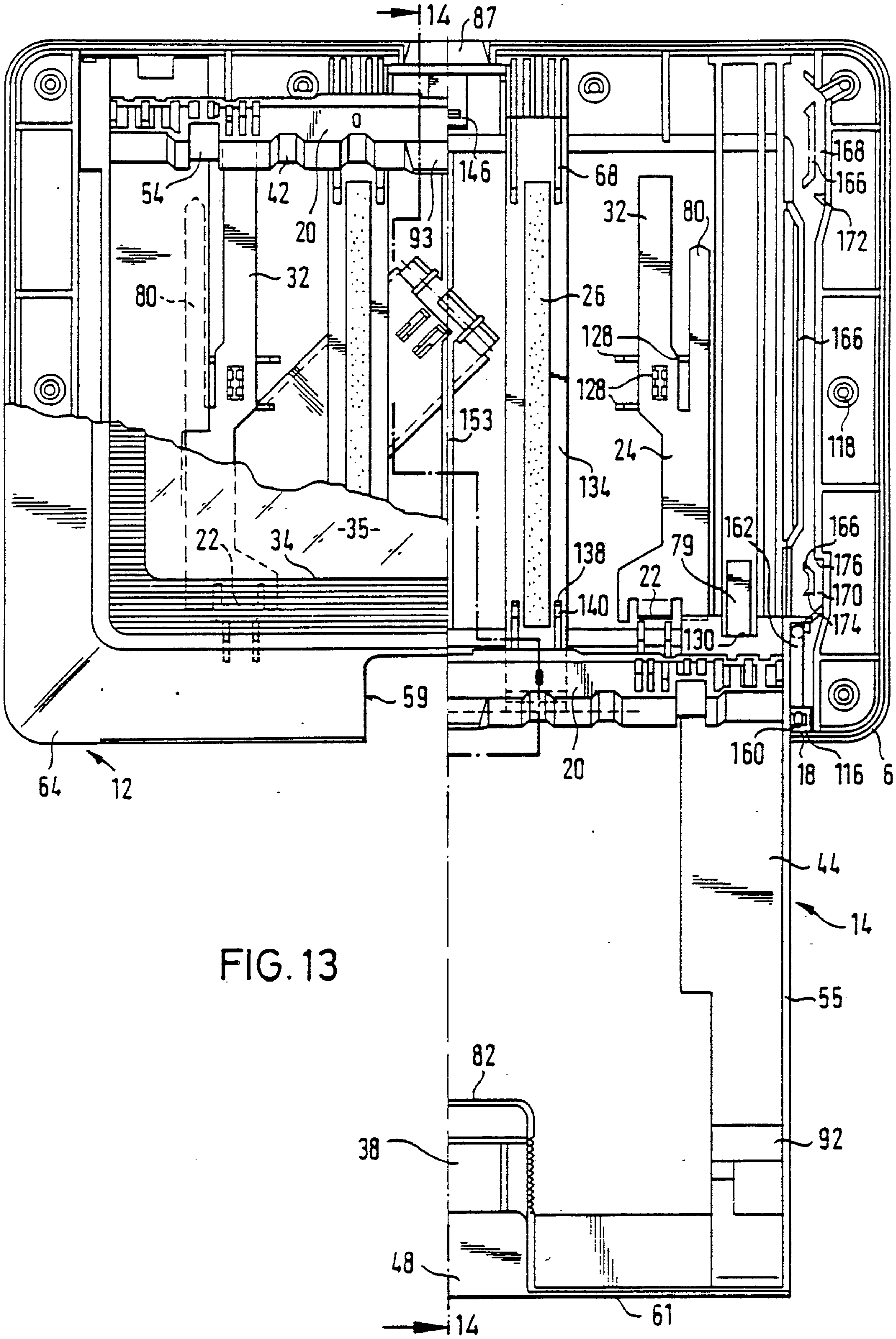
14
87
14
146
68
54
42
20
93
32
80
168
166
172
32
80
26
128
128
166
118
153
24
134
166
176
170
174
162
79
22
138
140
130
22
34
-35-
59
20
160
18
116
62
64
12
44
14
55
82
92
38
48
61
14

FIG. 13

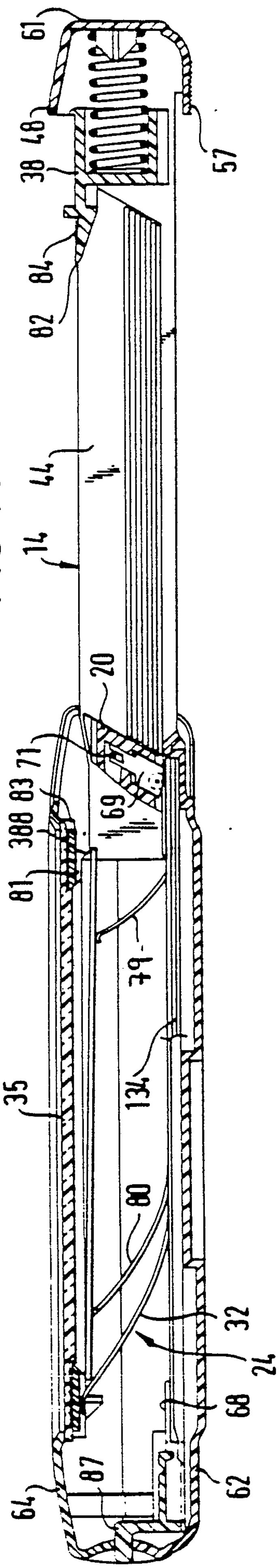


FIG.14

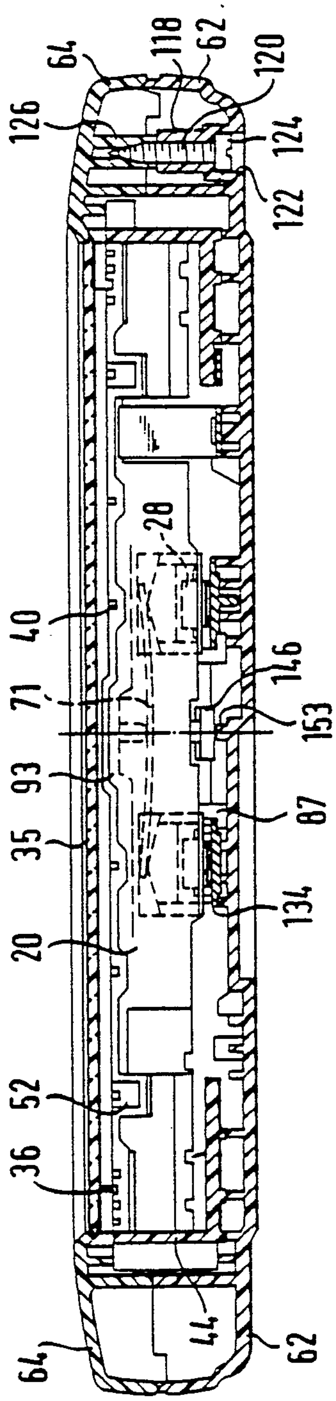


FIG.15

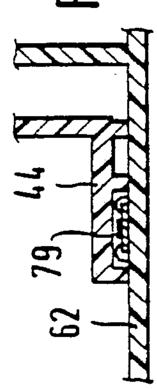


FIG.17

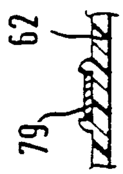


FIG.18

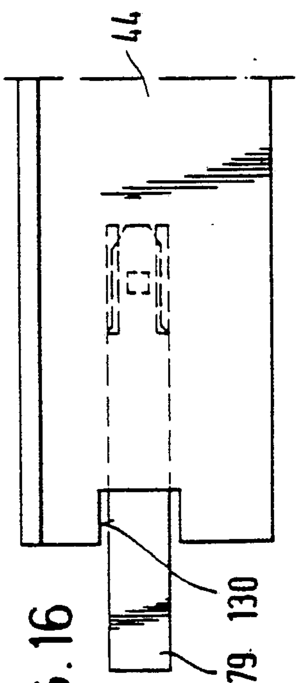


FIG.16

FIG.19

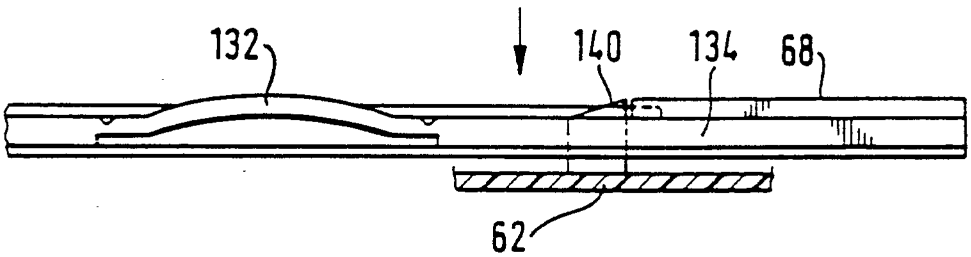


FIG.20

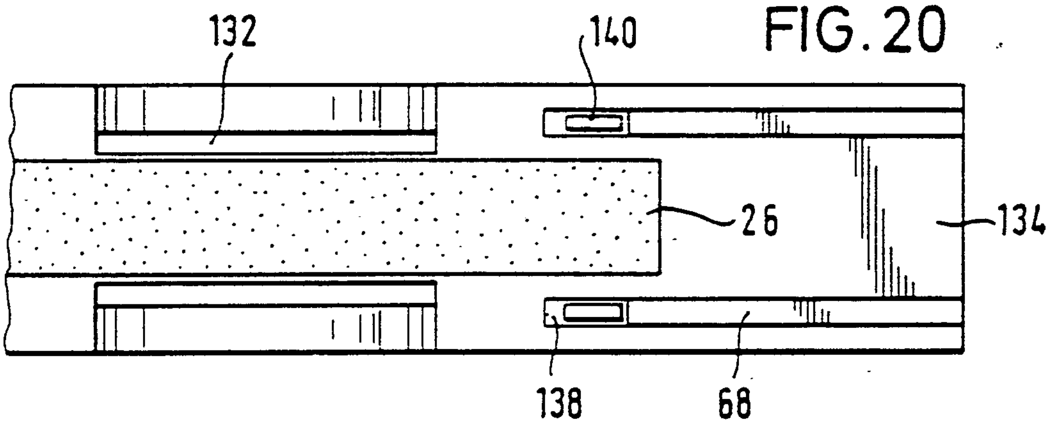


FIG.21

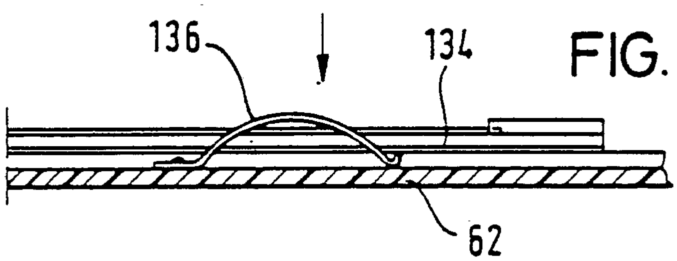


FIG.22

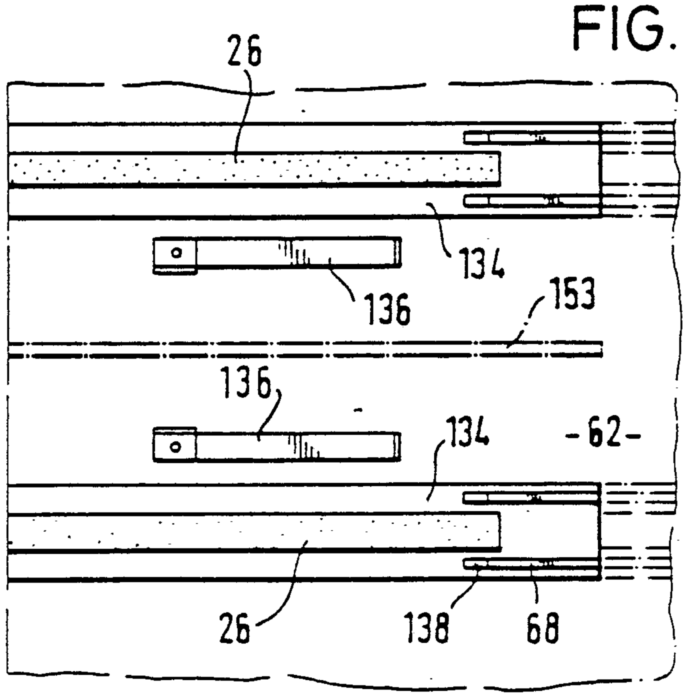

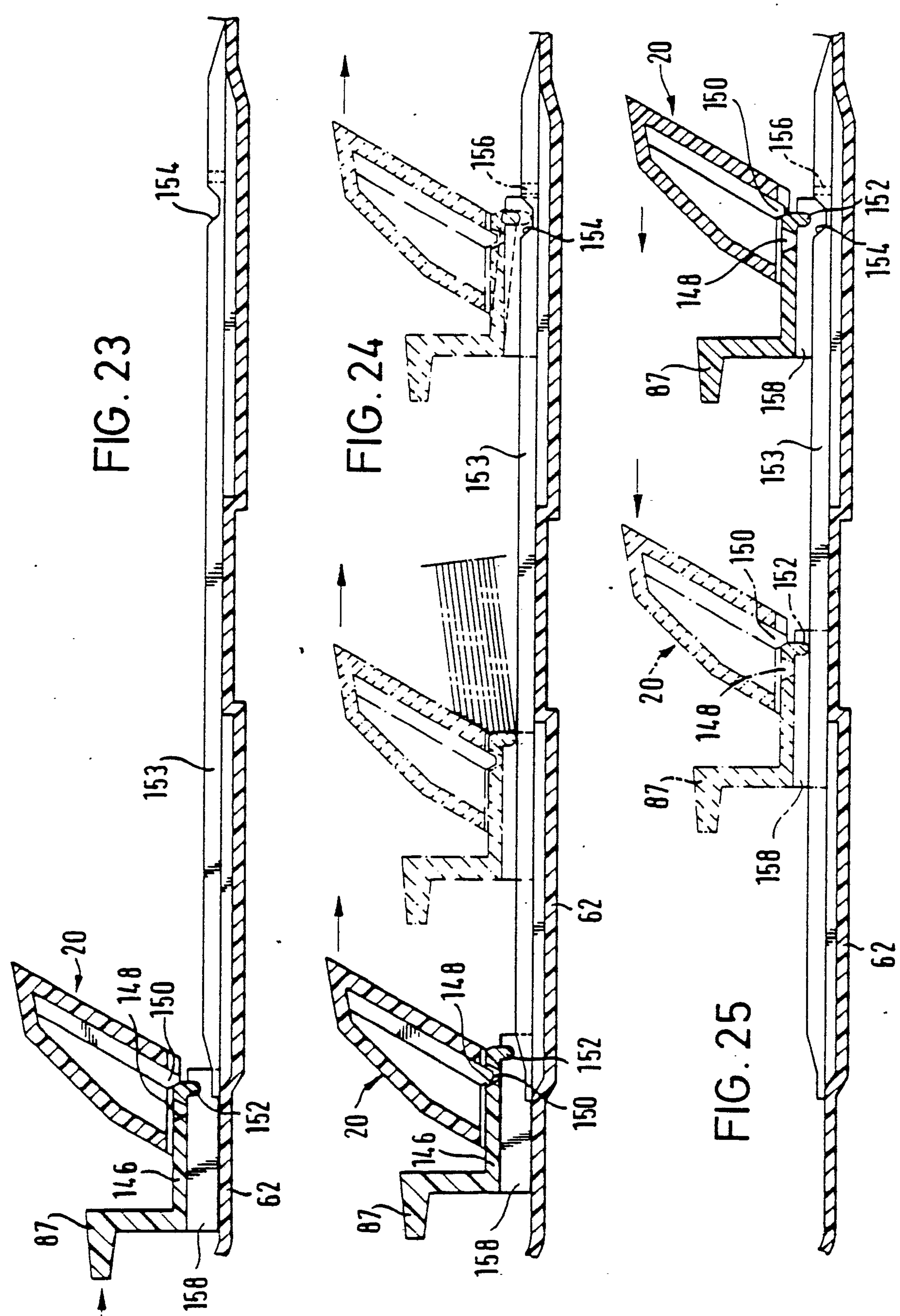


FIG. 23

FIG. 24

FIG. 25

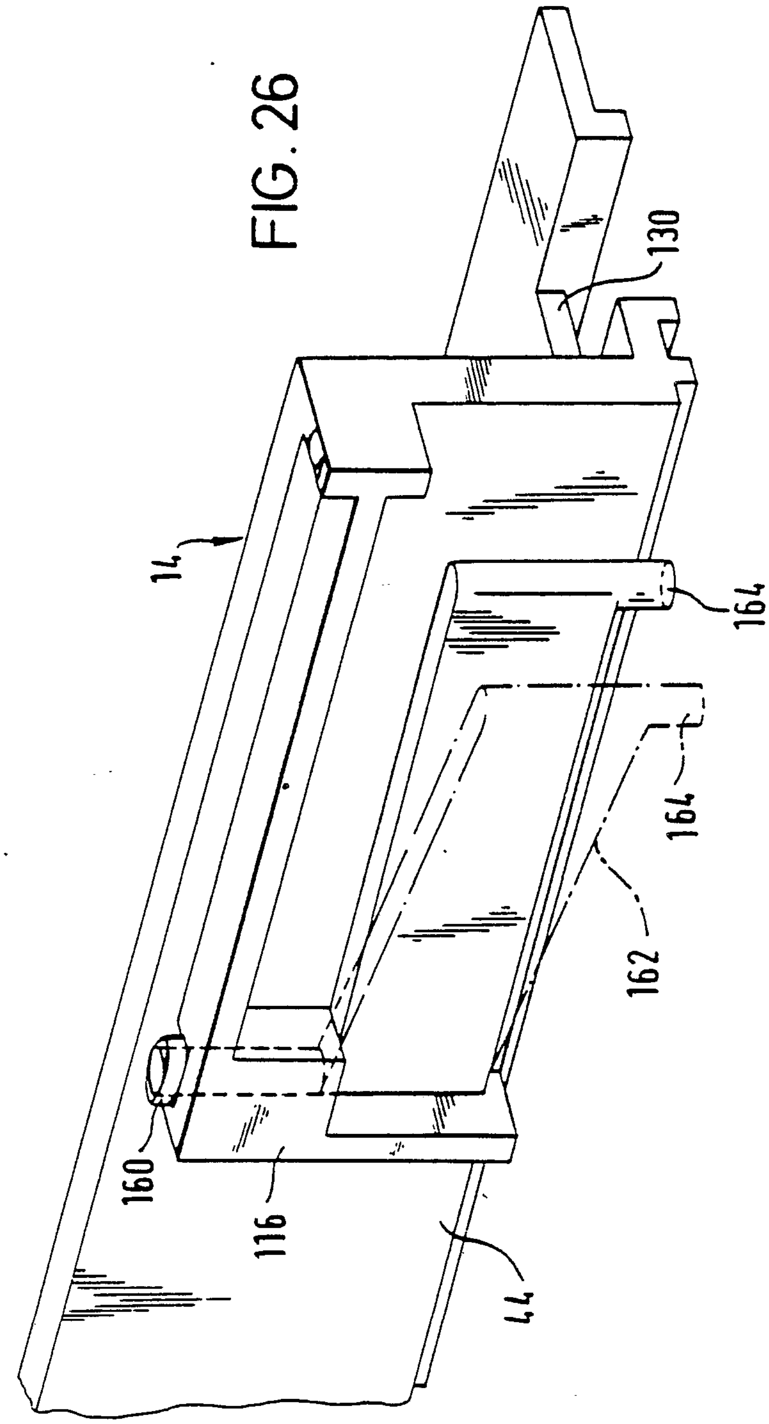
14
130
164
164
162
160
116
44

FIG. 26

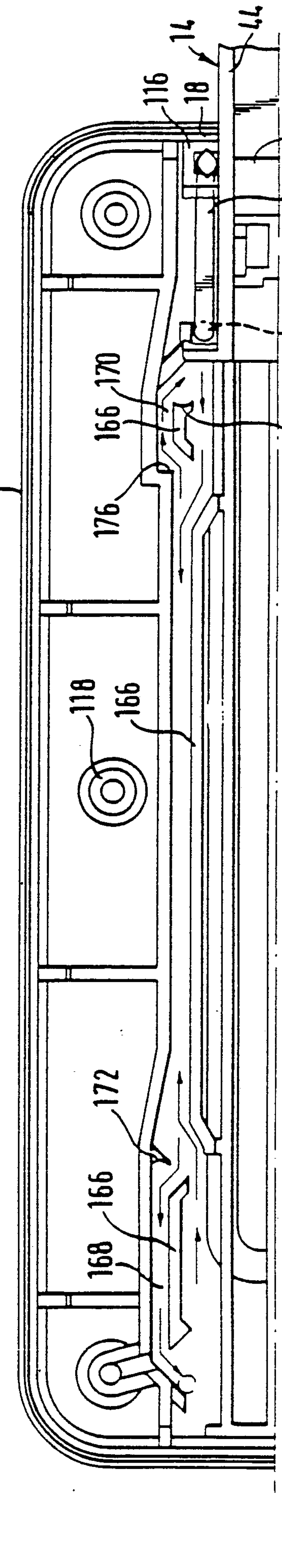
14
44
116
18
20
162
164
170
166
174
176
62
118
166
172
166
168

FIG. 27

FIG. 30

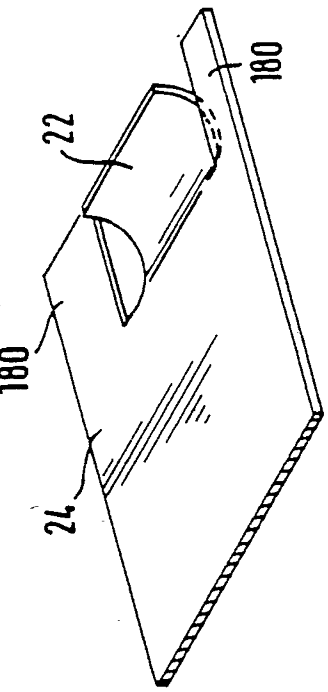


FIG.31

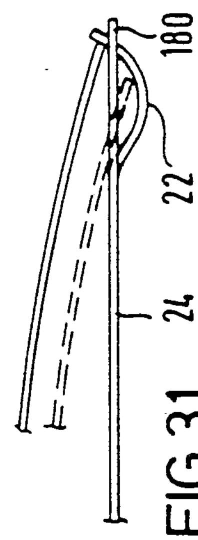


FIG.28

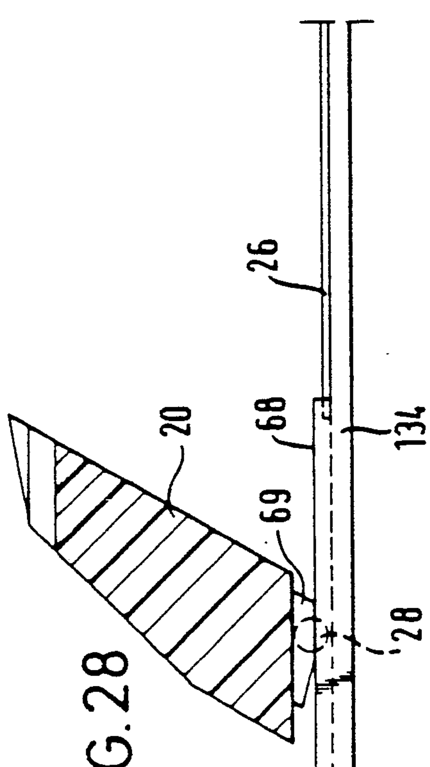


FIG. 29

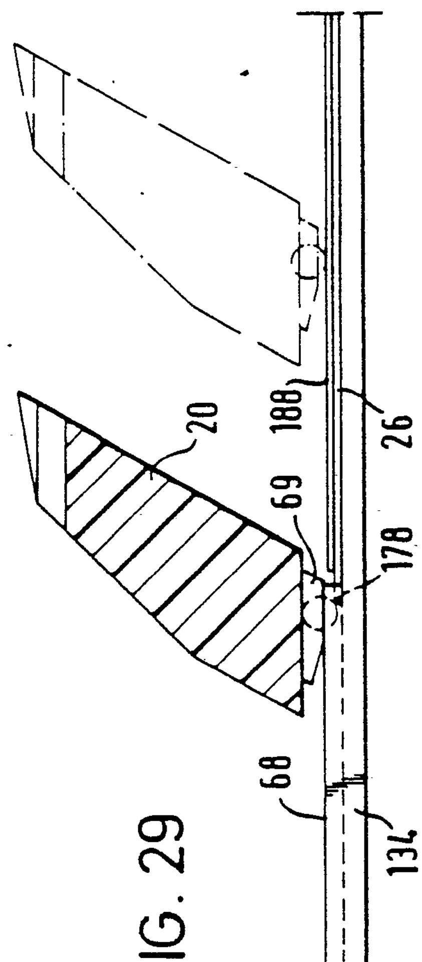

FIG. 32

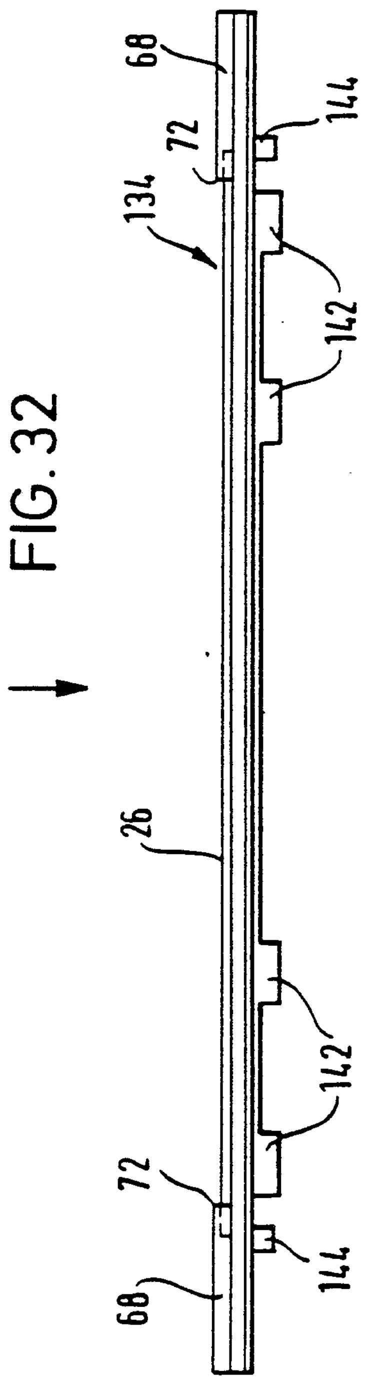


FIG. 33

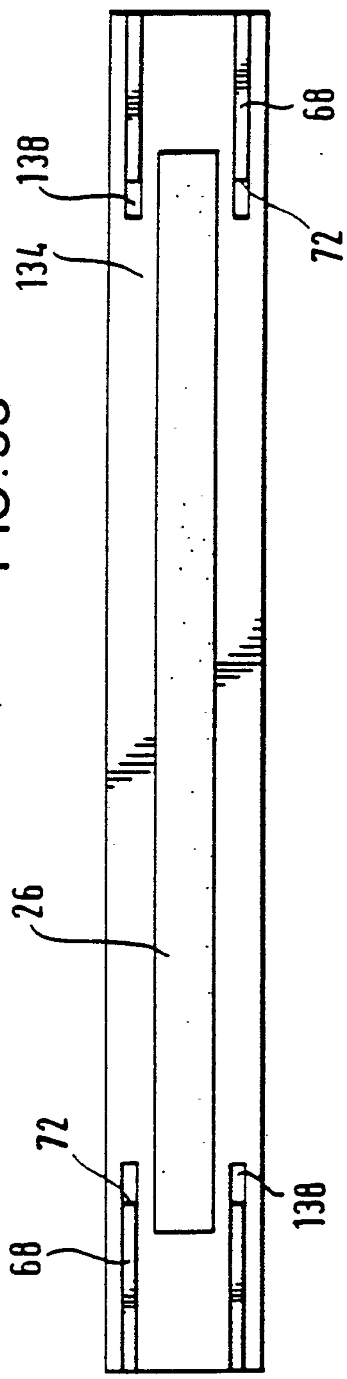

FIG. 34

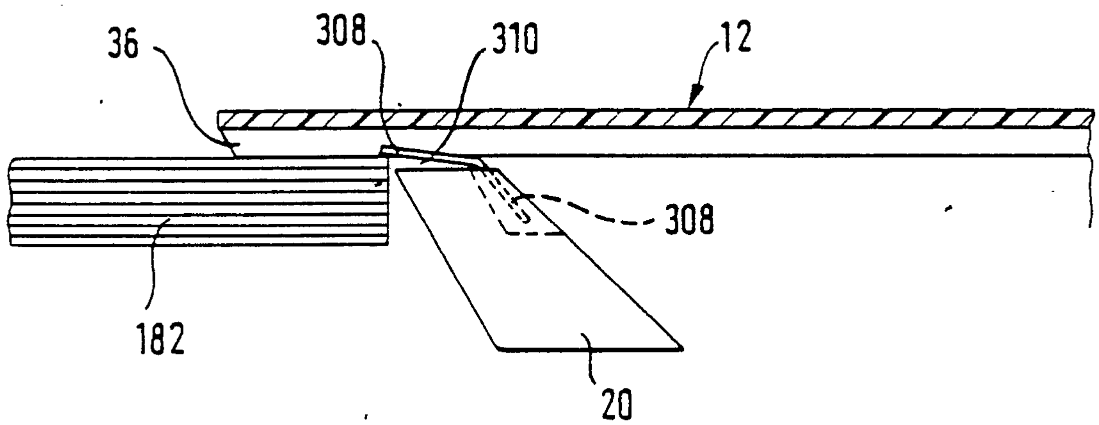

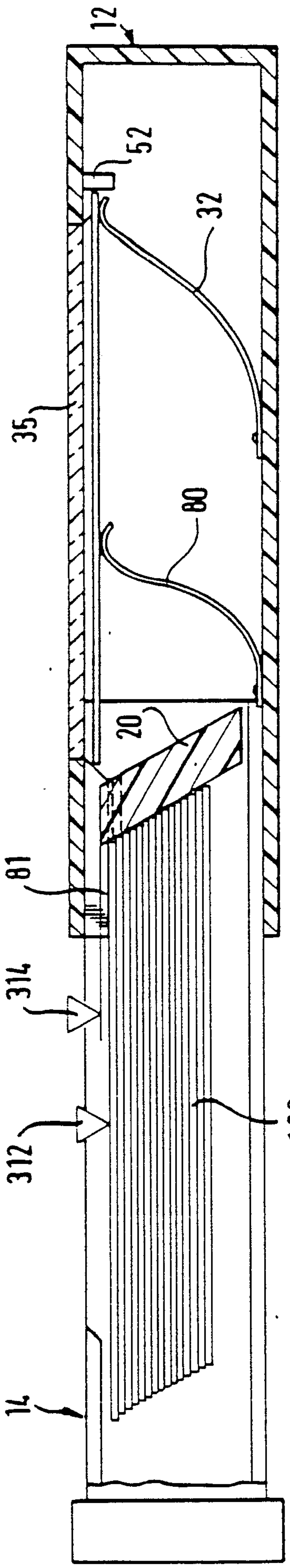


FIG. 35

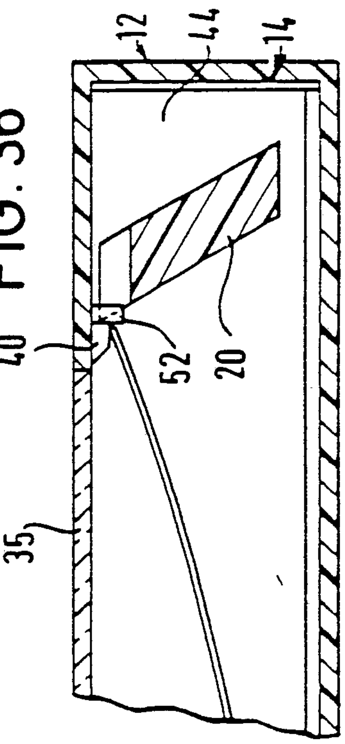


FIG. 36

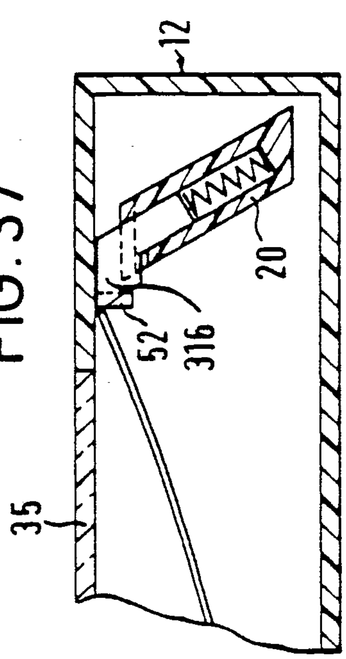


FIG. 37

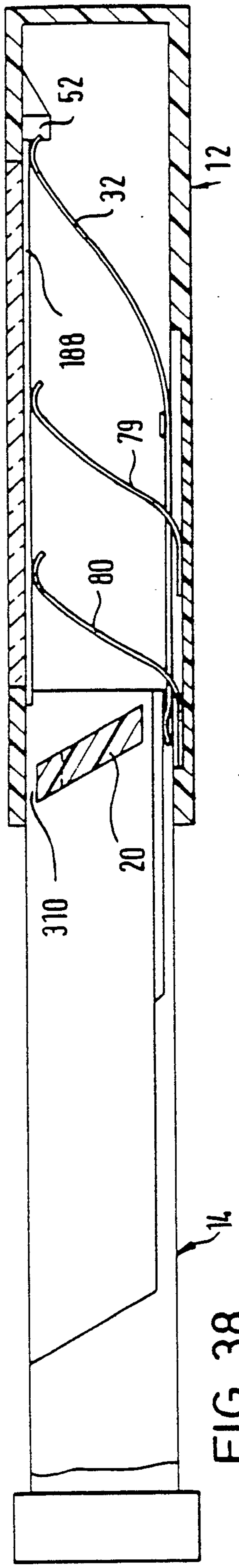


FIG. 38

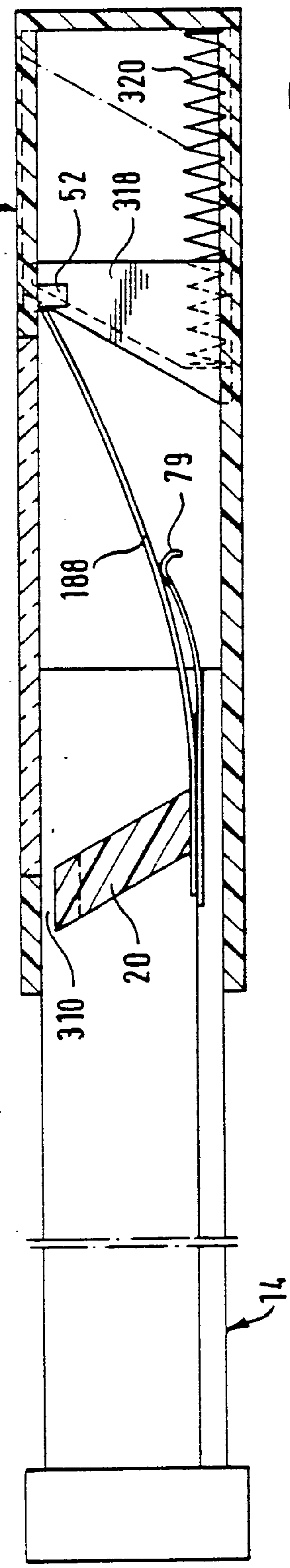


FIG. 39

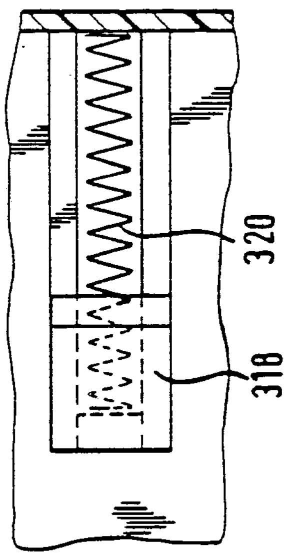


FIG. 40

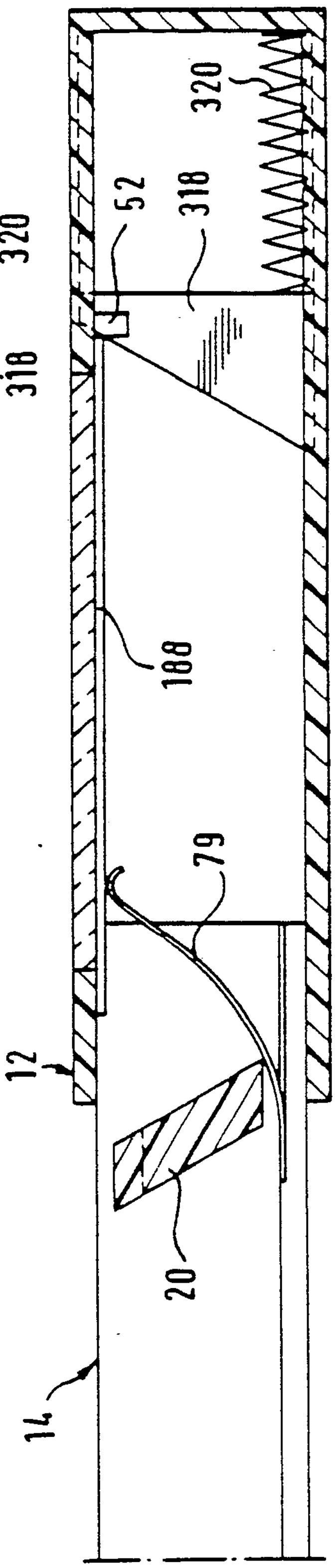


FIG. 41

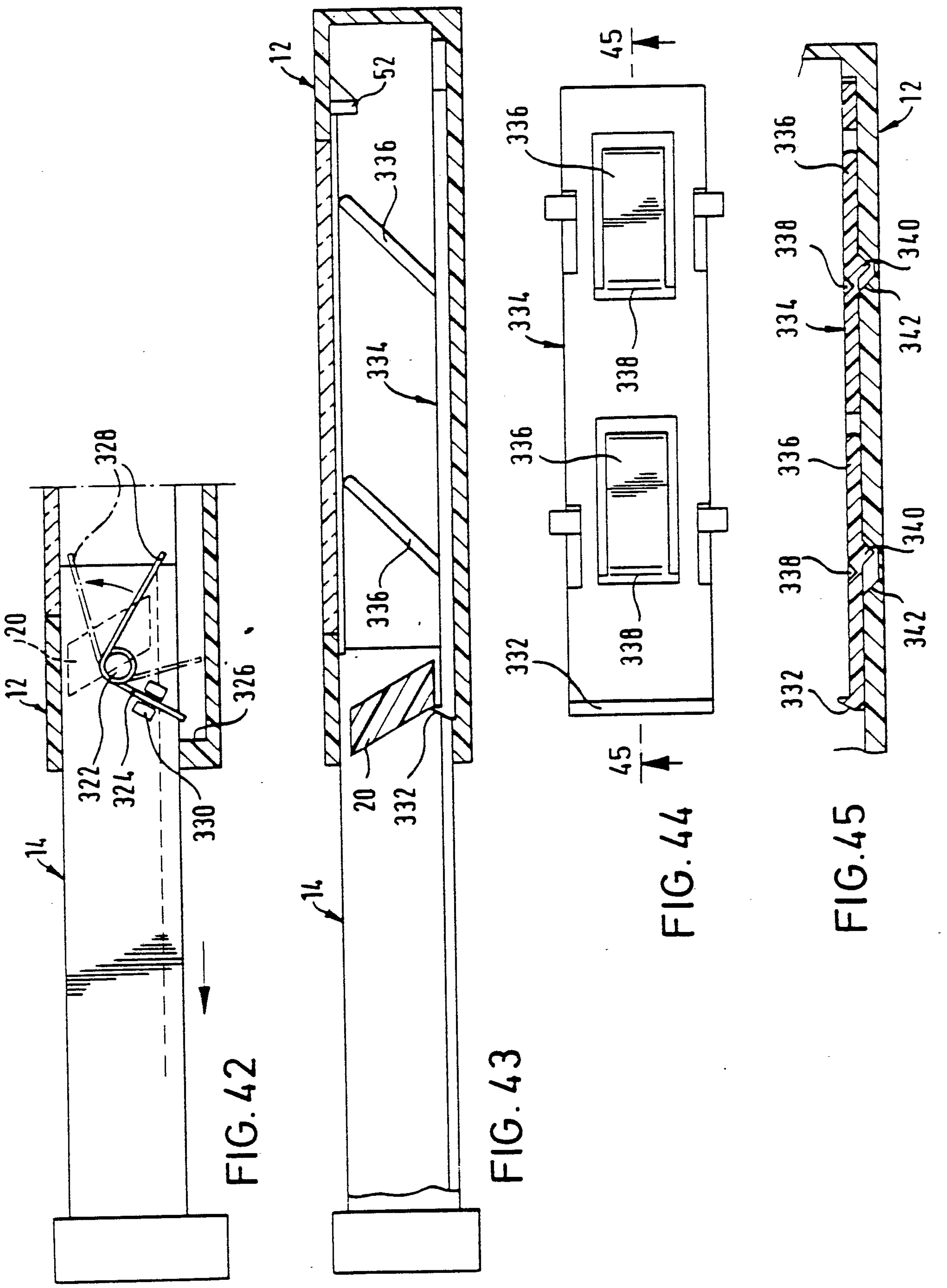


FIG. 42

FIG. 43

FIG. 44

FIG. 45

FIG. 46

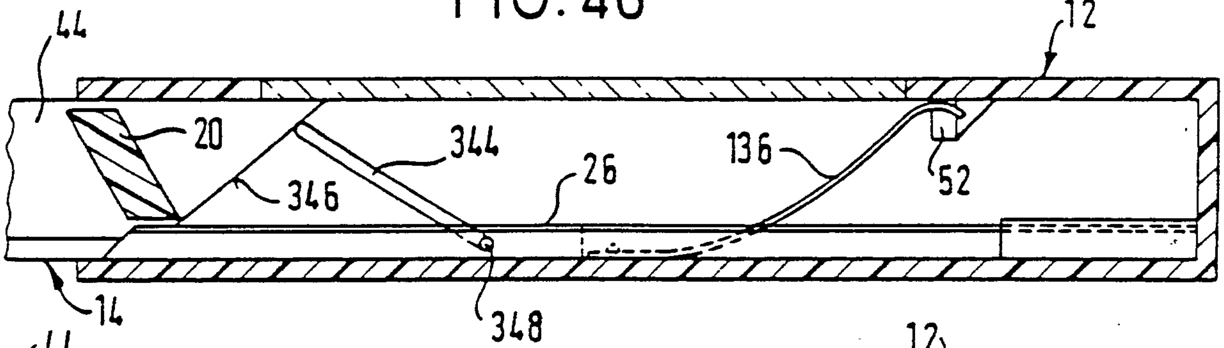
44
20
344
346
26
136
52
12
14
348

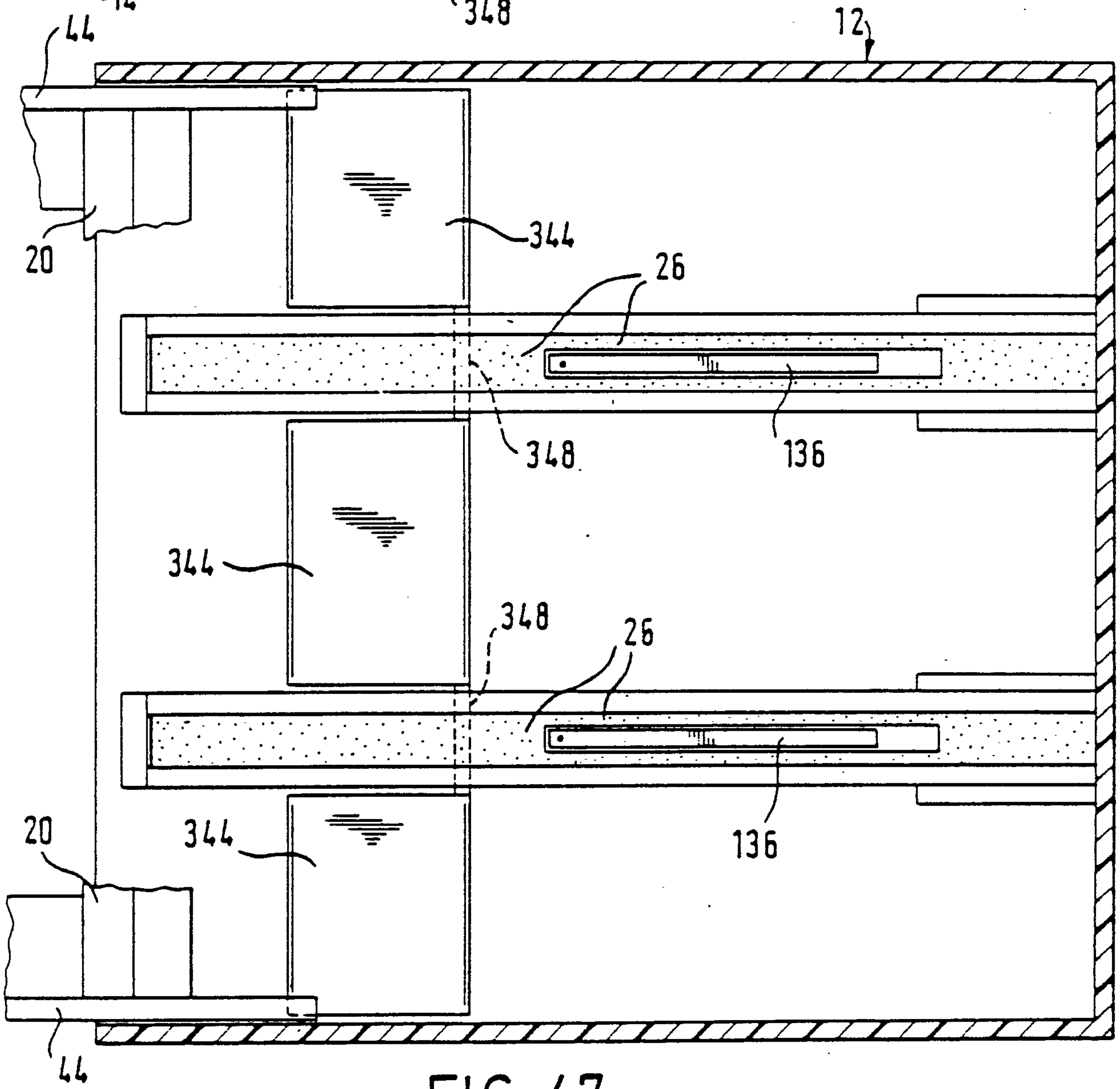
12
44
20
344
26
348
136
344
348
26
20
344
136
44

FIG. 47

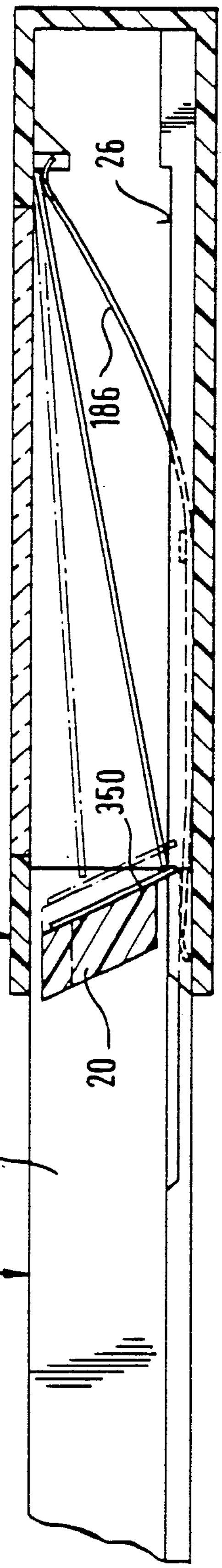


FIG. 48

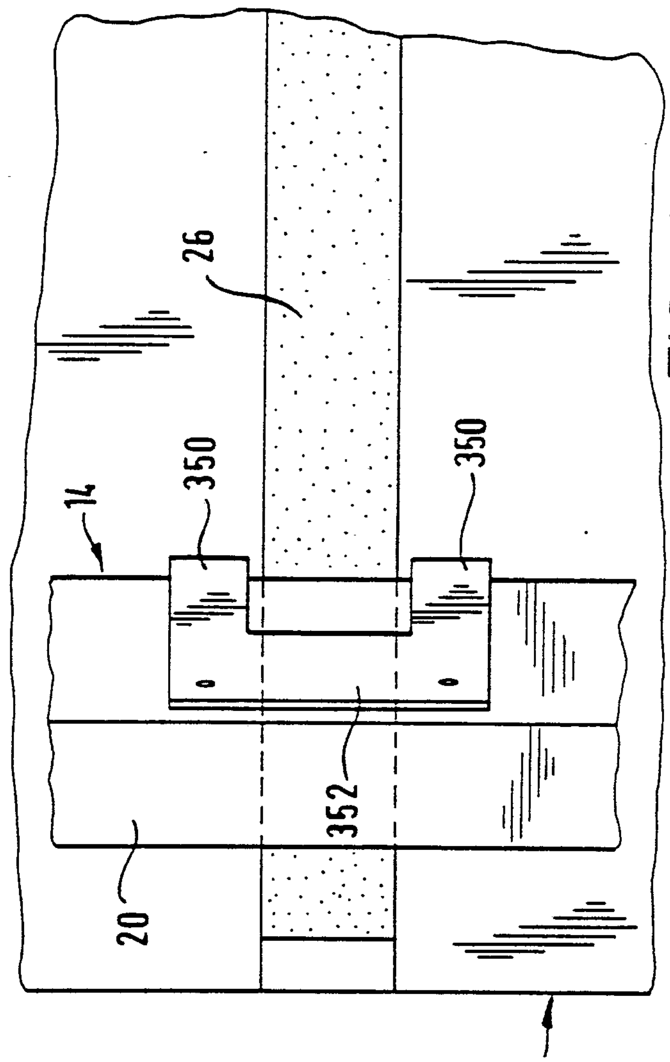


FIG. 50

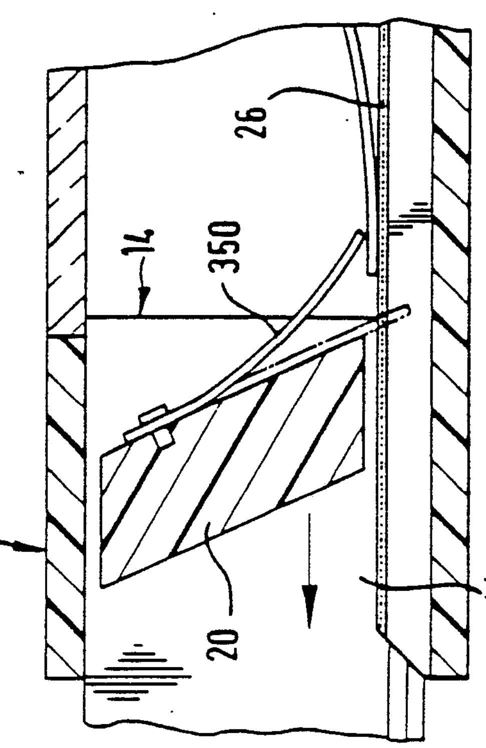


FIG. 49

FIG. 51

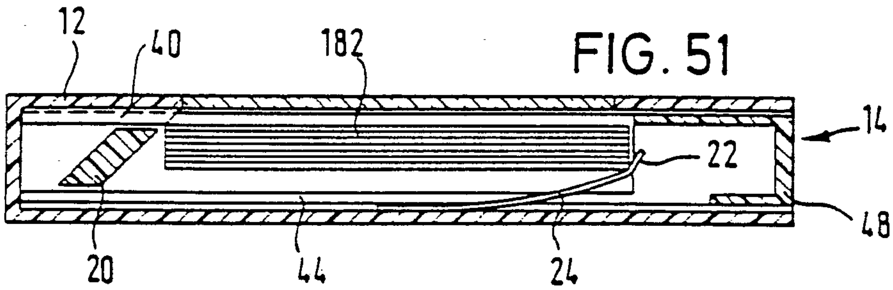


FIG. 52

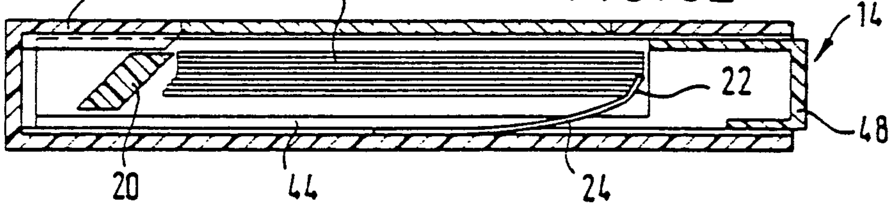


FIG. 53

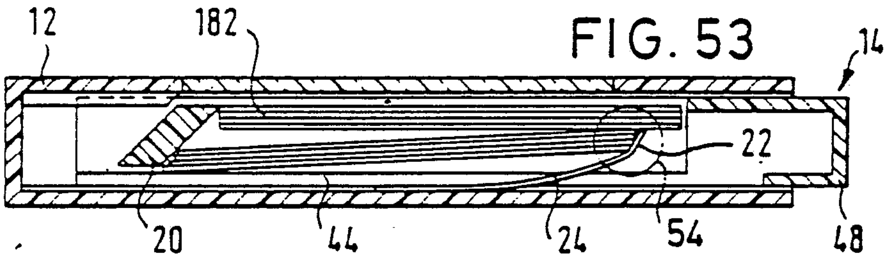


FIG. 54

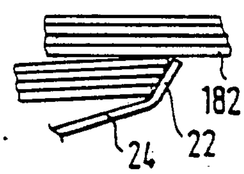


FIG. 55

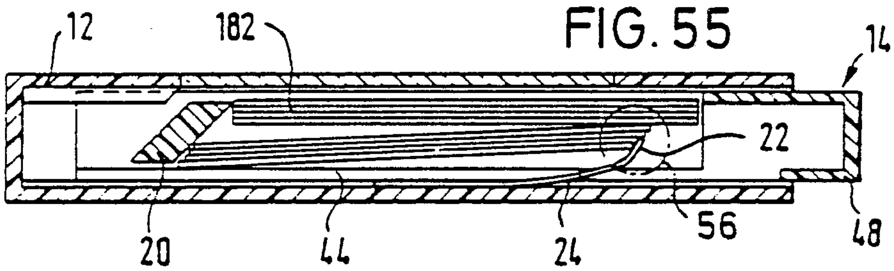


FIG. 56

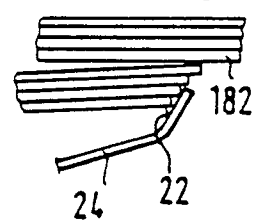


FIG. 57

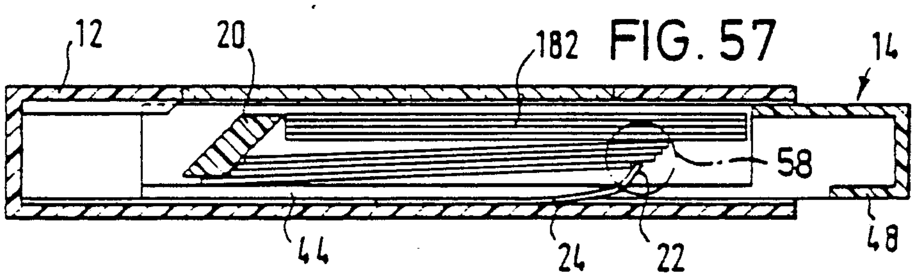


FIG. 58

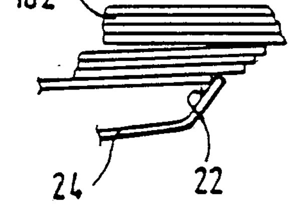

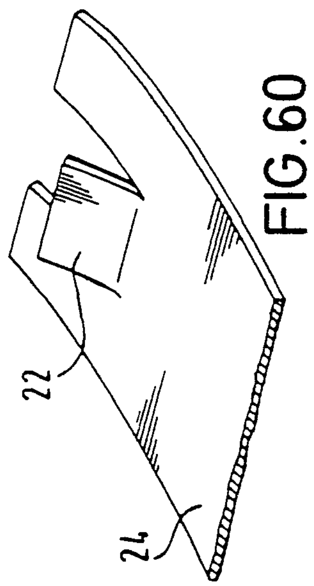


FIG.60

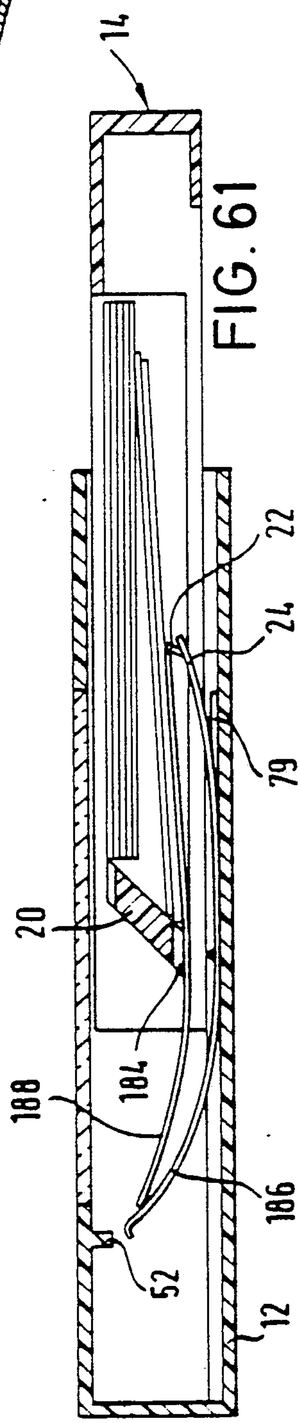


FIG. 61

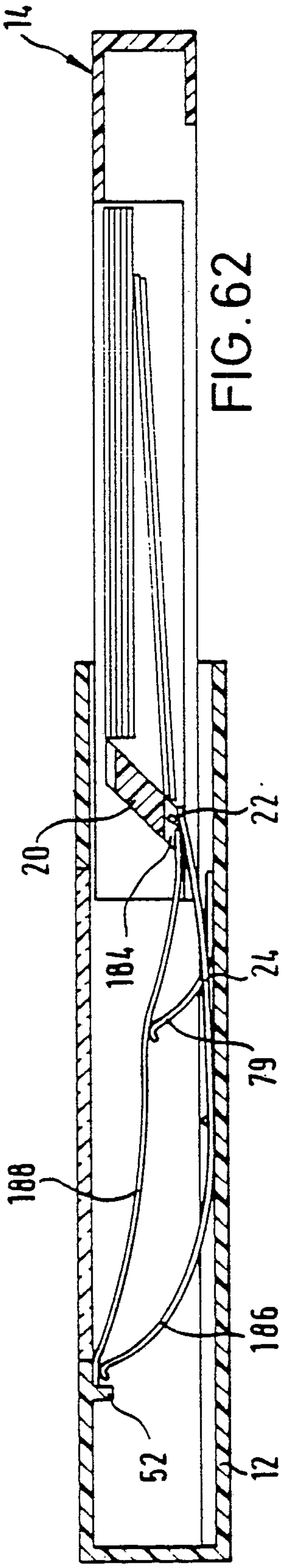


FIG.62

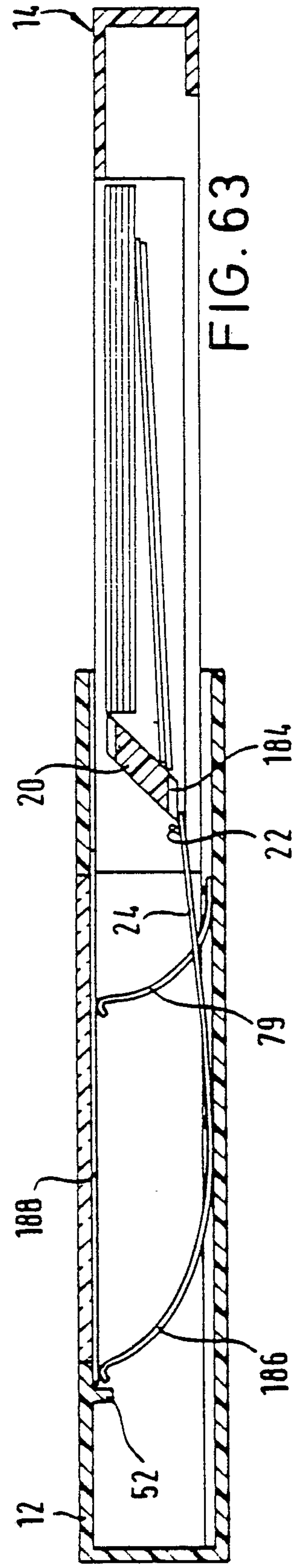


FIG. 63

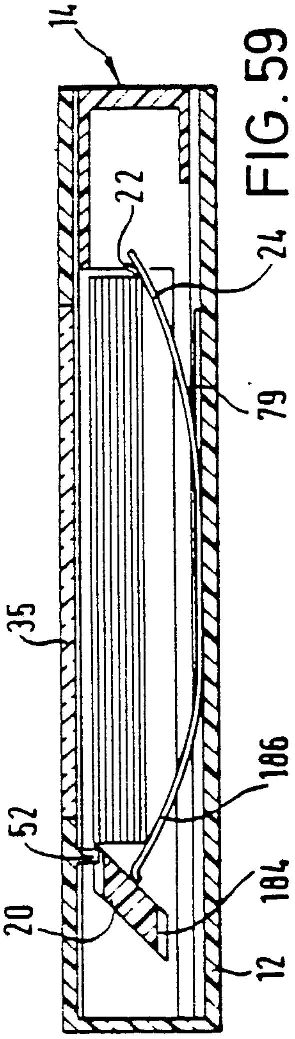


FIG. 59

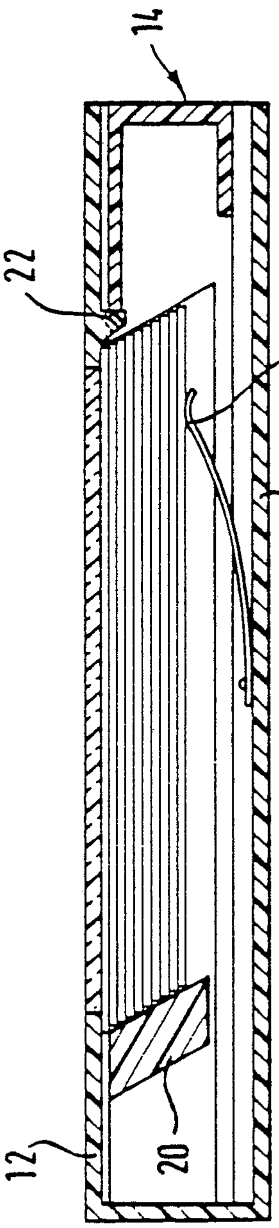


FIG.64

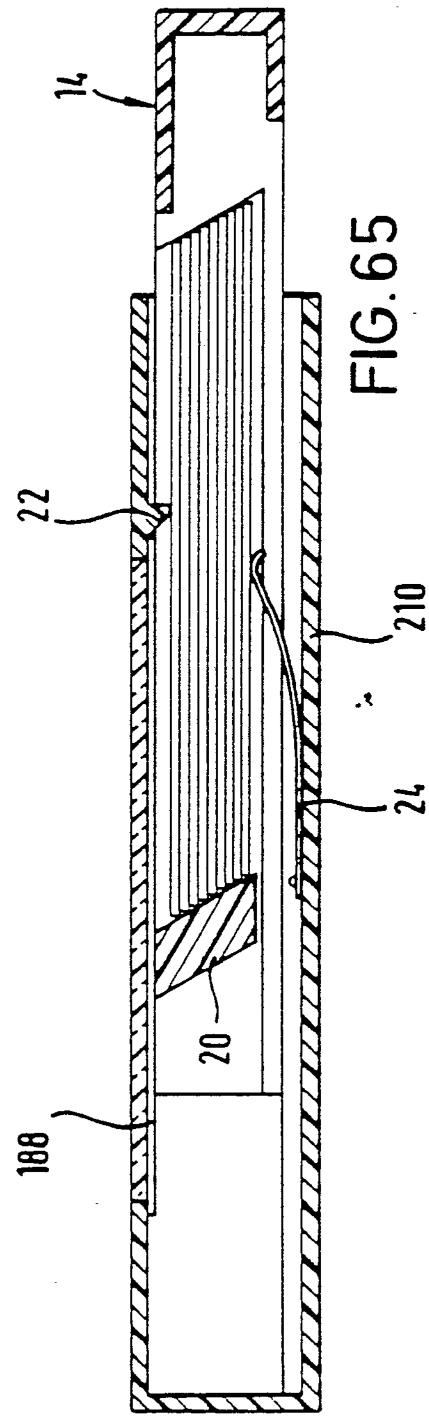


FIG.65

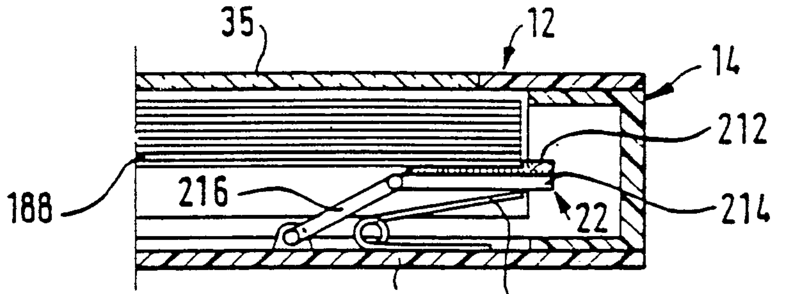


FIG. 66

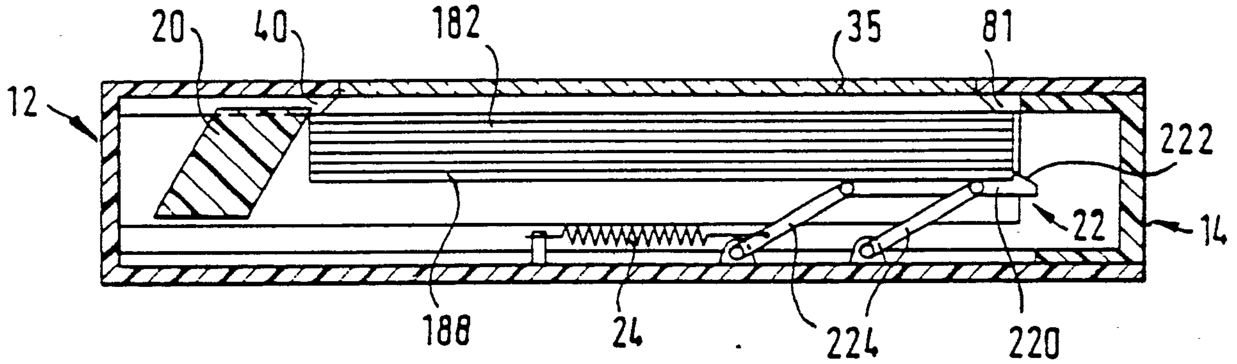


FIG. 67

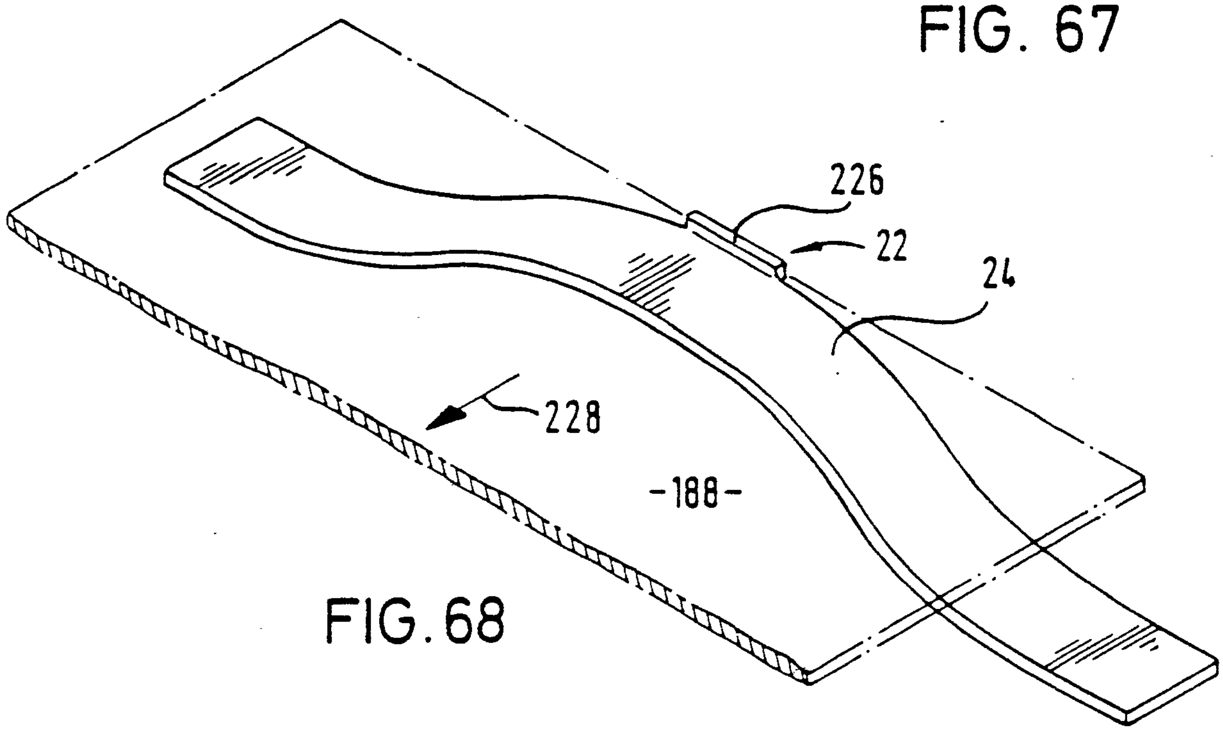


FIG. 68

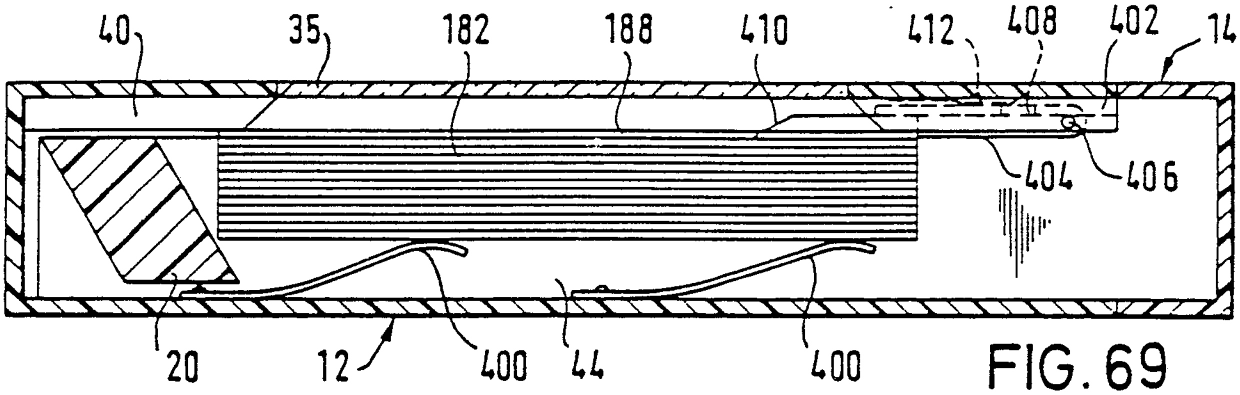


FIG. 69

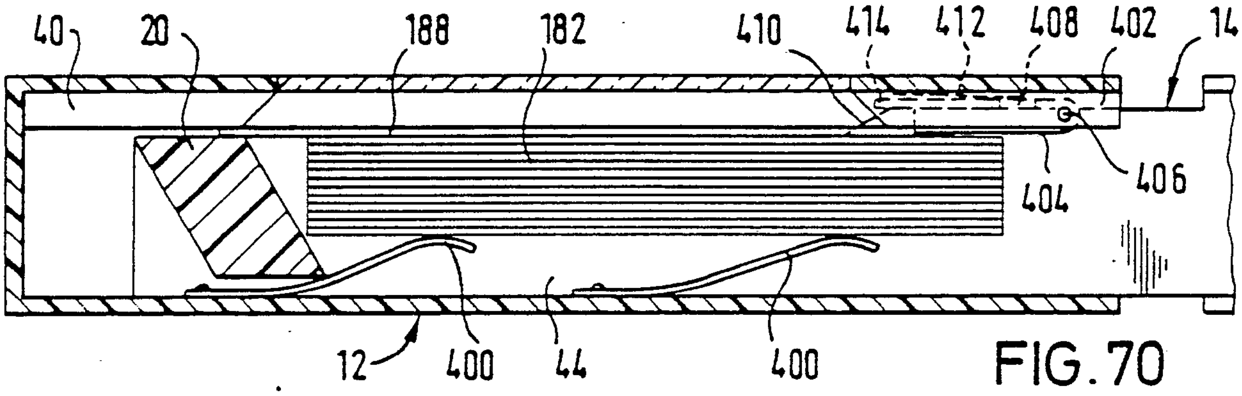


FIG. 70

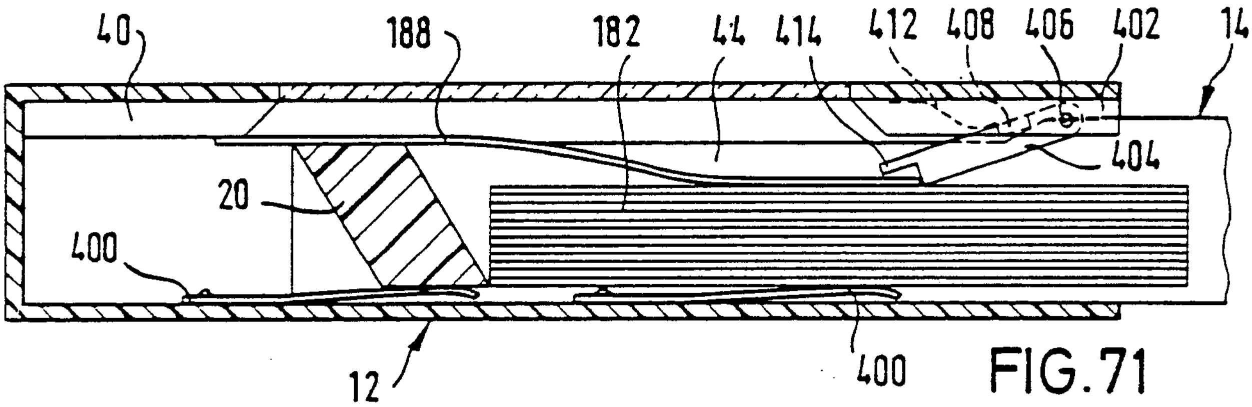


FIG. 71

FIG. 72

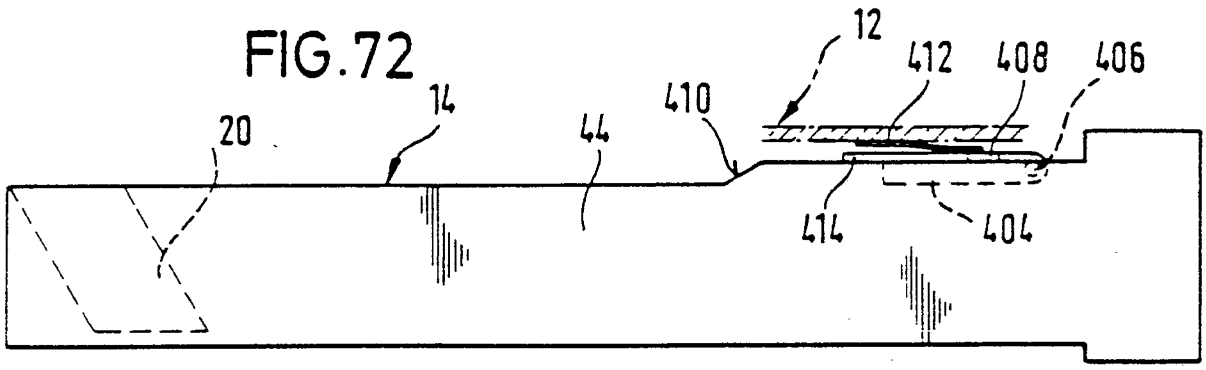

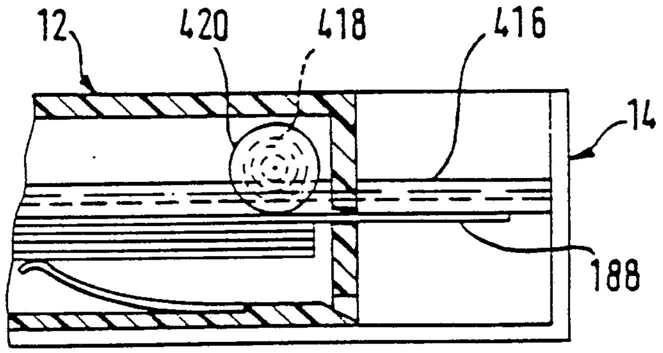


FIG. 73

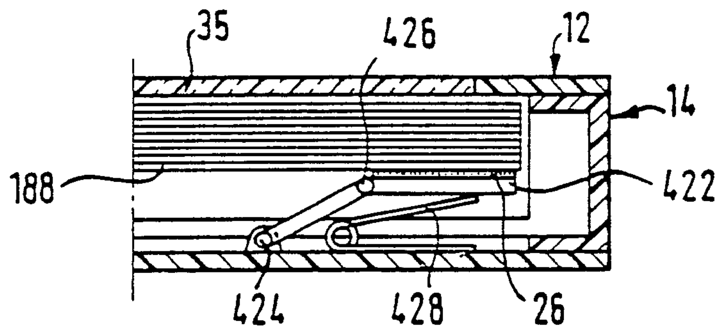


FIG.74

FIG.75

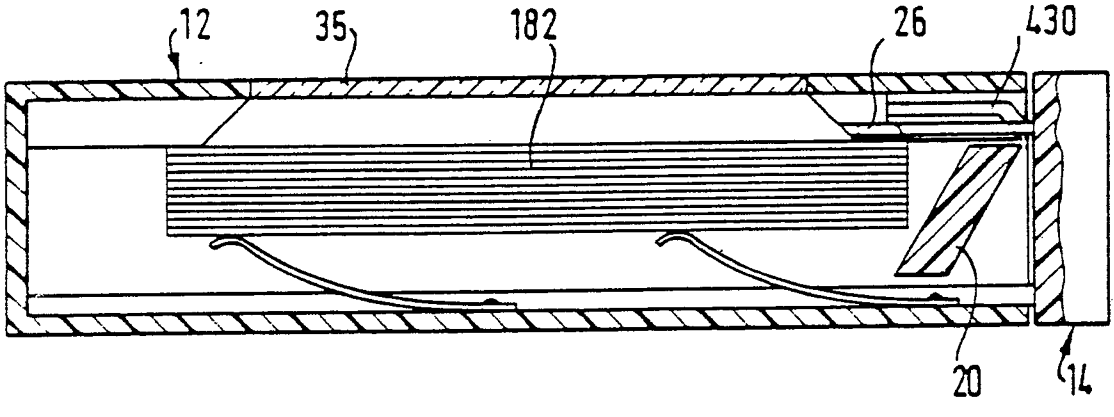

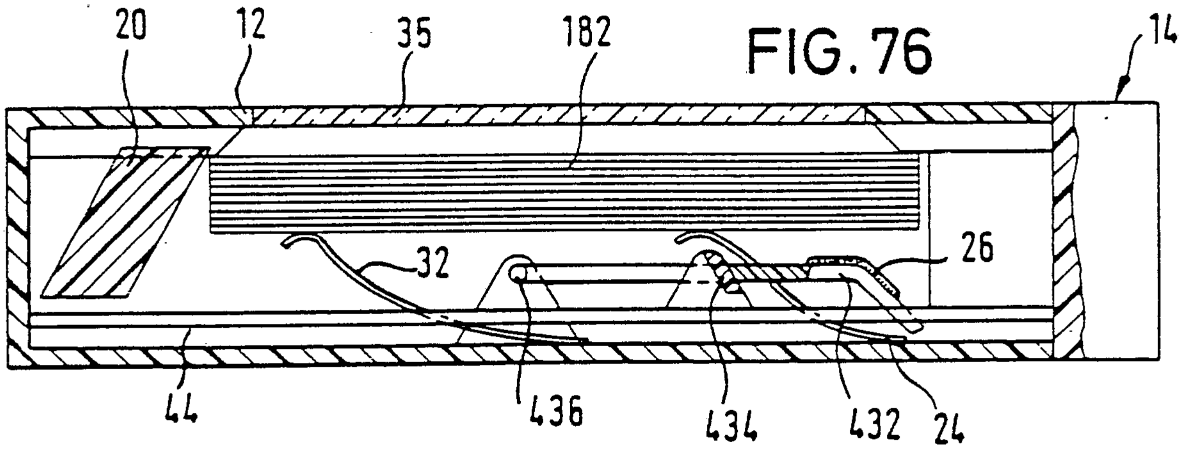


FIG. 76

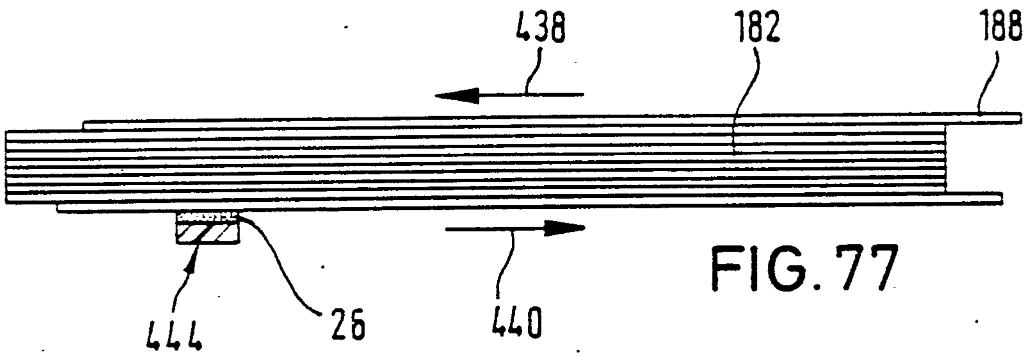


FIG. 77

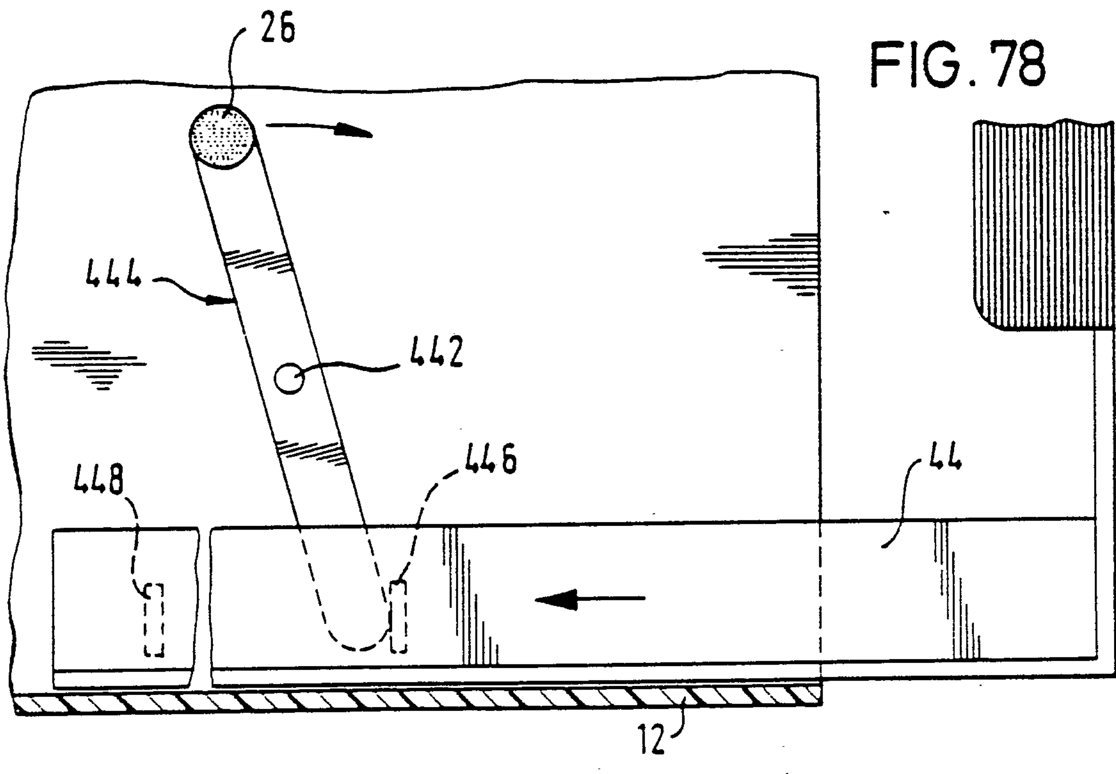


FIG. 78

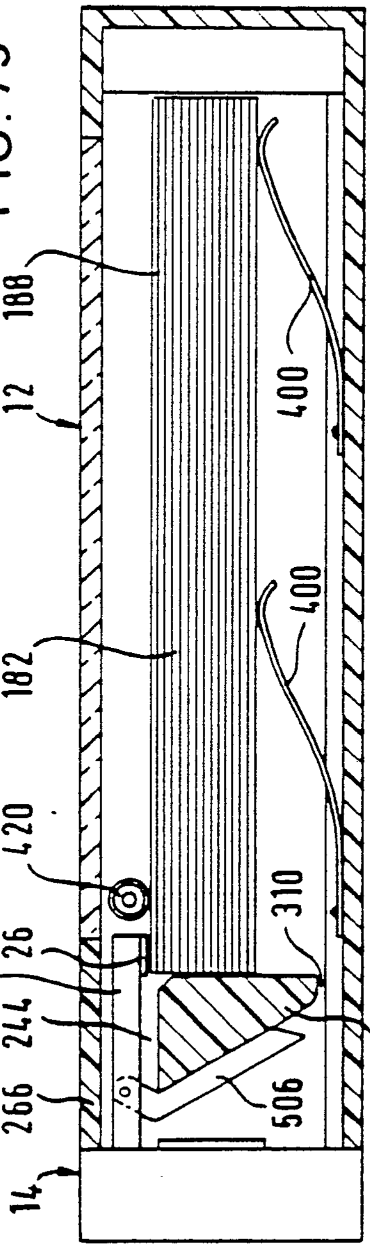

FIG. 79

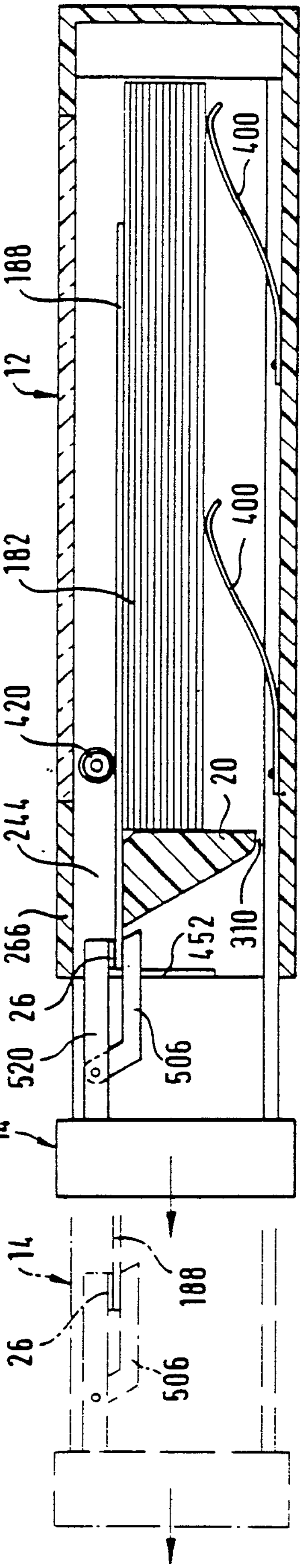

FIG. 80

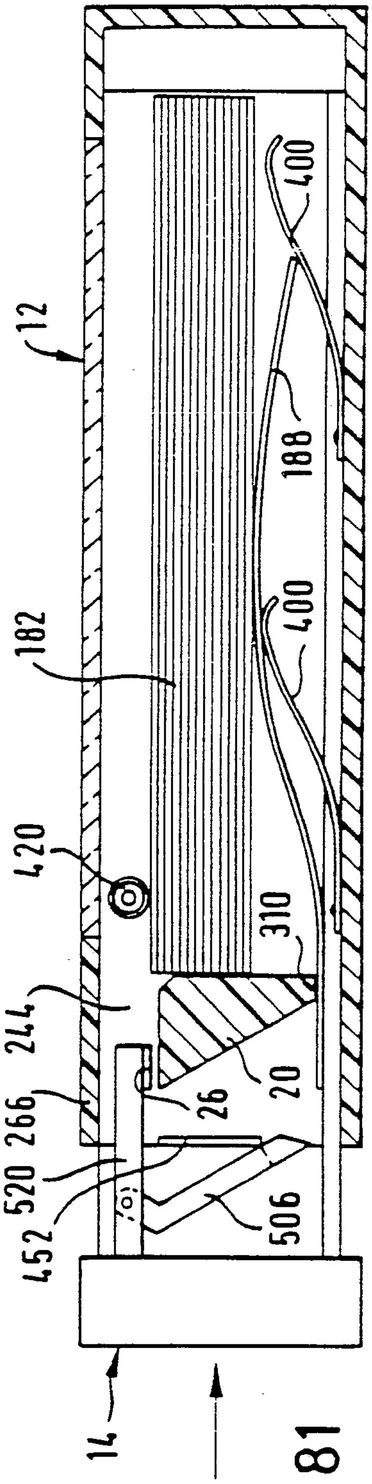

FIG. 81

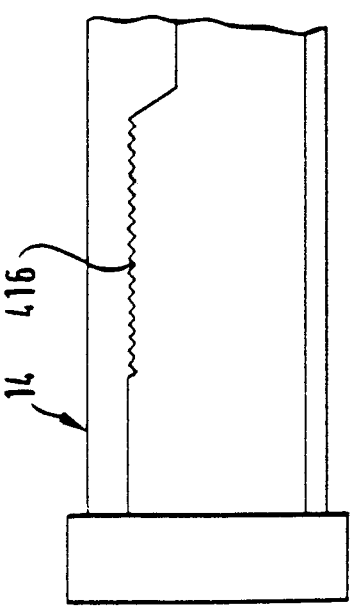

FIG. 82

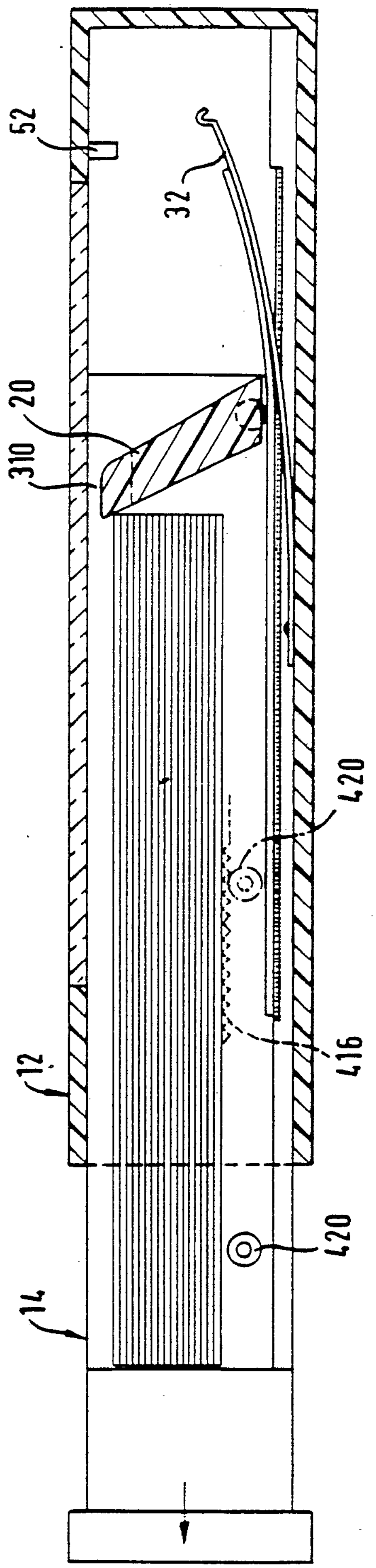


FIG. 83

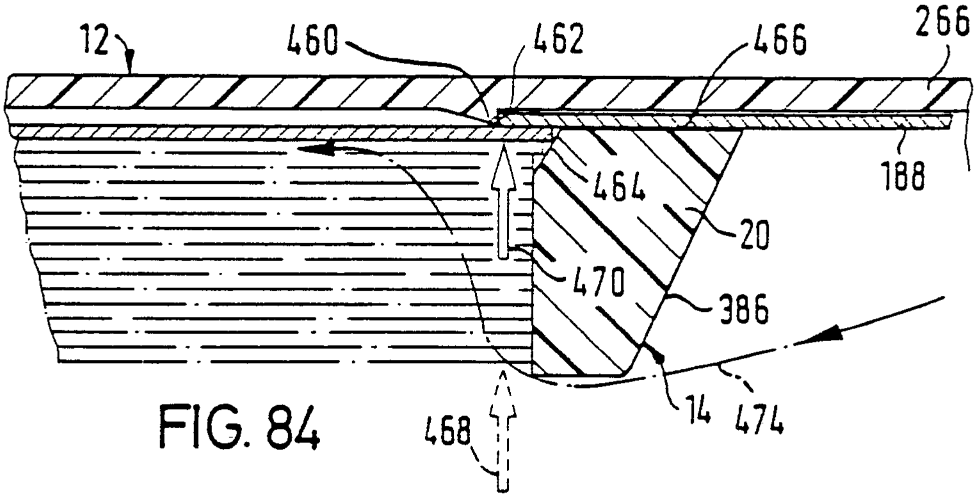


FIG. 84

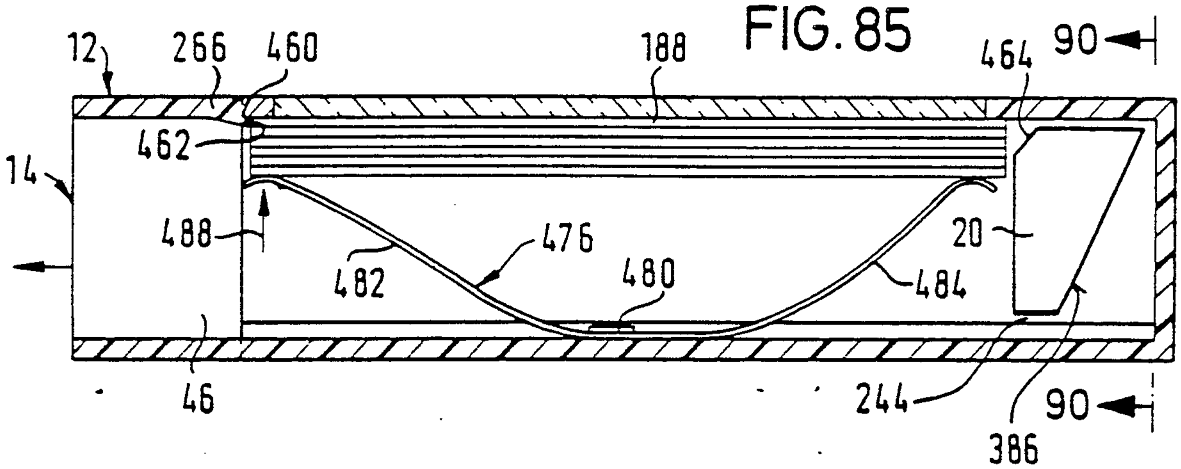


FIG. 85

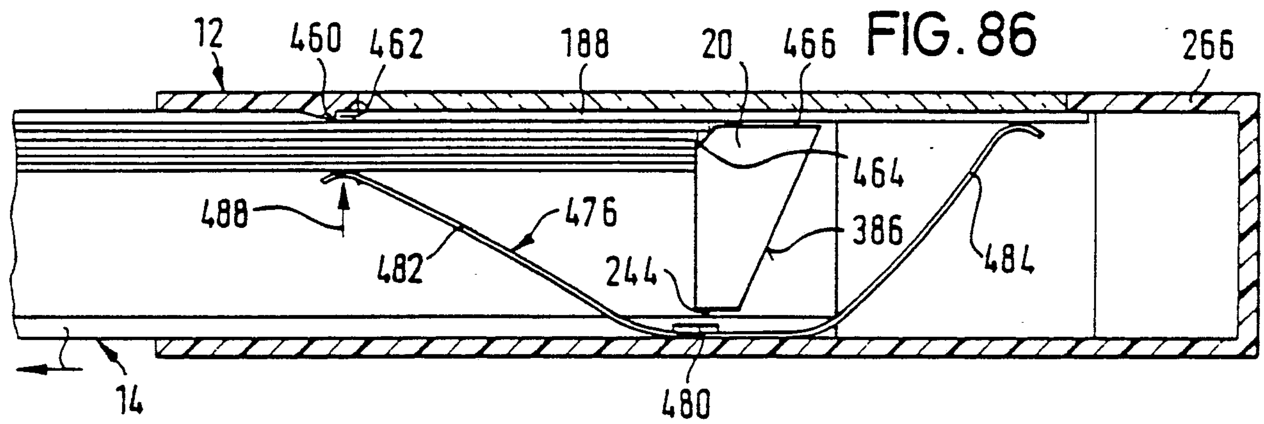


FIG. 86

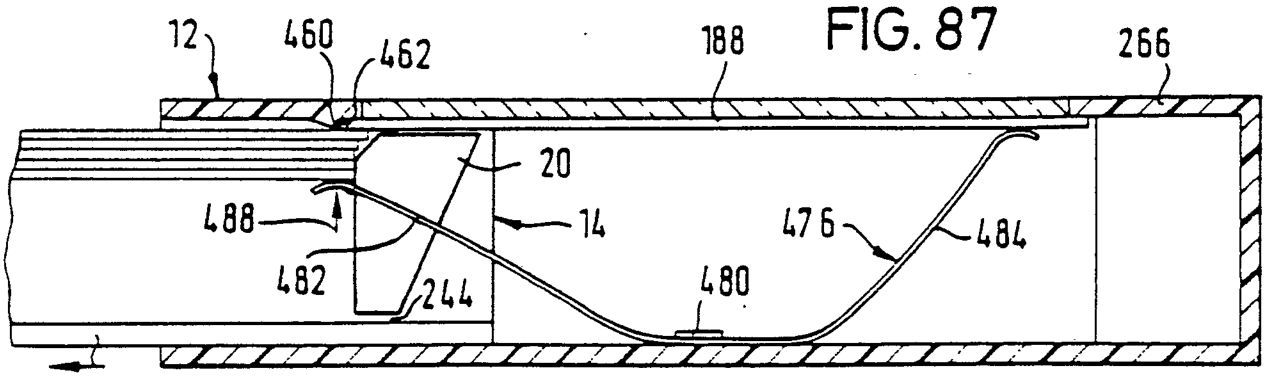


FIG. 87

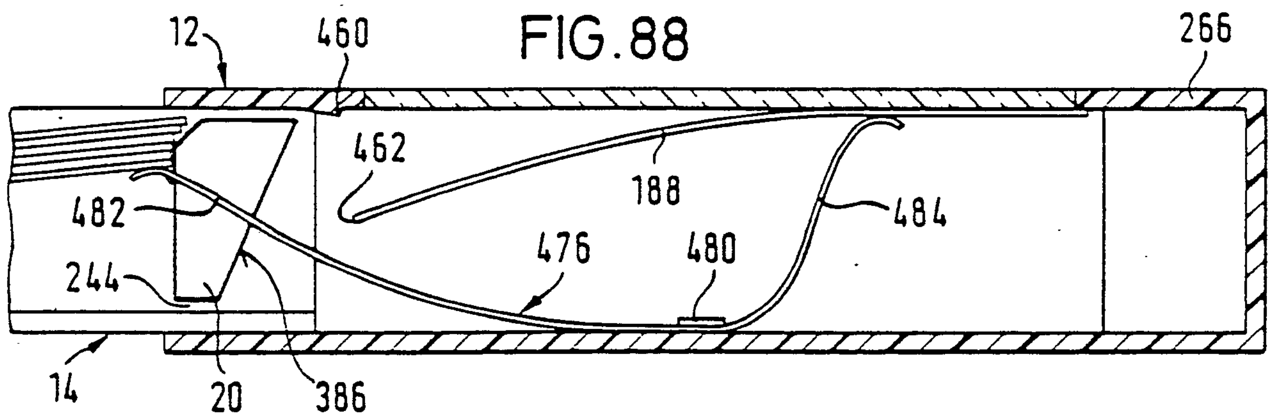

FIG.88

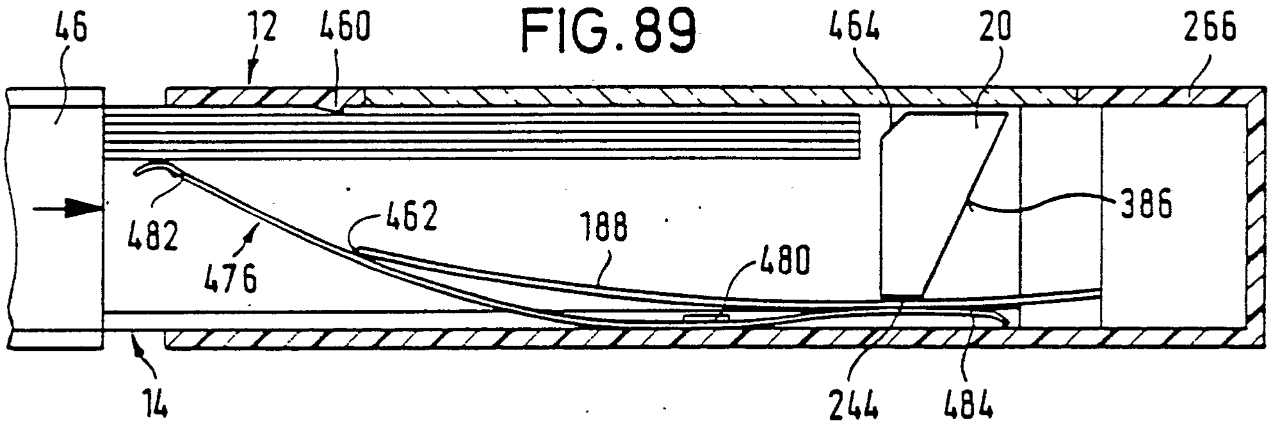

FIG.89

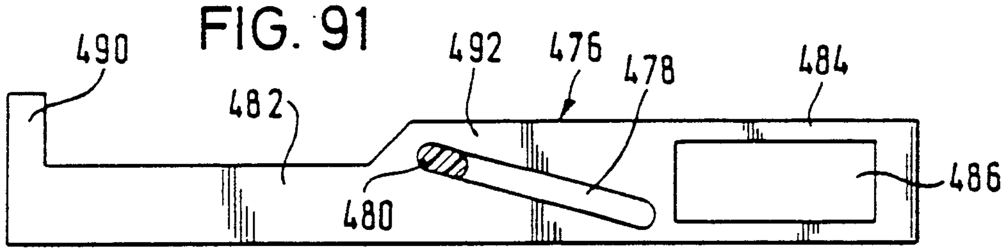

FIG. 91

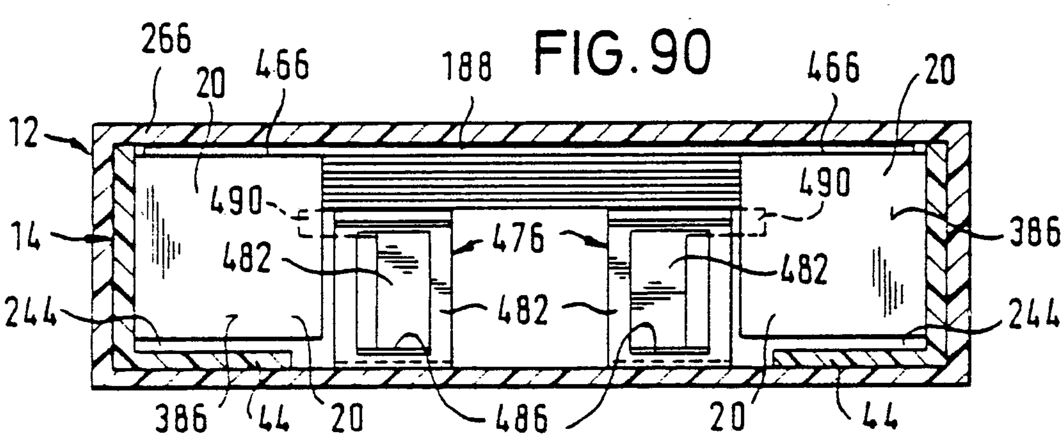

FIG.90

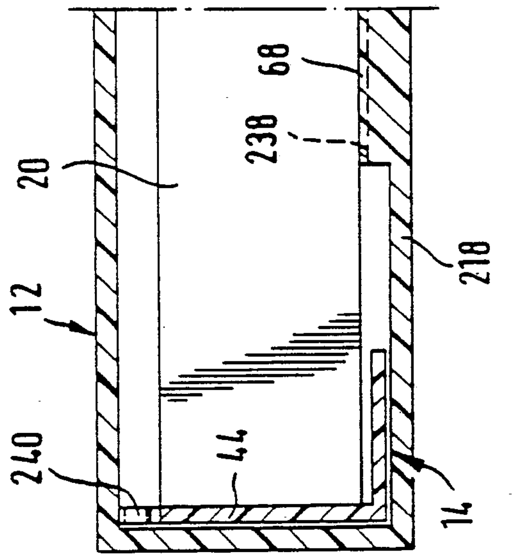


FIG. 93

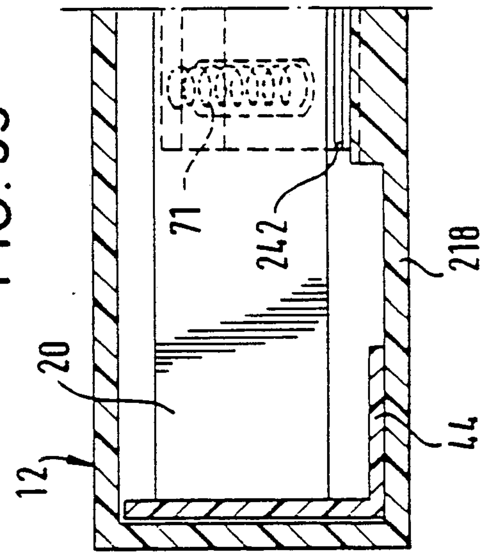


FIG. 95

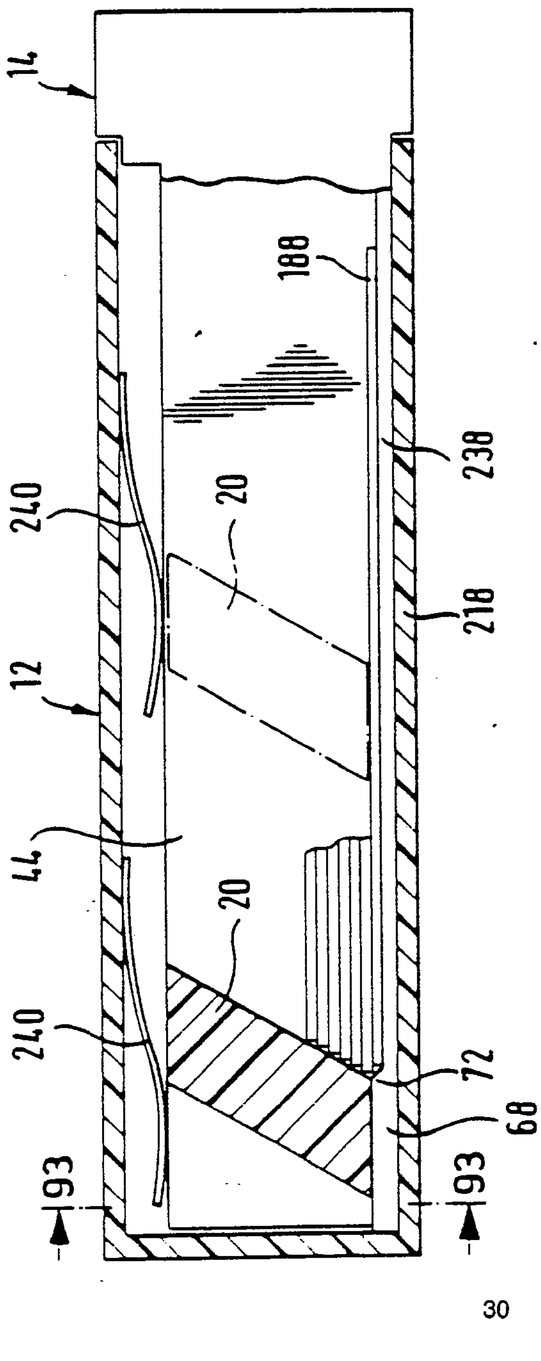


FIG. 92

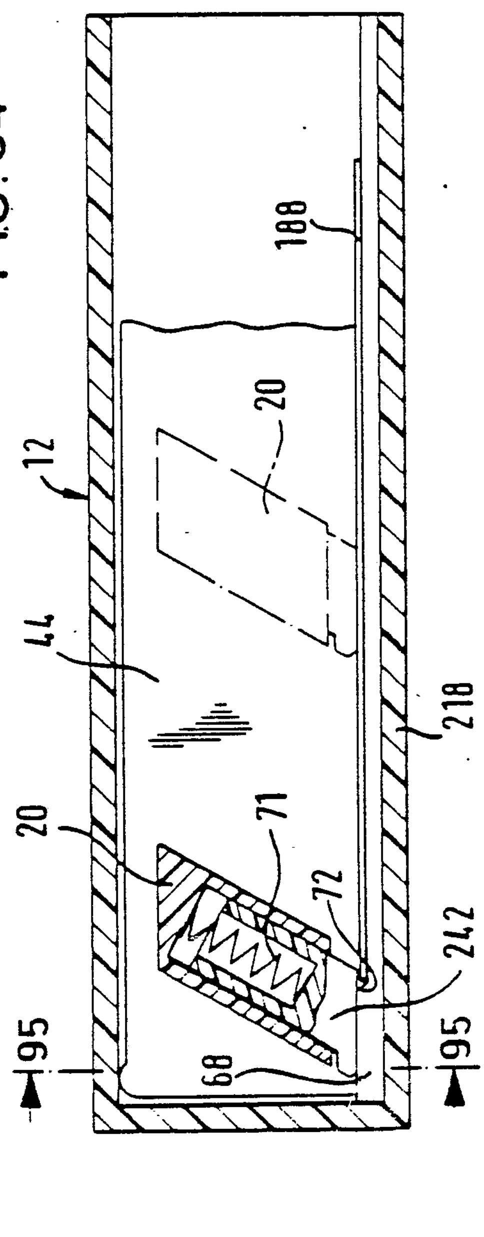


FIG. 94

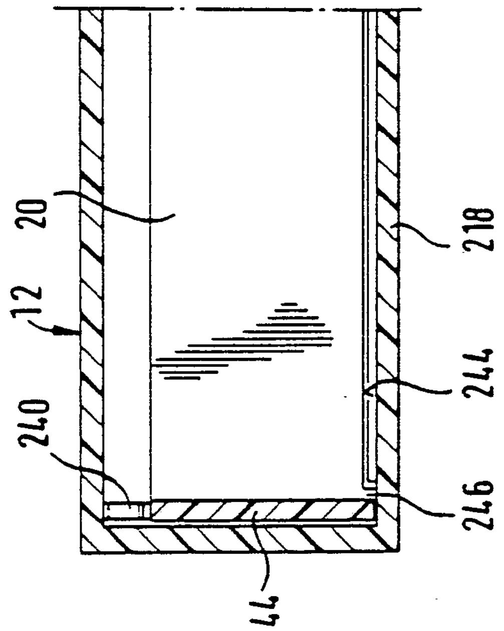


FIG. 97

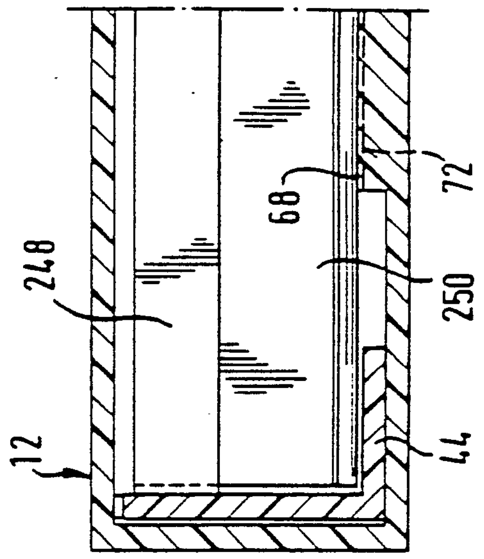


FIG. 99

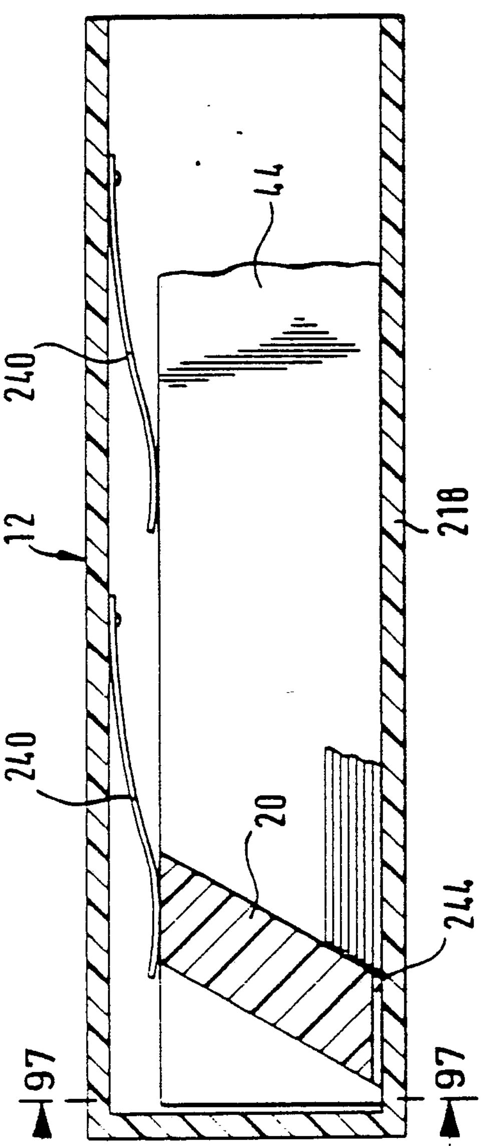


FIG. 96

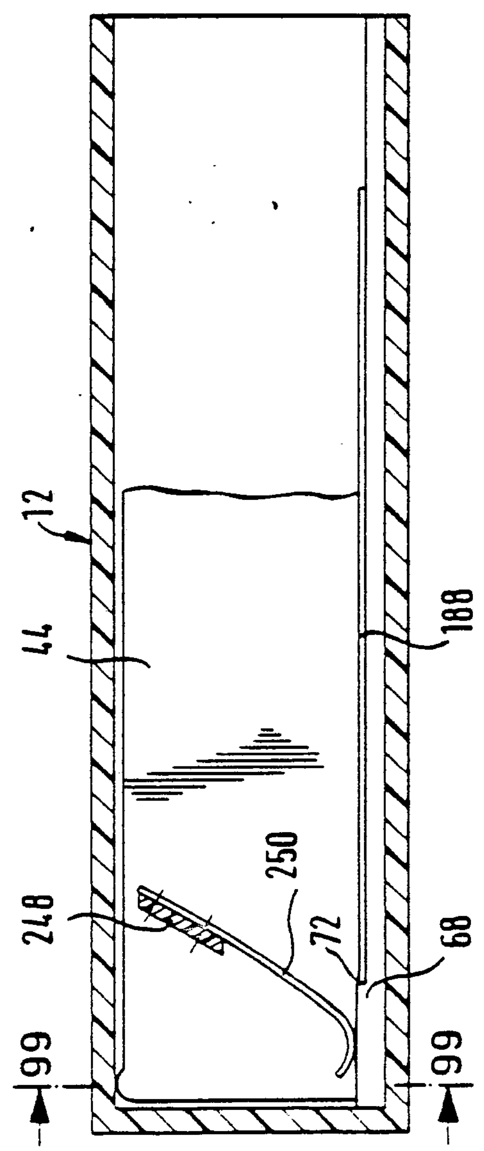


FIG. 98

FIG.100

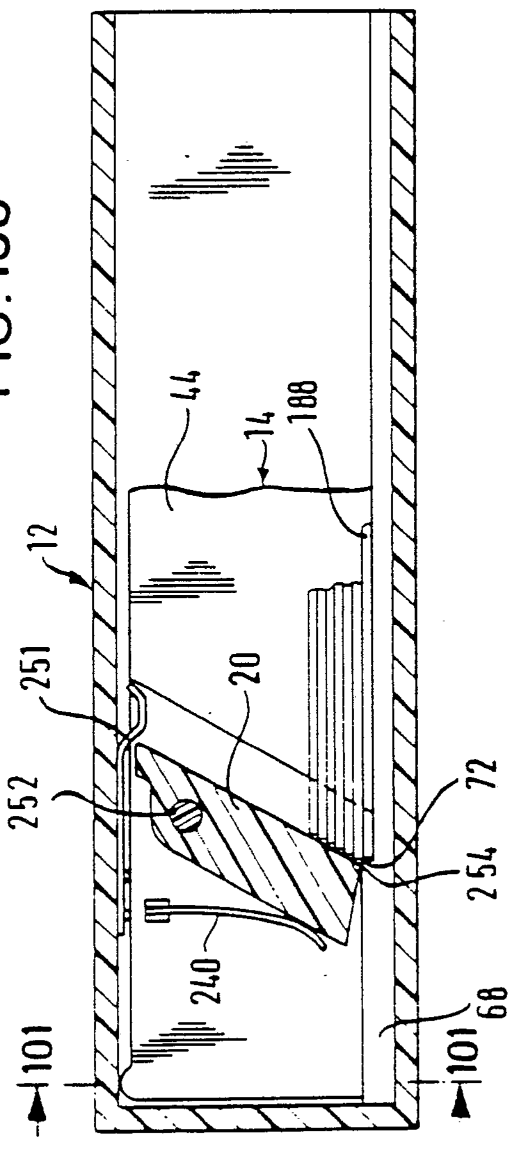


FIG.101

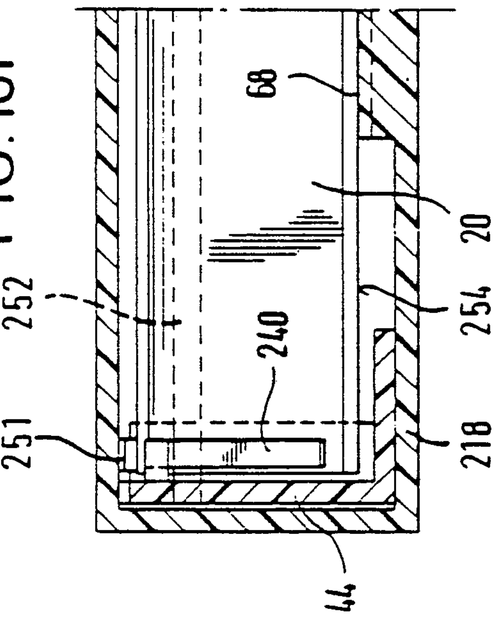


FIG.102

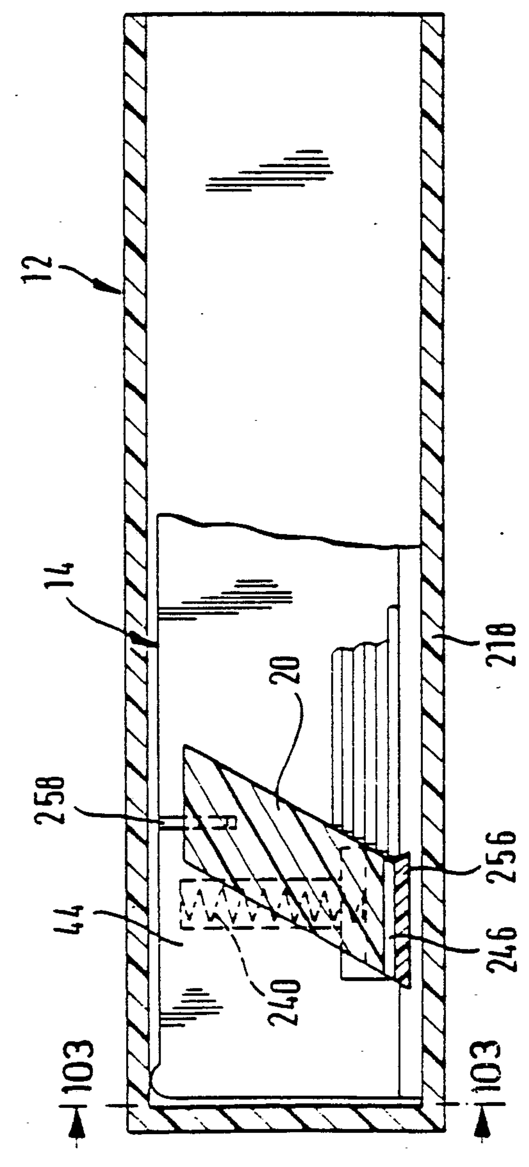


FIG.103

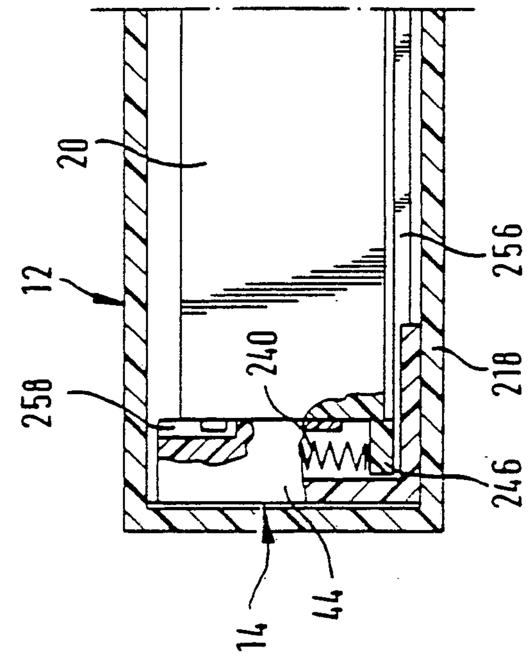

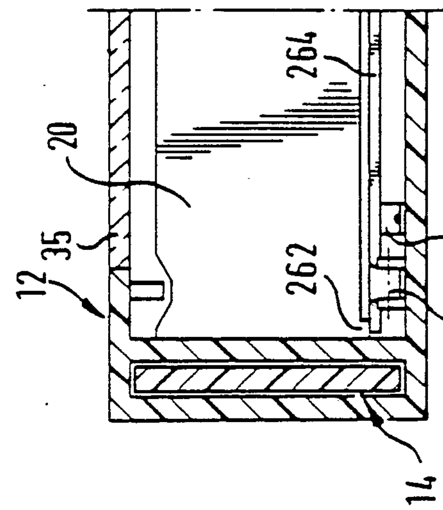


FIG. 105

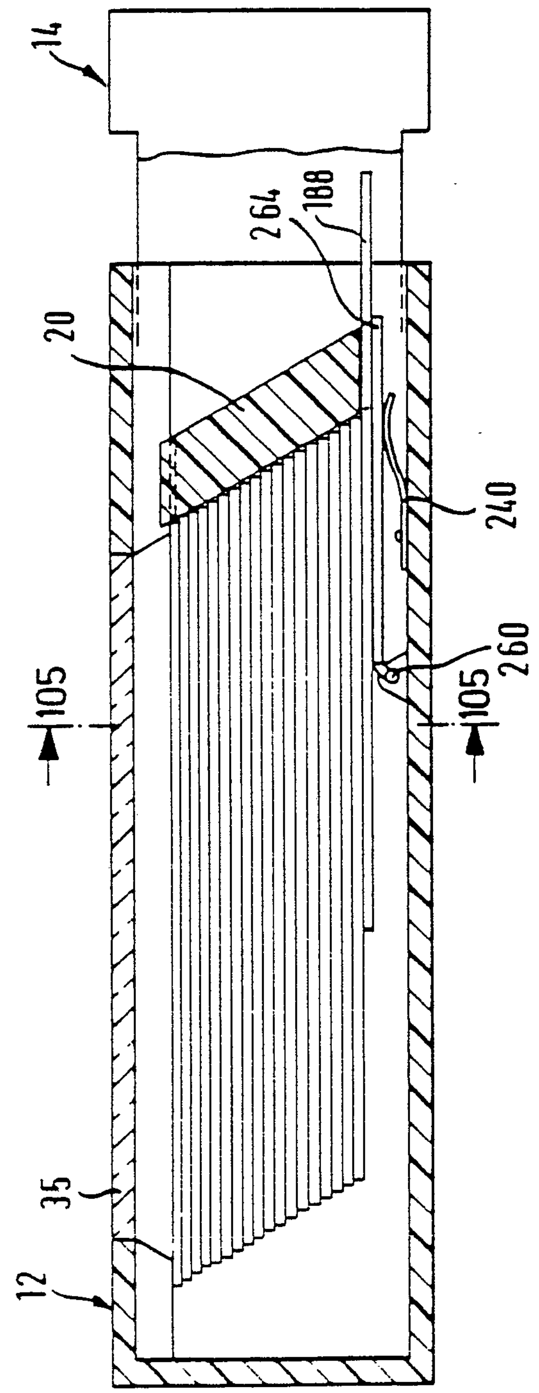


FIG. 104

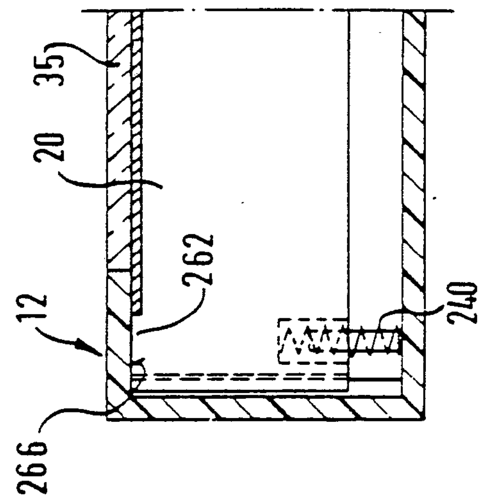


FIG. 107

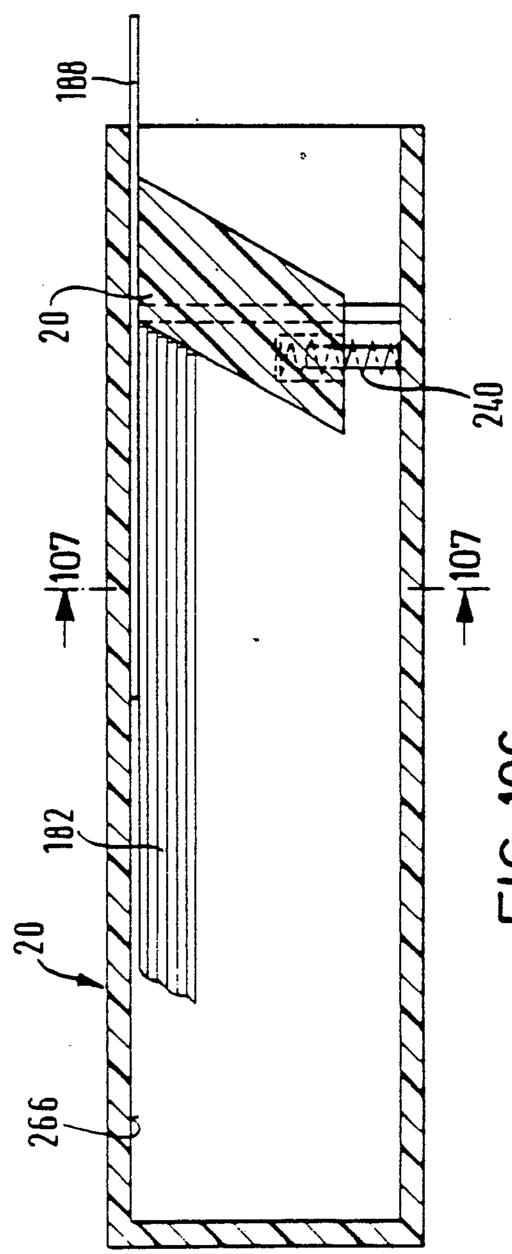


FIG. 106

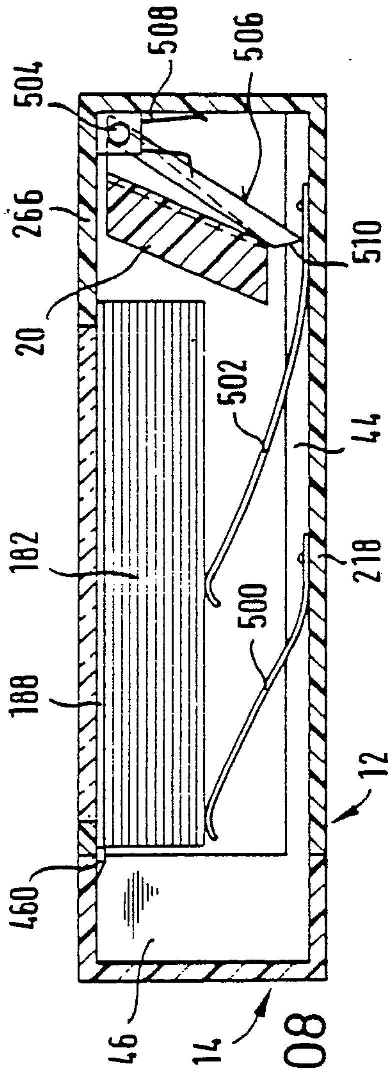

FIG.108

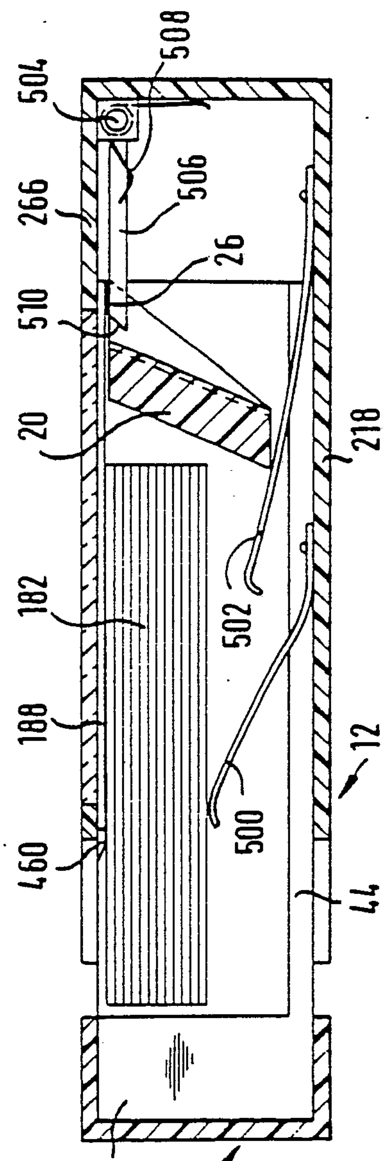

FIG.109

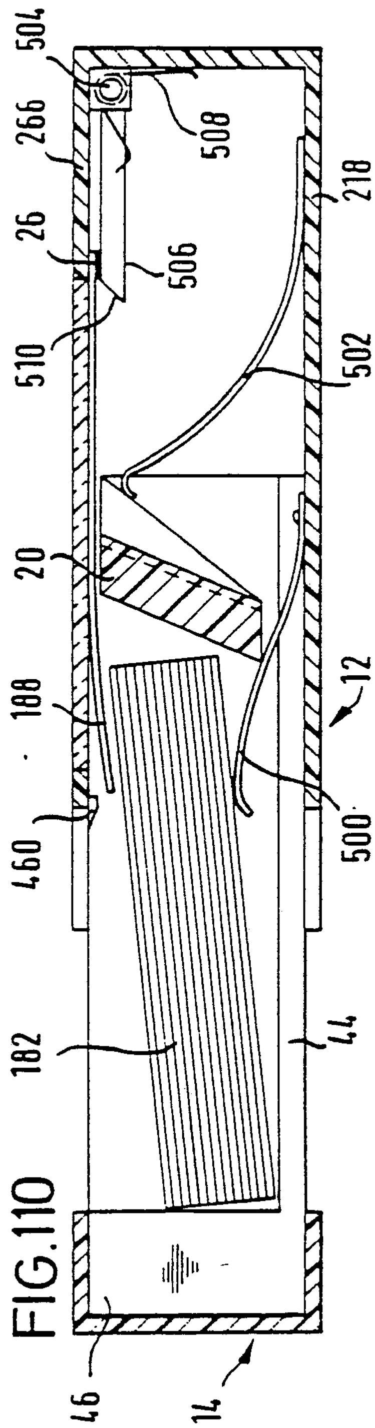

FIG.110

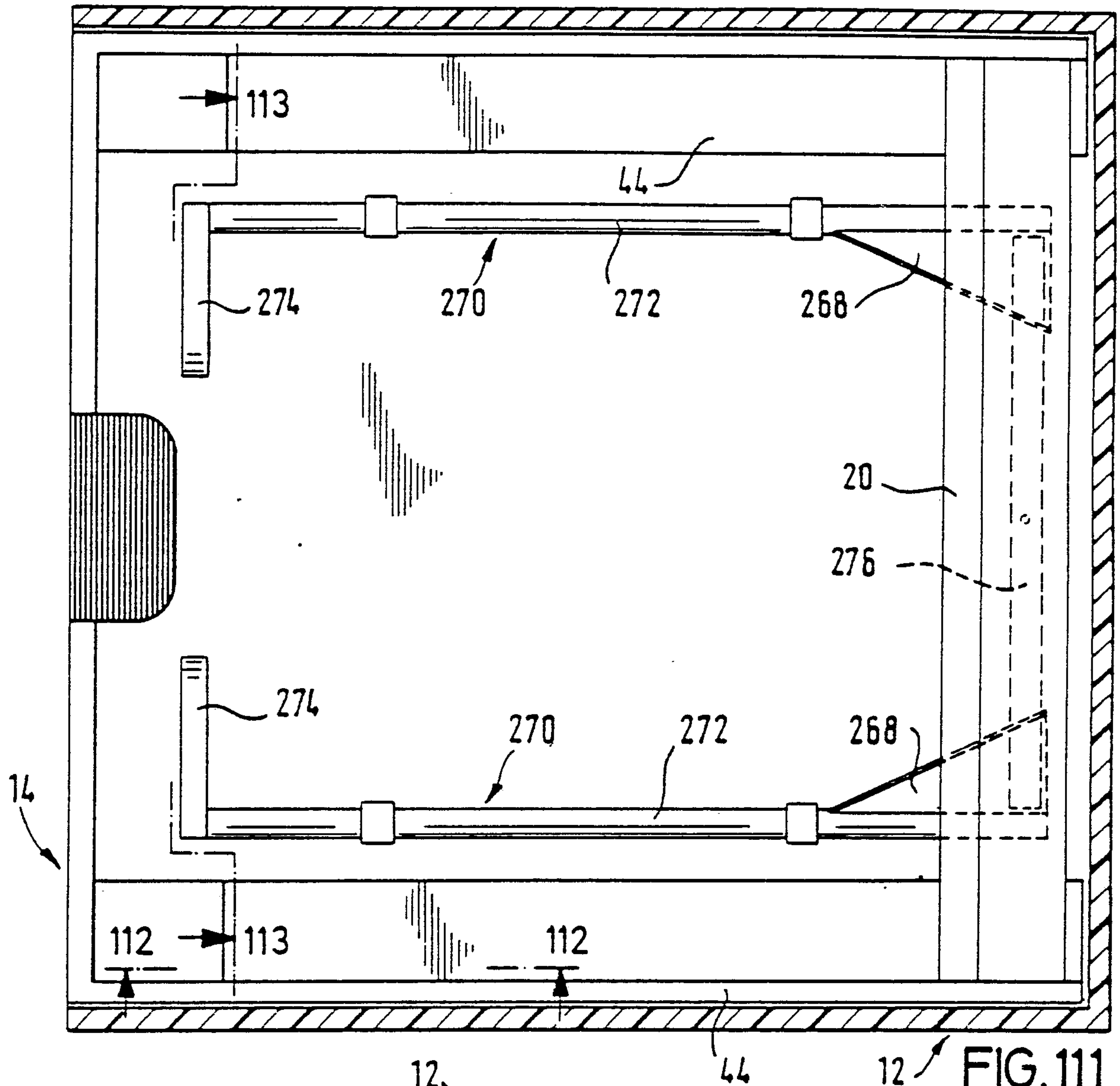


FIG.111

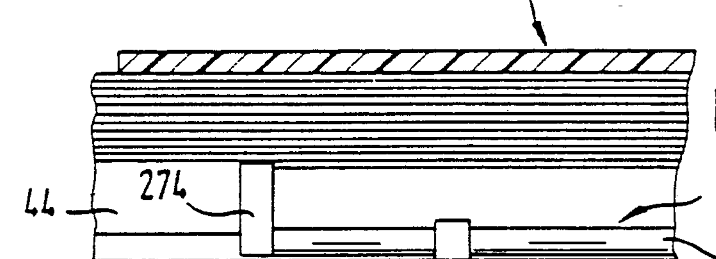


FIG.112

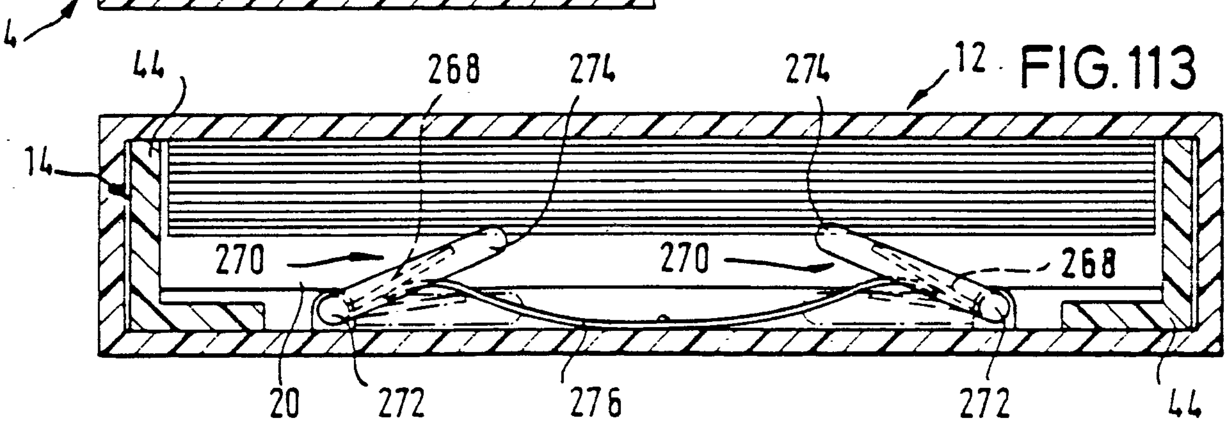


FIG.113

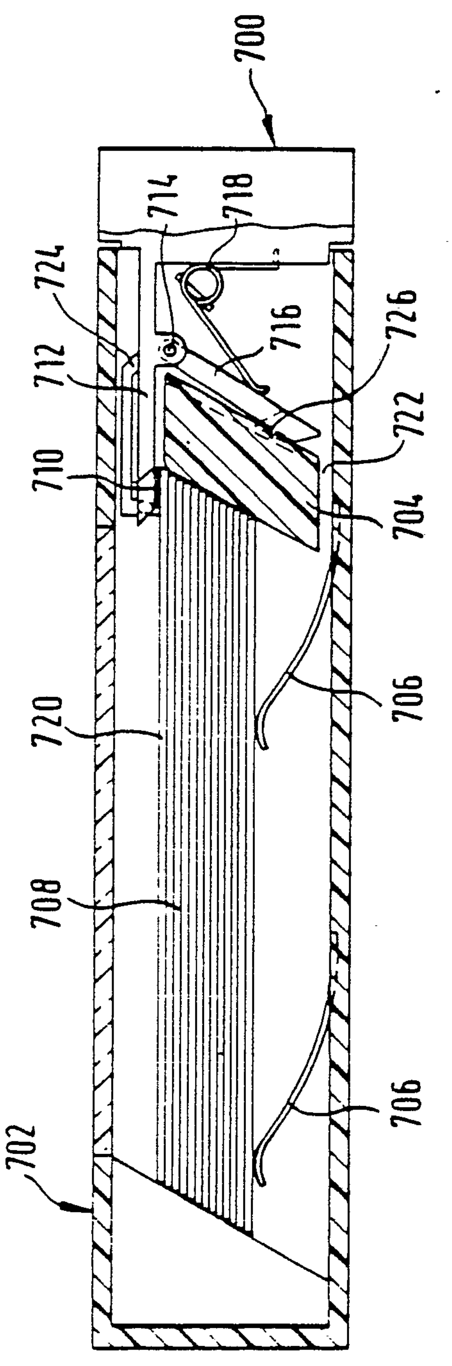


FIG.114

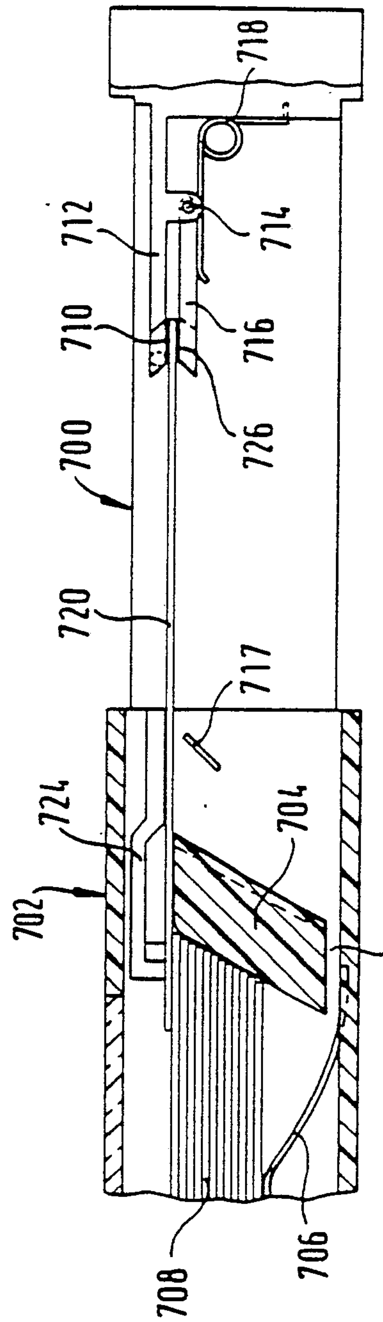


FIG.115

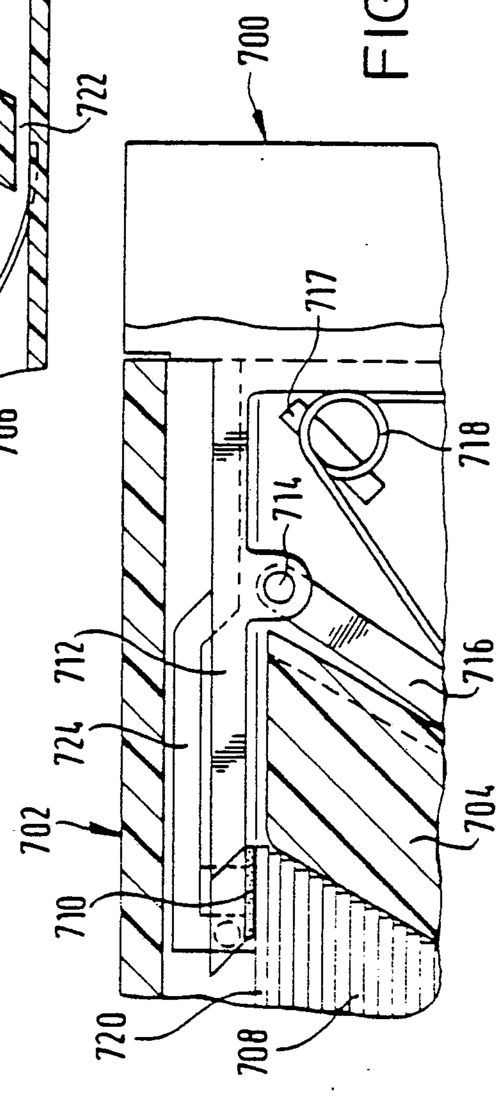


FIG.116

FIG.117

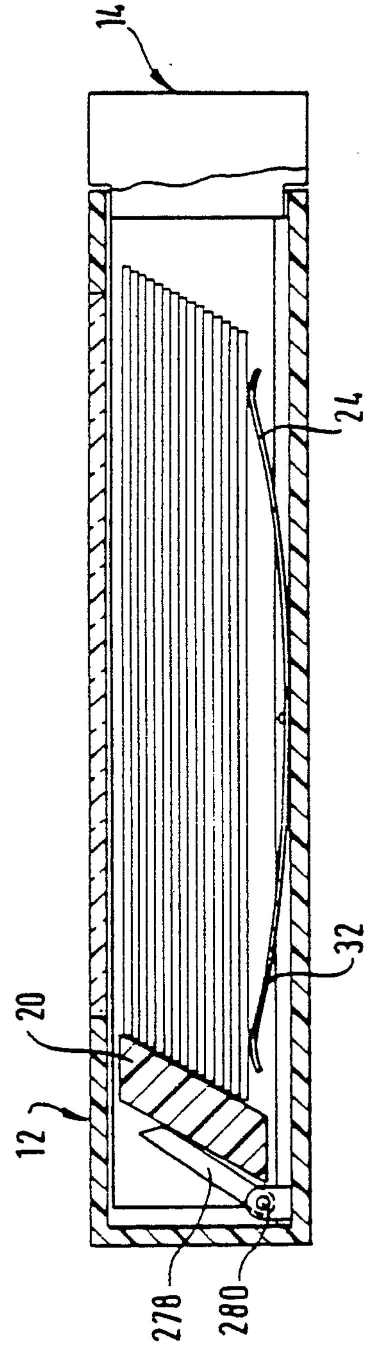


FIG.119

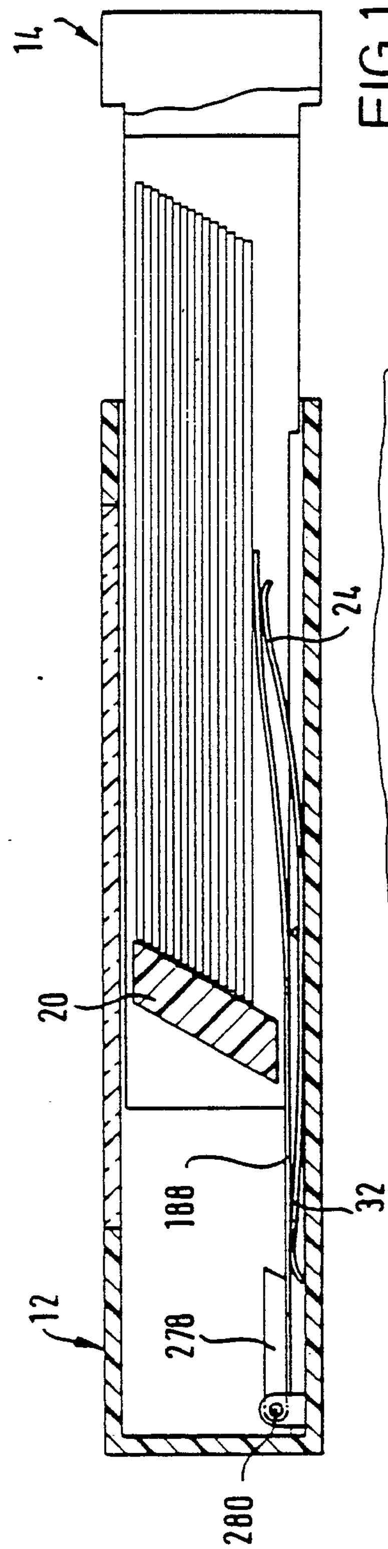


FIG.118

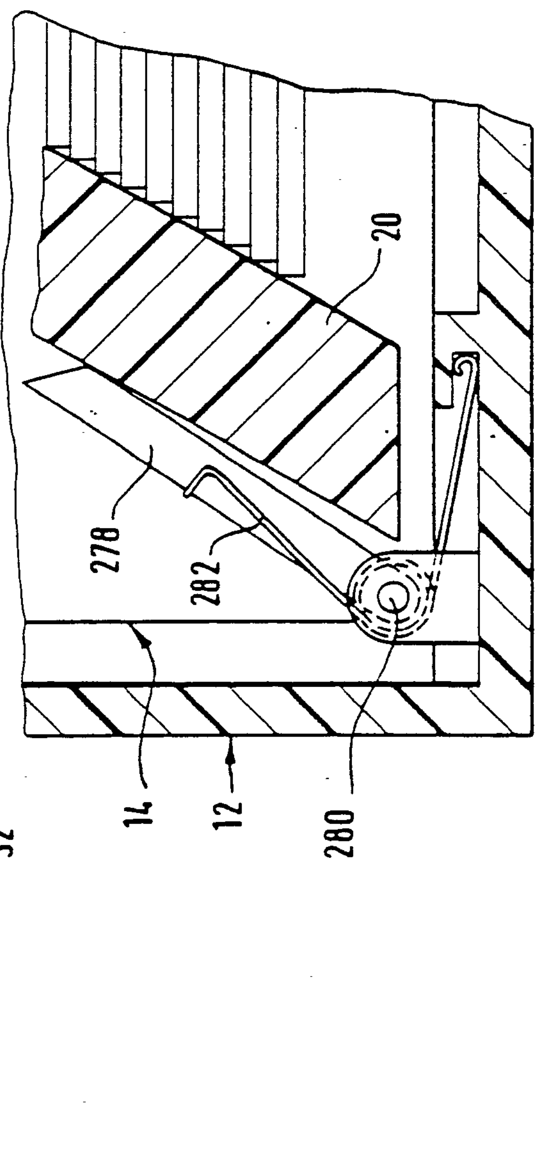

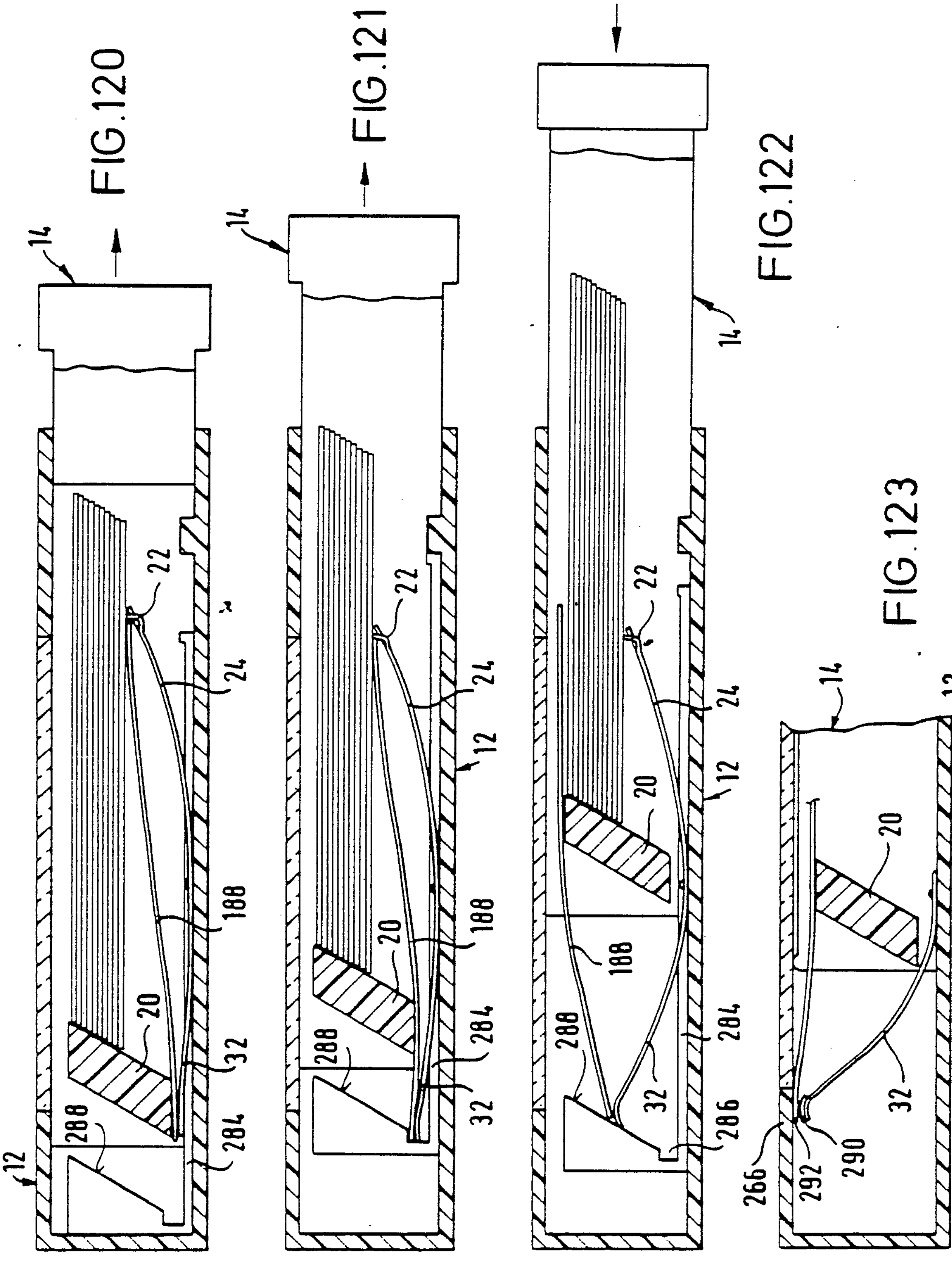
FIG.120
FIG.121
FIG.122
FIG.123
14
12
22
24
188
20
32
284
288
286
266
292
290

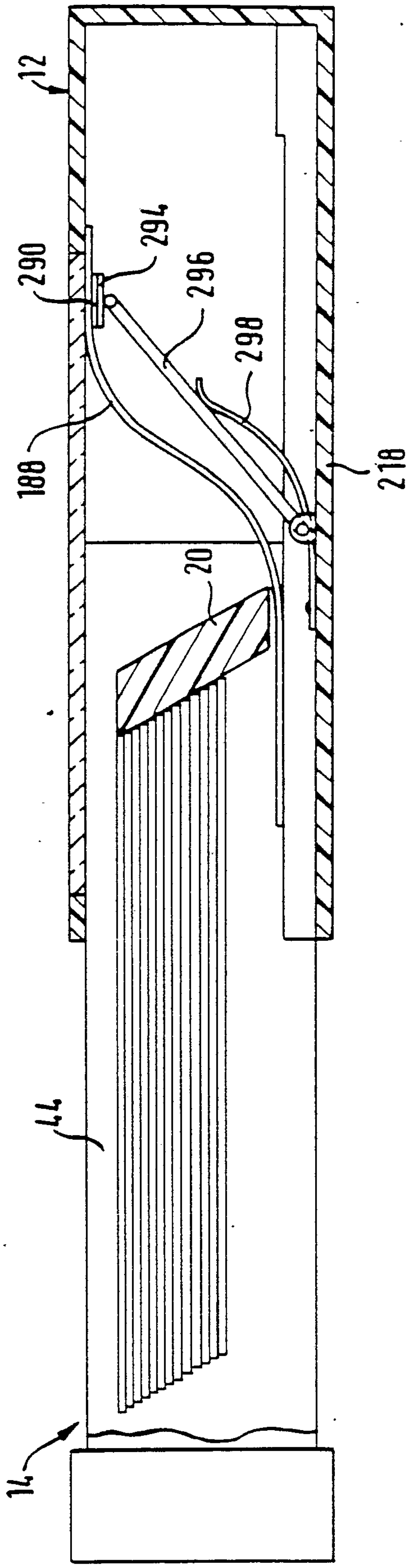


FIG. 124

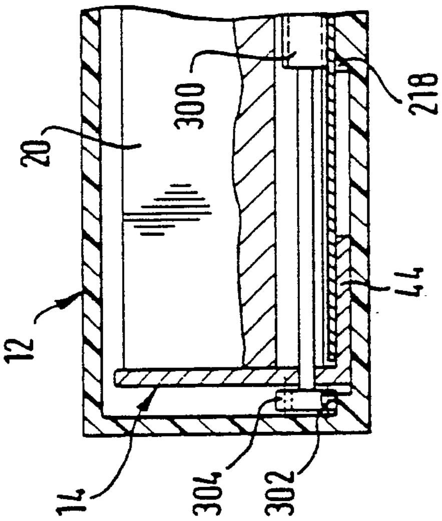


FIG. 126

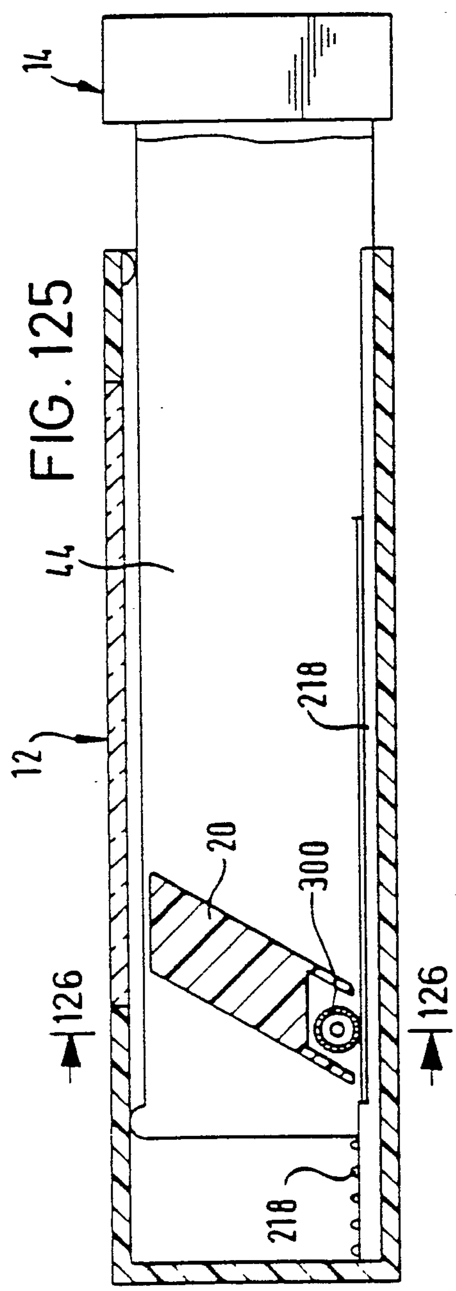


FIG. 125

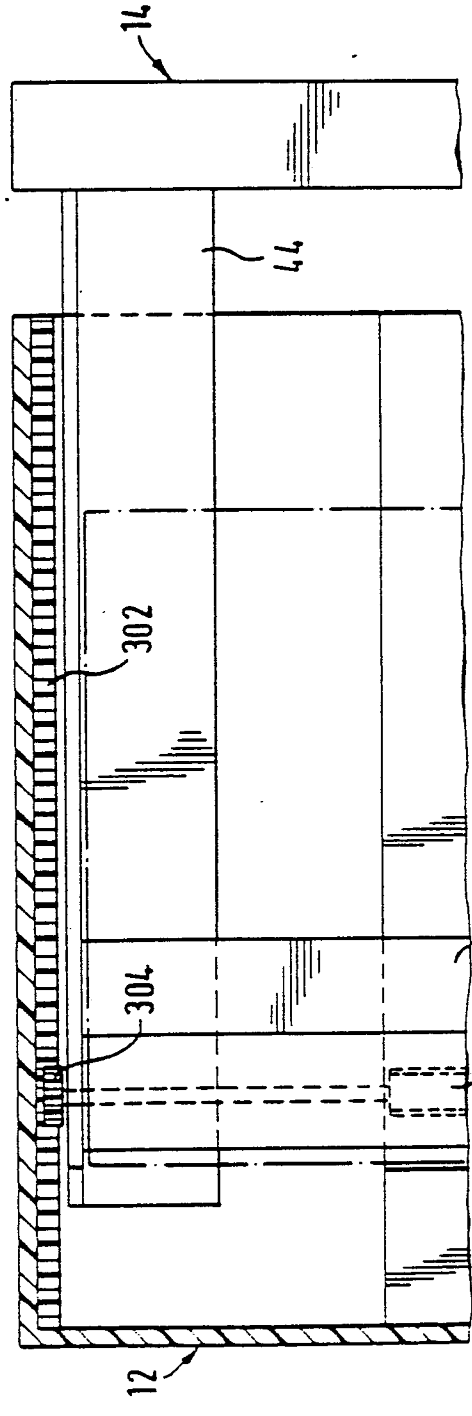


FIG. 127

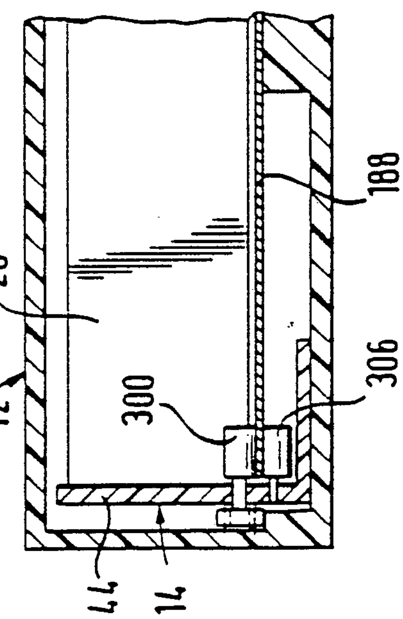


FIG.129

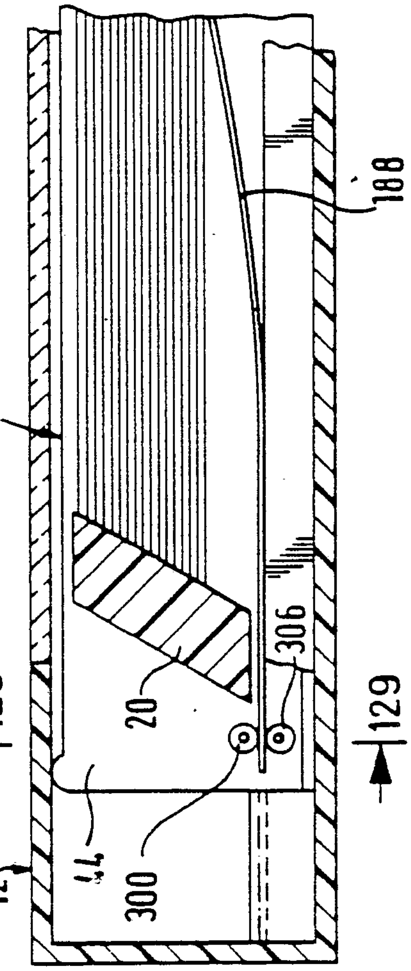


FIG.128

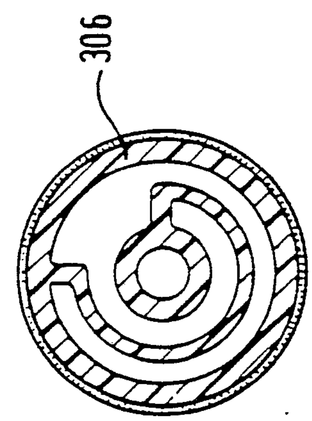


FIG. 130

FIG. 131

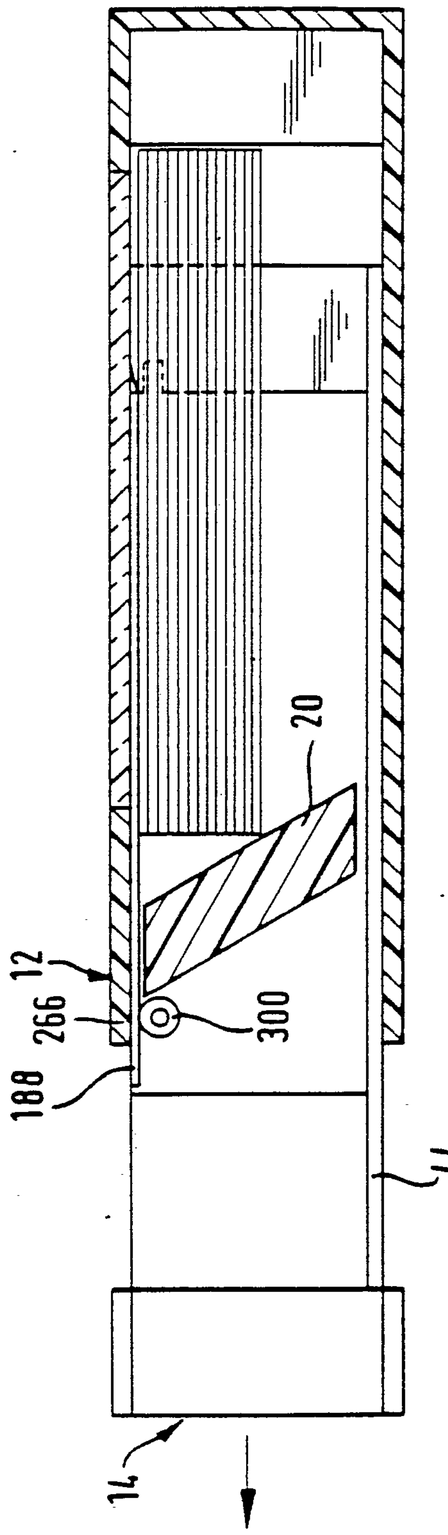

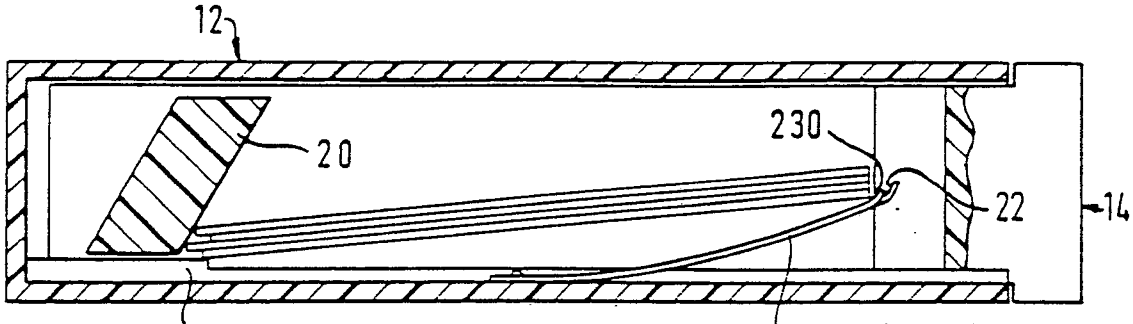


FIG. 132

FIG.134

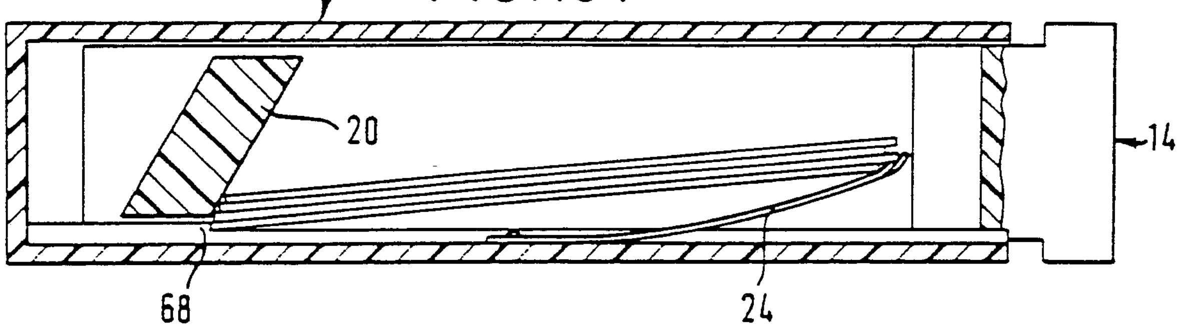


FIG.133

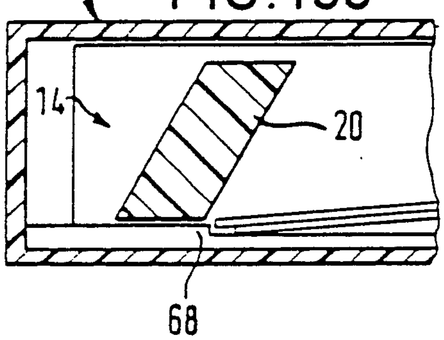


FIG.135

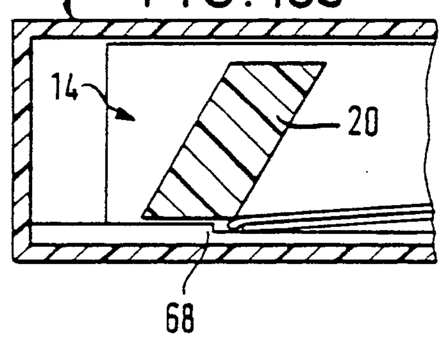


FIG.136

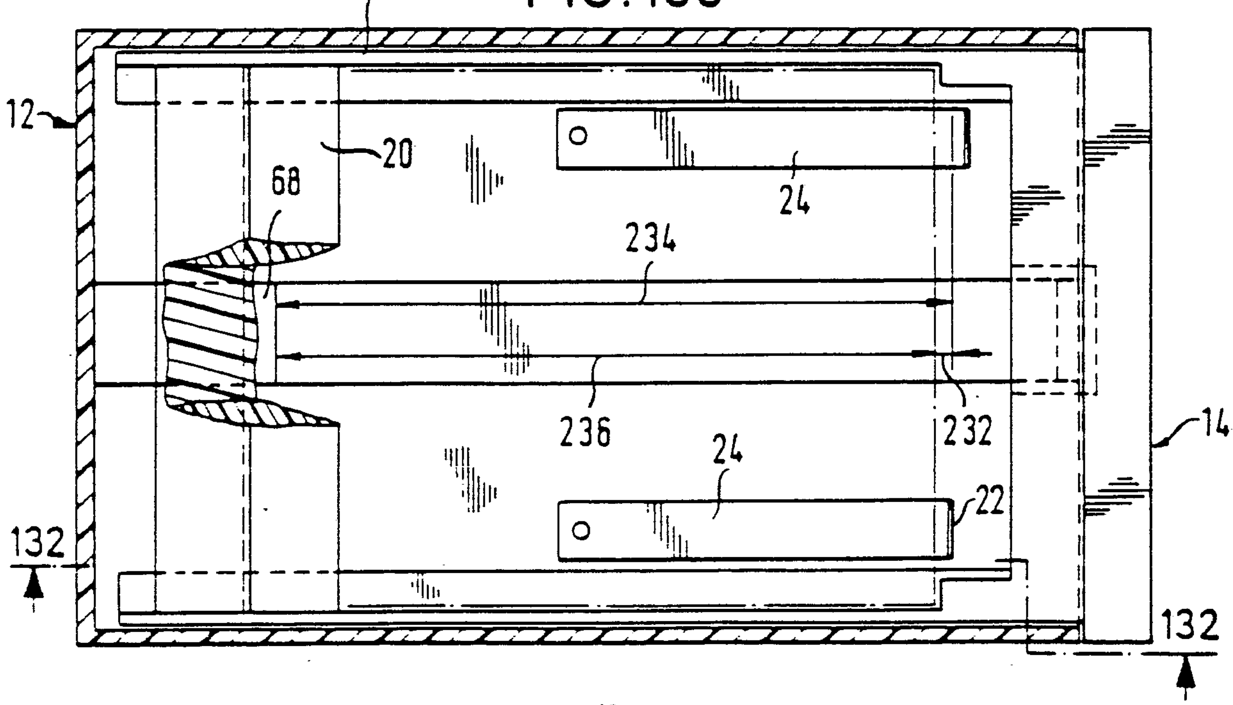

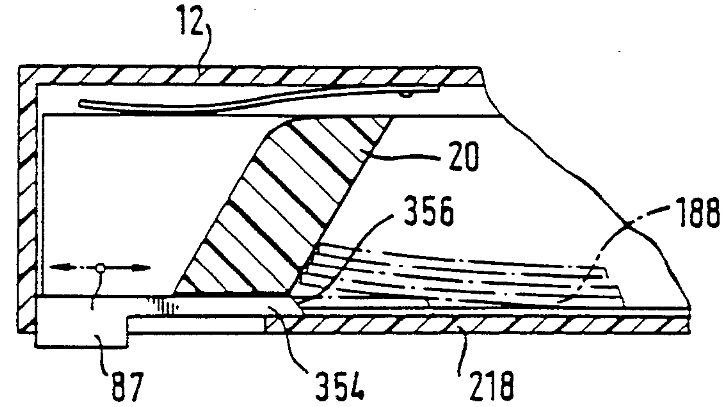

FIG. 137

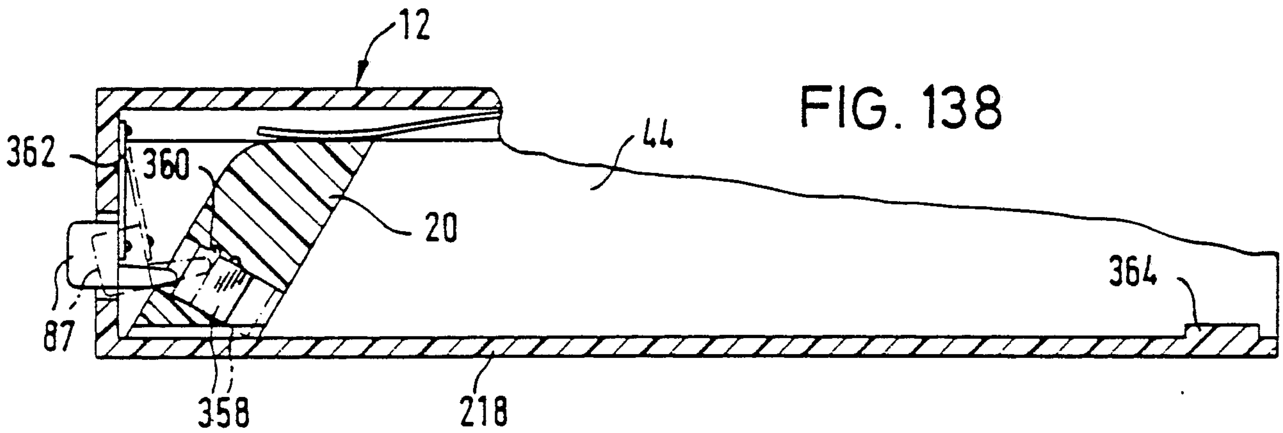

FIG. 138

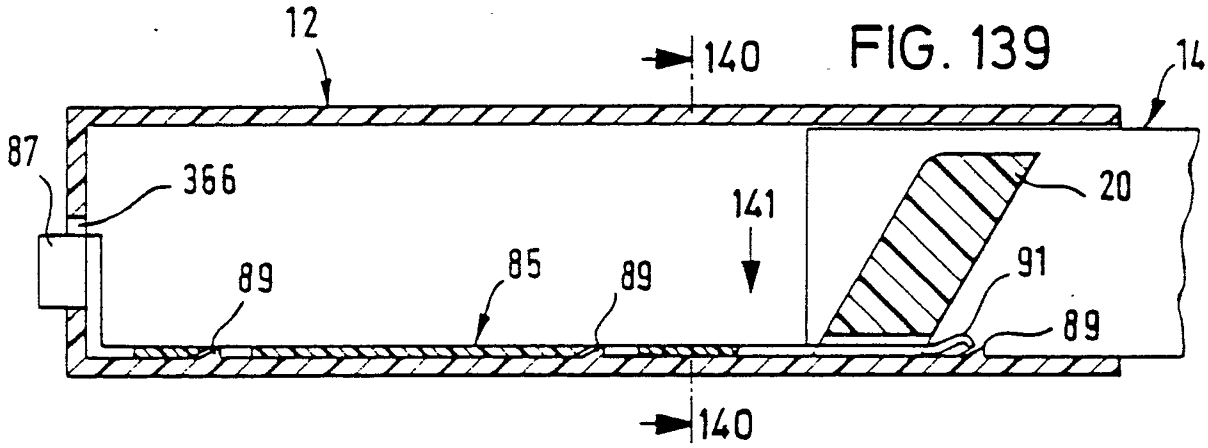

FIG. 139

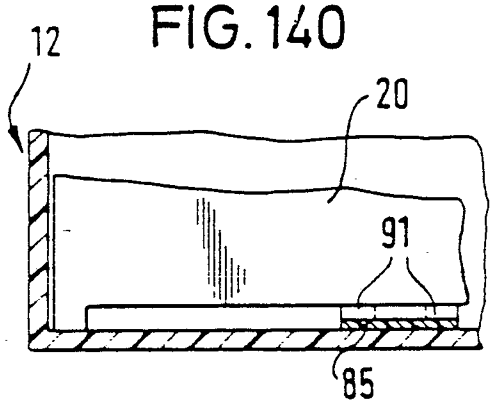

FIG. 140

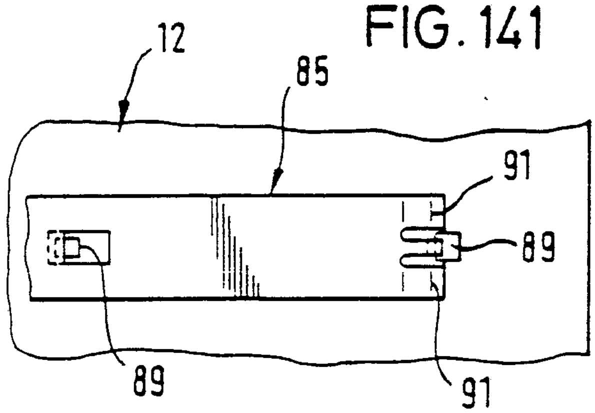

FIG. 141

FIG. 142

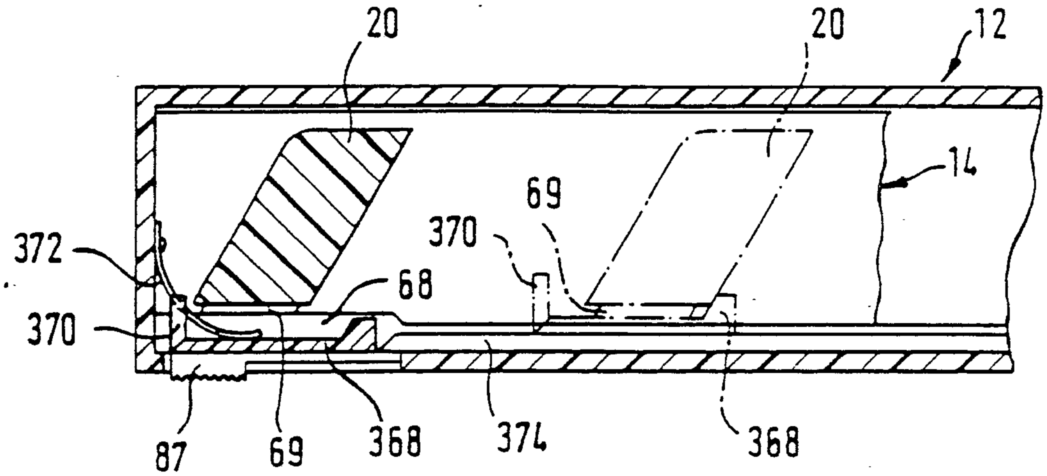


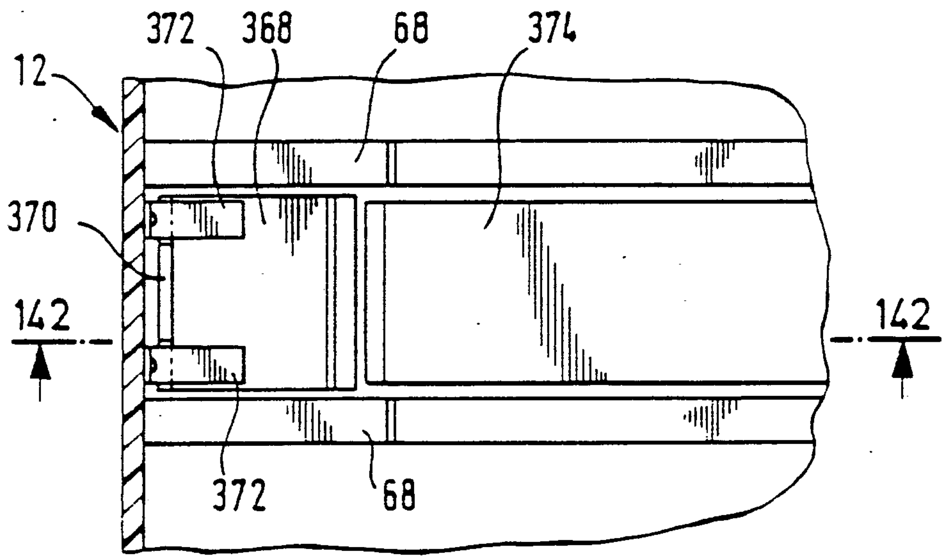


FIG. 143